# EUROPEAN PATENT APPLICATION

(11) **EP 4 760 870 A1**
(43) Date of publication of application: **17.06.2026**
(21) Application number: 24858582.0
(22) Date of filing: 28.08.2024
(51) Int. Cl.: H01M 10/613, H01M 10/653

(54) **HEAT EXCHANGE TUBE ASSEMBLY AND HIGH-CAPACITY BATTERY**

(30) Priority: 30.08.2023 CN 202311100697; 30.08.2023 CN 202322334976 U; 11.11.2023 CN 202323043214 U; 25.12.2023 CN 202323536678 U; 05.02.2024 CN 202420278581 U; 20.05.2024 CN 202421092126 U; 06.06.2024 CN 202421285489 U
(71) Applicant: Aurora Power&Energy Holdings Pte. Ltd., Singapore 189652 (SG)
(72) Inventor: LEI, Zhengjun, Shaanxi 710075 (CN); ZHANG, Sanxue, Shaanxi 710075 (CN); CHANG, Cheng, Shaanxi 710075 (CN)
(74) Representative: Tansini, Elio Fabrizio
(86) International application number: PCT/CN2024/114946
(87) International publication number: WO 2025/045048

(57) **Abstract**

The present invention relates to the field of batteries, and particularly, to a heat exchange pipe assembly and a large-capacity battery. This solves the technical problems of heat exchange pipe assemblies of the existing large-capacity batteries, such as complex structures, mounting difficulty, large volume, and the like. The heat exchange pipe assembly includes a heat exchange pipe, wherein the heat exchange pipe performs heat exchange with battery cells in a large-capacity battery in a single-stage heat exchange manner. By adopting a single-stage heat exchange method, the structure is simplified compared to a two-stage heat exchange structure, making the mounting process easier and more convenient.

## Description

### Technical Field

The present invention relates to the field of batteries, and particularly, to a heat exchange pipe assembly and a large-capacity battery.

### Background

At present, a large-capacity battery (also referred to as a battery module or a battery assembly) available on the market is generally formed by connecting a plurality of battery cells 01 in parallel or in series.

However, in existing large-capacity batteries, inherent differences exist in the battery cells 01. Due to the bucket effect, the overall large-capacity battery is often affected by the battery cell 01 with the poorest performance, resulting in a significant limitation on the upper limit of the capacity and the number of charge-discharge cycles of the entire large-capacity battery. Therefore, how to improve the uniformity of the battery cells 01 in a large-capacity battery has become a key research focus and a major technical challenge in this field.

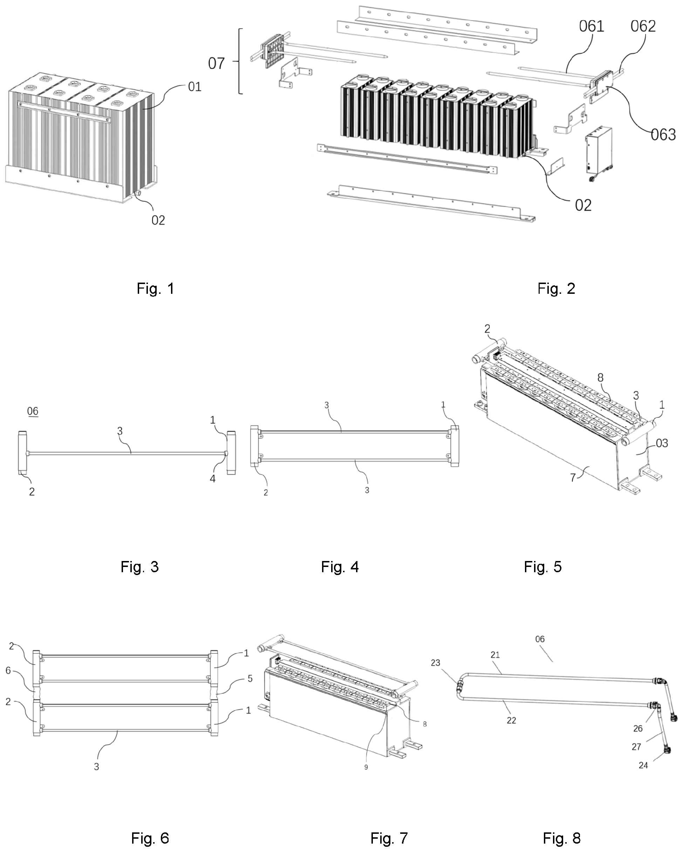

To solve the problems above, the related art proposes a series of large-capacity batteries (also referred to as battery assemblies, battery modules, or battery packs). As shown in Fig. 1, such a large-capacity battery comprises a plurality of battery cells 01 and at least one shared piping assembly 02. The shared piping assembly 02 may serve as an electrolyte shared chamber, wherein electrolytes in inner cavities of the battery cells 01 are in communication with each other via the electrolyte shared chamber, such that the electrolytes of all the battery cells 01 are within the same system. This reduces differences among the electrolytes of the battery cells 01 and enhances the consistency among the battery cells 01 to some extent, thereby enhancing the cycle life of the large-capacity battery to some extent. The shared piping assembly 02 may alternatively serve as a gas chamber, wherein gas in the inner cavities of the battery cells 01 is in communication with each other via the gas chamber, such that gas within the inner cavity of the entire large-capacity battery is balanced, thereby improving the cycle life of the large-capacity battery to some extent.

During operation, the large-capacity batteries above generate heat. If heat dissipation is not performed in a timely manner, the service life of the batteries may be substantially shortened, energy loss may be aggravated, and safety hazards such as spontaneous combustion and fire may even occur. Therefore, enhancing the heat dissipation efficiency of the large-capacity batteries above is particularly important.

Chinese Patent CN116417725A discloses a large-capacity battery, which comprises a heat exchange pipe component 07 for realizing heat exchange between a battery assembly and a temperature control apparatus. Heat generated by each prismatic battery in the battery assembly is transferred from its positive electrode terminals and negative electrode terminals to the temperature control apparatus via the heat exchange pipe component 07 for heat dissipation, thereby cooling the battery assembly. Alternatively, high temperature from the temperature control apparatus is transferred via the heat exchange pipe component 07 to the prismatic batteries in the battery assembly for heating, thereby heating the battery assembly. As shown in Fig. 2, the heat exchange pipe component 07 comprises a primary heat exchange pipe 061, a secondary heat exchange pipe 062, and an insulating heat exchange pipe assembly 063. A first part of the primary heat exchange pipe 061 is connected to all positive electrode terminals or all negative electrode terminals of the battery assembly, and a second part of the primary heat exchange pipe 061 is in insulated heat exchange with a first part of the secondary heat exchange pipe 062 via the insulating heat exchange pipe assembly 063. A second part of the secondary heat exchange pipe 062 is connected to a temperature control apparatus. The primary heat exchange pipe 061 is a heat pipe, and the secondary heat exchange pipe 062 is a liquid-cooled pipe. The heat exchange pipe component 07 adopts a two-stage heat exchange manner, thereby effectively realizing heat exchange of the battery assembly. However, the heat exchange pipe component 07 has a relatively complex structure, resulting in relatively difficult mounting.

### Summary

Some embodiments of the present invention provide a heat exchange pipe assembly and a large-capacity battery, which solve the technical problems of heat exchange pipe components of the existing large-capacity batteries, such as complex structures, mounting difficulty, large volume, and the like.

In an embodiment of the present invention, a heat exchange pipe assembly is provided, including a heat exchange pipe, wherein the heat exchange pipe performs heat exchange with a plurality of battery cells in a large-capacity battery in a single-stage heat exchange manner. Compared to the two-stage heat exchange structure described in the Background, this structure is relatively simple.

Some implementations of the present invention provide the following seven specific embodiments for the heat exchange pipe assembly:

### Embodiment 1:

The heat exchange pipe according to this embodiment includes a first pipe member, a second pipe member, and at least one third pipe member; the at least one third pipe member is positioned between the first pipe member and the second pipe member, with two ends connected to pipe walls of the first pipe member and the second pipe member, respectively, and an inner cavity in communication with inner cavities of the first pipe member and the second pipe member; the inner cavities of the first pipe member, the second pipe member, and the at least one third pipe member are configured to transmit a heat transfer medium, the heat transfer medium being insulated from the large-capacity battery; the at least one third pipe member is configured for fixed connection to the large-capacity battery; and at least one port of the first pipe member serves as a heat transfer medium inlet, and at least one port of the second pipe member serves as a heat transfer medium outlet.

The heat exchange pipe assembly according to this embodiment includes three pipe members, with the at least one third pipe member being directly fixed to the large-capacity battery. The ports of the first pipe member and the second pipe member serve as the heat transfer medium inlet and the heat transfer medium outlet, respectively, and are connected to a heat transfer medium source. A single-stage heat exchange manner is employed, which is simpler compared to the two-stage heat exchange structure described in the Background. Moreover, during mounting, the heat exchange pipe assembly may be fixed as a whole to the large-capacity battery, making the mounting process simpler and more convenient.

To further enhance the heat transfer efficiency, the at least one third pipe member above is configured for fixed connection to all electrode terminals located on a same side of the large-capacity battery. This may more effectively dissipate the heat from the large-capacity battery, ensuring that the large-capacity battery operates within a specified threshold range.

To further enhance the heat transfer efficiency, the first pipe member, the second pipe member, and the at least one third pipe member are all aluminum pipes. Connection parts between the at least one third pipe member and the first pipe member, and between the at least one third pipe member and the second pipe member, are subjected to insulation treatment, ensuring that the first pipe member and the second pipe member are insulated, with the corresponding heat transfer medium being an electrically insulating heat transfer medium. When the first pipe member, the second pipe member, and the at least one third pipe member are all aluminum pipes, an insulating film may be applied to an inner wall or an outer wall of the at least one third pipe member. In this case, the heat transfer medium may be either an electrically insulating heat transfer medium or water. Aluminum is used as the primary material for the heat exchange pipe assembly, providing high heat transfer efficiency. In addition, although heat pipes offer high heat transfer efficiency, their length is limited, and their application is restricted to specific scenarios. Therefore, this heat exchange pipe assembly is suitable only for situations where large-capacity batteries contain fewer battery cells or where energy storage devices contain fewer large-capacity batteries. In contrast to heat pipes, aluminum pipes may be customized to the required length according to actual needs. By using insulating oil as the heat transfer medium, single-stage heat exchange is achieved. This makes the heat exchange pipe assembly suitable for large-capacity batteries with a greater number of battery cells, as well as energy storage devices that contain numerous large-capacity batteries.

In an embodiment, the first pipe member and the second pipe member are plastic pipes, the at least one third pipe member is an aluminum pipe, and the heat transfer medium is an electrically insulating heat transfer medium.

The material of the heat exchange pipe according to this embodiment may vary, with different heat transfer media selected for different heat exchange pipes of different materials. Depending on the specific requirements, various options may be chosen, offering a wide range of applicability.

### Embodiment 2:

The heat exchange pipe according to this embodiment includes a first metal pipe, a second metal pipe, an insulating sealing connector, and insulating sealing joints; the first metal pipe is configured to be clamped in through grooves of positive electrode terminals of the battery cells in the large-capacity battery, and the second metal pipe is configured to be clamped in through grooves of negative electrode terminals of the battery cells in the large-capacity battery; the insulating sealing connector connects an inlet port of the first metal pipe and an outlet port of the second metal pipe; and two insulating sealing joints are provided, with one being disposed at an outlet port of the first metal pipe and the other at an inlet port of the second metal pipe, each configured to be in communication with an external heat transfer medium circulation line.

The embodiment uses the first metal pipe, the second metal pipe, the insulating sealing connector, and the insulating sealing joint to form an integrated U-shaped heat exchange pipe assembly. Compared to the prior art, it eliminates the need for insulating heat exchange members, simplifies the structure of the heat exchange pipe assembly, and reduces the difficulty of processing and assembling the heat exchange pipe assembly. Moreover, the first metal pipe is insulated from and in communication with the second metal pipe via the insulating sealing connector, which not only ensures insulation between the positive electrode terminal and the negative electrode terminal of the large-capacity battery but also ensures the sealing of the heat transfer medium as it flows from the first metal pipe to the second metal pipe. The insulating sealing joint not only ensures insulation between the heat exchange pipe assembly and the external heat transfer medium circulation line but also ensures the sealing at the connection point between the heat exchange pipe assembly and the external heat transfer medium circulation line.

In an embodiment, when the large-capacity batteries using this heat exchange pipe are assembled into an energy storage device, in order to save volume of the large-capacity battery and enhance the energy density of the energy storage device, the heat exchange pipe above further includes two connecting pipelines.

One end of one connecting pipeline is connected to the outlet port of the first metal pipe via a right-angle sealing connector, and the other end is provided with an insulating sealing joint; and one end of the other connecting pipeline is connected to the inlet port of the second metal pipe member via a right-angle sealing connector, and the other end is provided with an insulating sealing joint.

By adding right-angle sealing connectors and connecting pipelines between the first metal pipe and the insulating sealing joint, and between the second metal pipe and the insulating sealing joint, the heat exchange pipe assembly is divided into a horizontal section near the top of the large-capacity battery and a vertical section near the end of the large-capacity battery. Compared to the structure of existing heat exchange assemblies, this design saves the dimension required along the direction of arrangement of the battery cells in the large-capacity battery. When the large-capacity batteries using this heat exchange pipe assembly are assembled into an energy storage device, the energy density of the energy storage device may be relatively increased.

In an embodiment, to facilitate on-site mounting and maintenance, the insulating sealing connector above is an insulating sealing joint, and the right-angle sealing connector is a right-angle sealing joint. Using commercially available insulating sealing joint parts as the insulating sealing connectors and commercially available right-angle sealing joints as the right-angle sealing connectors makes the assembly easier for on-site mounting, maintenance, and replacement, compared to other configurations.

In an embodiment, to balance cost and thermal conductivity efficiency, the first metal pipe and the second metal pipe are aluminum pipes. To facilitate connection, the connecting pipelines are flexible pipelines.

### Embodiment 3:

In this embodiment, the heat exchange pipe is a modular member, including a first pipe, a second pipe, and a connecting pipe; the first pipe is configured to be fixed in a heat exchange pipe clamping portion of a positive-polarity terminal of each battery cell in the large-capacity battery; the second pipe is configured to be fixed in a heat exchange pipe clamping portion of a negative-polarity terminal of each battery cell in the large-capacity battery; and two ends of the connecting pipe are connected to ports, located on a same side, of the first pipe and the second pipe, respectively.

This embodiment uses the first pipe, the second pipe, and the connecting pipe to form the heat exchange pipe. The heat exchange pipe is in direct contact with the polarity terminals of the battery cells, thereby promptly transferring the heat from the polarity terminals of the battery cells, achieving balanced heat dissipation for each battery cell in the large-capacity battery. This enhances the safety of the large-capacity battery. Furthermore, the heat exchange pipe is a modular member, which facilitates assembly and processing.

In an implementation, to ensure insulation between the heat exchange pipe and the large-capacity battery, the following two embodiments are employed:
Embodiment (1): The first pipe and the second pipe are aluminum pipes, and pipe walls of the aluminum pipes are provided with an oxide layer.
Embodiment (2): The first pipe and the second pipe are aluminum pipes, a pipe wall of each aluminum pipe is provided with an oxide layer, and an insulating sleeve is sleeved over each aluminum pipe having the oxide layer.

In the two embodiments above, Embodiment (1) offers better thermal conductivity performance compared to Embodiment (2), as it only uses the oxide layer for insulation. On the other hand, Embodiment (2) offers superior insulation performance compared to Embodiment (1), as it uses the oxide layer and the insulating sleeve for insulation.

In an embodiment, to ensure good insulation between the first pipe and the second pipe while allowing for quick and reliable connections between the connecting pipe and each of the first pipe and the second pipe, the connecting pipe in this embodiment is a flexible insulating pipe. The flexible insulating pipe is connected to the first pipe and the second pipe via clamps. The use of flexible insulating pipes enables insulation between the first pipe and the second pipe, while the clamp connection further enhances the ease of assembling the heat exchange pipe assembly.

### Embodiment 4:

In this embodiment, an insulating layer and an insulating sleeve are simultaneously disposed on the heat exchange pipe to form a dual-insulation structure. The configuration of this dual-insulation structure ensures that even if one of the insulating layer or the insulating sleeve is damaged during heat exchange between the heat exchange pipe and the battery cell, reliable insulation performance between the heat exchange pipe and the battery cell is still maintained, thereby enhancing the safety of the battery cell during use.

In this embodiment, an insulating layer and an insulating sleeve are disposed on the entire side wall of the heat exchange pipe. This configuration not only simplifies the forming and mounting of the insulating layer and the insulating sleeve but also ensures that when the heat exchange pipe is mounted with the polarity terminals of the battery cells, there is no need to consider mounting errors between the insulating layer or the insulating sleeve on the heat exchange pipe and the polarity terminals of the battery cells. As a result, the on-site mounting of the heat exchange pipe is more convenient.

In this embodiment, the insulating sleeve is made of a thermally conductive plastic sleeve or a thermally conductive rubber sleeve, which offers both good insulation performance and thermal conductivity performance. Moreover, the thickness of the insulating sleeve is 0.5 mm to 1.5 mm, ensuring adequate insulation performance while maximizing the heat transfer performance between the heat exchange pipe and the polarity terminals. Preferably, the insulating sleeve is the thermally conductive silicone sleeve with a thickness of 1 mm. This thickness ensures excellent insulation performance while maintaining good heat transfer performance.

In this embodiment, the insulating sleeve is disposed over the heat exchange pipe having the insulating layer by heat shrinking. This method ensures that there is almost no heat transfer gap between the insulating sleeve and the heat exchange pipe, thereby enhancing the heat transfer effect of the insulating sleeve.

In this embodiment, the heat exchange pipe is made of aluminum, which offers a good heat transfer effect at a relatively low cost. Moreover, the wall thickness of the aluminum pipe is 0.5 mm to 1 mm. The heat exchange pipe with this wall thickness ensures that the heat exchange pipe has good heat transfer performance while maintaining mounting reliability and helps avoid the risk of bending or damage that may occur with thinner-walled heat exchange pipes.

In this embodiment, the insulating layer is a hard oxide layer with a thickness of 20 µm to 50 µm. The hard oxide layer is resistant to peeling and provides relatively good insulation performance.

### Embodiment 5:

The heat exchange pipe assembly according to this embodiment further includes an insulating heat-conducting device. This insulating heat-conducting device not only facilitates heat exchange with the polarity terminals via the heat-conducting rod but also performs heat exchange with the region at the center of the polarity terminals via the heat-conducting column. This enables heat exchange between the polarity terminals and the heat exchange pipe via a plurality of heat exchange zones, thereby enhancing the heat exchange efficiency between the polarity terminals and the heat exchange pipe. Moreover, the heat-conducting rod of the insulating heat-conducting device is an insulating member, which reliably ensures the insulation performance between the polarity terminals and the heat exchange pipe, thereby enhancing the safety of the battery during use.

In the insulating heat-conducting device, a mounting portion is either a second through groove or a through hole. The structure of the second through groove facilitates the mounting of the heat exchange pipe, while the structure of the through hole increases the area of the heat exchange zone between the heat exchange pipe and the insulating heat-conducting device.

A heat-conducting column is disposed on a heat-conducting rod. This structure not only facilitates the manufacturing of the insulating heat-conducting device but also simplifies the mounting of the insulating heat-conducting device. During on-site mounting, there is no need to consider mounting errors between a plurality of heat-conducting columns and the polarity terminals of a plurality of battery cells in the insulating heat-conducting device.

In the insulating heat-conducting device, cross-sections of the second through groove and the first through groove are C-shaped. The C-shaped second through groove has natural tension at the opening, which facilitates the mounting of the heat exchange pipe and the heat-conducting rod. Moreover, this is conducive to securely clamping the heat exchange pipe and the heat-conducting rod within the second through groove, thereby enhancing the thermal conductivity effect between the heat exchange pipe and the heat-conducting rod.

The heat-conducting rod and the heat-conducting column are of an integral structure. This integral member is easier to manufacture and mount, and there is no heat transfer gap between the heat-conducting rod and the heat-conducting column. As a result, the heat transfer effect is superior compared to a modular structure.

In the insulating heat-conducting device according to this embodiment, the heat-conducting rod and the heat-conducting column are made of thermally conductive ceramic materials that offer both excellent thermal conductivity performance and insulation performance.

In the insulating heat-conducting device according to this embodiment, the heat-conducting rod and the heat-conducting column are made of thermally conductive metals to ensure good thermal conductivity performance. Moreover, the surface of the insulating heat-conducting device is subjected to oxidation treatment to form an insulating layer. This method produces an insulating layer that is resistant to peeling and provides reliable insulation performance.

### Embodiment 6:

The heat exchange pipe assembly according to this embodiment further includes a pressing plate, which is connected to the polarity terminals of the battery cells to ensure a reliable parallel connection between the battery cells. Moreover, the pressing plate cooperates with the polarity terminals to press the heat exchange pipe into the through groove of the polarity terminal, ensuring that the heat exchange pipe is in close contact with the through groove of the polarity terminal. This results in almost no heat transfer gap between the two, thereby enhancing the heat exchange effect between the heat exchange pipe and the polarity terminal.

In the pressing plate according to this embodiment, a central angle corresponding to the arc surface of the pressing portion is typically between 90° and 180°. This configuration ensures that the majority of the side wall of the heat exchange pipe is embedded into the through groove of the polarity terminal, increasing the contact area between the heat exchange pipe and the polarity terminal, thereby further enhancing the heat exchange effect between the heat exchange pipe and the polarity terminal.

In this embodiment, a distance between a vertex of the arc surface of the pressing portion and the polarity terminal is less than or equal to a dimension by which the heat exchange pipe protrudes from the polarity terminal. As a result, after the pressing plate is connected to the polarity terminal, the pressing portion may apply a downward force on the heat exchange pipe, allowing the heat exchange pipe to make even closer contact with the through groove of the polarity terminal, thereby further enhancing the heat transfer effect.

In the pressing plate according to this embodiment, the pressing portion is an arc plate with a uniform wall thickness, the fixing portions are flat plates, and the arc plate and the flat plates are of an integral structure, making the structure easy to manufacture and process.

In the pressing plate according to this embodiment, the fixing portions are provided with through holes for connection to the polarity terminals, allowing the pressing plate to be connected to the polarity terminal via screws. The screw connection method is easier compared to other methods, such as welding, riveting, or adhesive bonding, and provides a simpler structure.

In this embodiment, the pressing plate is made of copper foil. Copper foil not only has excellent electrical conductivity but also possesses good flexibility, allowing it to tightly press the heat exchange pipe into the through groove of the polarity terminal. Moreover, the thickness of the pressing plate is typically between 0.5 mm and 1 mm, which ensures sufficient mounting strength while also providing reliable mounting of the heat exchange pipe.

### Embodiment 7:

In this embodiment, the heat exchange pipe is coated with an enamel insulating layer on the outer wall of the metal pipe. This enamel insulating layer has excellent wear resistance performance and insulation performance, making it resistant to peeling during handling, mounting, and use, as well as being less prone to damage. During the operation of the large-capacity battery, it reliably ensures insulation between the heat exchange pipe and the polarity terminal of the large-capacity battery, thereby enhancing the reliability of the large-capacity battery during operation.

In the heat exchange pipe assembly according to this embodiment, a thickness of the enamel insulating layer is 100 µm to 300 µm. The enamel insulating layer with this thickness ensures excellent insulation performance while also maintaining good heat transfer performance.

In the heat exchange pipe assembly according to this embodiment, the heat exchange pipe includes a spliced pipe structure composed of the first pipe, the second pipe, and the connecting pipe. This spliced pipe facilitates easy mounting. Moreover, the connecting pipe in this spliced pipe may be made of an insulating pipe, further enhancing the insulation performance of the heat exchange pipe.

In the heat exchange pipe assembly according to this embodiment, the heat exchange pipe is made of aluminum, which offers a good heat transfer effect at a relatively low cost. Moreover, the wall thickness of the aluminum pipe is 0.5 mm to 1.5 mm. The heat exchange pipe with this wall thickness ensures that the heat exchange pipe has good heat transfer performance while maintaining mounting reliability and helps avoid the risk of bending or damage that may occur with thinner-walled heat exchange pipes.

In this embodiment, an insulating sleeve is disposed over the heat exchange pipe having the enamel insulating layer to form a dual-insulation structure. The configuration of this dual-insulation structure ensures that even if the enamel insulating layer is damaged during heat exchange between the heat exchange pipe and the battery cell, reliable insulation performance between the heat exchange pipe and the battery cell is still maintained, thereby enhancing the safety of the large-capacity battery during use.

In another embodiment of the present invention, there is provided a large-capacity battery, including a plurality of battery cells sequentially arranged in a same direction, and further including the heat exchange pipe assembly above; the heat exchange pipe performs heat exchange with the battery cells in the large-capacity battery.

Other implementations of the present invention provide the following seven specific embodiments for the large-capacity battery:

### Embodiment 1:

The large-capacity battery according to this embodiment uses the heat exchange pipe assembly from Embodiment 1 above, which includes the following categories of large-capacity batteries:
First category of large-capacity battery: A third pipe member of a heat exchange pipe assembly is fixedly connected to all electrode terminals of the battery cells located on a same side.

Second category of large-capacity battery: This category further includes a shell and a plurality of electrode terminal adapter members, wherein the plurality of battery cells are sequentially arranged in a same direction in an inner cavity of the shell; electrode terminal clearance holes corresponding to electrode terminals of the battery cells are formed in a top plate of the shell, and regions of the shell corresponding to the electrode terminal clearance holes are fixedly sealed to a housing of the battery cell; the electrode terminal adapter members are electrically connected to the electrode terminals of the battery cells via the electrode terminal clearance holes, and each electrode terminal adapter member is provided with a slot; and a third pipe member of a heat exchange pipe assembly is fixed in the slot.

Third category of large-capacity battery: This category further includes a shell, wherein the plurality of battery cells are sequentially arranged in a same direction in an inner cavity of the shell; electrode terminal clearance holes allowing electrode terminals of the battery cells to extend therethrough are formed in a top plate of the shell; the electrode terminals of the battery cells extend through the electrode terminal clearance holes, and regions of the shell corresponding to the electrode terminal clearance holes are fixedly sealed to a housing of the battery cell; each electrode terminal is provided with a slot; and a third pipe member of a heat exchange pipe assembly is fixed in the slot.

### Embodiment 2:

The large-capacity battery according to this embodiment uses the heat exchange pipe assembly from Embodiment 2 above, which includes the following categories of large-capacity batteries:
First category of large-capacity battery: The plurality of battery cells are connected in parallel, and a heat transfer medium flowing in a heat exchange pipe is a fluorinated liquid.

Second category of large-capacity battery: The plurality of battery cells are connected in parallel, and the large-capacity battery further includes a shared piping assembly; the shared piping assembly is connected to the lower cover plates of the battery cells and in communication with electrolyte regions of inner cavities of the battery cells; and a heat transfer medium flowing in a heat exchange pipe is a fluorinated liquid.

Third category of large-capacity battery: This category further includes a shell, wherein the plurality of battery cells are arranged in parallel within an inner cavity of the shell, inner cavities of the battery cells including electrolyte regions and gas regions; the shell includes a cylindrical body with open ends and end plates disposed at the open ends of the cylindrical body; a first channel is disposed at the bottom of the cylindrical body, the first channel being in communication with the electrolyte regions of the inner cavities of the battery cells, so that all battery cells share a common electrolyte system; electrode terminal clearance holes allowing electrode terminals of the battery cells to extend therethrough are formed in the top of the cylindrical body; the electrode terminals of the battery cells extend through the electrode terminal clearance holes, and cylindrical body regions corresponding to the electrode terminal clearance holes are fixedly sealed to the top of the battery cells; and a heat transfer medium flowing in a heat exchange pipe is a fluorinated liquid.

In an embodiment, the third category of large-capacity battery further includes a second channel disposed on the top of the cylindrical body, the second channel being in communication with the gas regions of the inner cavities of the battery cells.

In an embodiment, the third category of large-capacity battery further includes a second channel disposed on the top of the cylindrical body, the second channel covering venting portions on the top of the battery cells.

### Embodiment 3:

The large-capacity battery according to this embodiment uses the heat exchange pipe assembly from Embodiment 3 above, which includes the following categories of large-capacity batteries:
First category of large-capacity battery: The plurality of battery cells are connected in parallel, and the large-capacity battery further includes a first shared piping assembly; the first shared piping assembly is connected to the lower cover plates of the battery cells and in communication with electrolyte regions of inner cavities of the battery cells; and a heat transfer medium flowing in a heat exchange pipe is water or a fluorinated liquid.

In an embodiment, the second category of large-capacity battery further includes a second shared piping assembly, the second shared piping assembly being connected to upper cover plates of the battery cells and in communication with gas regions of the inner cavities of the battery cells.

Second category of large-capacity battery: The plurality of battery cells are connected in parallel, and the large-capacity battery further includes a shell; the plurality of battery cells are arranged in a same direction in the shell; a shared chamber is disposed in the shell, an inner cavity of the shared chamber being in communication with inner cavities of all the battery cells; electrode terminal clearance holes corresponding to polarity terminals of the battery cells are formed in a top plate of the shell; the polarity terminals of the battery cells extend through the electrode terminal clearance holes, and top plate regions of the shell corresponding to the electrode terminal clearance holes are fixedly sealed to a housing of the battery cell; and portions where the polarity terminals of the battery cells extend through the electrode terminal clearance holes are provided with heat exchange pipe clamping portions; and heat exchange pipes are fixed to the heat exchange pipe clamping portions on the polarity terminals of the battery cells and are insulated from the battery cells.

In an embodiment, the second category of large-capacity battery further includes a second channel disposed on the top of the cylindrical body, the second channel being in communication with the gas regions of the inner cavities of the battery cells.

In an embodiment, the second category of large-capacity battery further includes a second channel disposed on the top of the cylindrical body, the second channel covering venting portions on the top of the battery cells.

### Embodiment 4:

The large-capacity battery according to this embodiment uses the heat exchange pipe assembly from Embodiment 4 above, the plurality of battery cells are connected in parallel, and heat exchange pipes are disposed on polarity terminals of the battery cells.

In an embodiment, the polarity terminals are provided with through grooves, and the through grooves in the polarity terminals of the battery cells form a heat transfer groove arranged along a direction of arrangement of the battery cells, with the heat exchange pipe assembly embedded into the heat transfer groove.

In an embodiment, at least one of a gas region and an electrolyte region of each battery cell is in communication with the other.

### Embodiment 5:

The large-capacity battery according to this embodiment uses the heat exchange pipe assembly from Embodiment 5 above, which includes the following categories of large-capacity batteries:
First category of large-capacity battery: The plurality of battery cells are connected in parallel, and at least one of a gas region and an electrolyte region of each battery cell is in communication with the other via a hollow component; and a heat-conducting rod and heat-conducting columns of an insulating heat-conducting device are disposed in a first through groove and blind holes of an electrode terminal, respectively, and heat exchange pipes are disposed in mounting portions of each insulating heat-conducting device.

Second category of large-capacity battery: This category further includes a shell and a plurality of electrode terminal adapter members, wherein the plurality of battery cells are disposed in parallel within the shell, a shared chamber is disposed in the shell to enable at least one of a gas region and an electrolyte region of each battery cell to be in communication with the other; electrode terminal clearance holes corresponding to electrode terminals of the battery cells are formed in the top of the shell; the electrode terminals of the battery cells are connected to the electrode terminal adapter members via the electrode terminal clearance holes; the electrode terminal adapter members are polarity terminals of the battery cells, each polarity terminal is provided with a first through groove and blind holes, the first through groove extends along a width direction of each battery cell, the blind holes extend along a height direction of each battery cell and are in communication with the first through groove; and a heat-conducting rod and heat-conducting columns of an insulating heat-conducting device are disposed in a first through groove and blind holes of an electrode terminal adapter member, respectively, and heat exchange pipes are disposed in mounting portions of each insulating heat-conducting device.

### Embodiment 6:

The large-capacity battery according to this embodiment uses the heat exchange pipe assembly from Embodiment 6 above, which includes the following categories of large-capacity batteries:
First category of large-capacity battery: This category further includes a shell, wherein the plurality of battery cells are disposed in parallel within the shell, a shared chamber is disposed in the shell to enable at least one of a gas region and an electrolyte region of each battery cell to be in communication with the other, and electrode terminal clearance holes corresponding to polarity terminals of the battery cells are formed in the top of the shell; and the polarity terminals of the battery cells pass through the electrode terminal clearance holes and are connected in parallel via a pressing plate, while heat exchange pipes are disposed in through grooves of the polarity terminals of the battery cells, and are pressed into the through grooves of the polarity terminals via the pressing plate.

In an embodiment, the heat exchange pipe is a metal pipe, an insulating sleeve is sleeved over an outer wall of the metal pipe, or an insulating layer is disposed on the outer wall of the metal pipe, and an insulating pad is provided between the pressing plate and the heat exchange pipe.

Second category of large-capacity battery: This category further includes a hollow component, wherein at least one of a gas region and an electrolyte region of each battery cell is in communication with the other via the hollow component; and a pressing plate is connected to polarity terminals of the battery cells, enabling a parallel connection of the plurality of battery cells, and heat exchange pipes are disposed in through grooves of the polarity terminals of the battery cells, and are pressed into the through grooves of the polarity terminals via the pressing plate.

In an embodiment, the heat exchange pipe is a metal pipe, an insulating sleeve is sleeved over an outer wall of the metal pipe, or an insulating layer is disposed on the outer wall of the metal pipe, and an insulating pad is provided between the pressing plate and the heat exchange pipe.

### Embodiment 7:

In the large-capacity battery according to this embodiment, heat exchange pipe clamping portions are disposed at polarity terminal portions of the battery cells, and a heat exchange pipe is fixed by the heat exchange pipe clamping portion such that the heat exchange pipe is in direct contact with the polarity terminals of the battery cells. Heat, most concentrated at the polarity terminals, is conducted to the outside for dissipation. This heat dissipation method realizes uniform heat dissipation on the top of the large-capacity battery, particularly at the polarity terminals, avoiding performance problems and safety risks caused by excessively high or excessively low temperatures of the large-capacity battery.

In the large-capacity battery according to this embodiment, the heat exchange pipe clamping portion is a through groove or a through hole formed in a polarity terminal of each battery cell. The heat exchange pipe is disposed in the through groove or the through hole and is in direct contact with the polarity terminals of the battery cells, such that a relatively large contact area is formed between the heat exchange pipe and the polarity terminals, thereby further enhancing heat transfer efficiency.

In the large-capacity battery according to this embodiment, a pressing plate is connected to the polarity terminals of the battery cells to ensure a reliable parallel connection between the battery cells. Moreover, the pressing plate cooperates with the polarity terminals to press the heat exchange pipe into the through groove of the polarity terminal, ensuring that the heat exchange pipe is in close contact with the through groove of the polarity terminal. This results in almost no heat transfer gap between the two, thereby enhancing the heat exchange effect between the heat exchange pipe and the polarity terminal.

In the large-capacity battery according to this embodiment, an insulating sealing adhesive layer is laid on a top plate of a shell. When condensation forms on a surface of the heat exchange pipe at a polarity terminal, the condensation is blocked by the insulating sealing adhesive layer from penetrating into a gap between the polarity terminal and an electrode terminal clearance hole, preventing the occurrence of battery short-circuiting.

In the large-capacity battery according to this embodiment, an insulating protective cover is used to provide insulation protection for the polarity terminals, avoiding potential safety hazards caused by exposure of the polarity terminals during operation of the large-capacity battery, and further avoiding foreign objects from the external environment from falling into the polarity terminal positions and causing short-circuiting of the large-capacity battery, thereby enhancing the safety of the large-capacity battery.

### Brief Description of the Drawings

Fig. 1 is a schematic structural diagram of a large-capacity battery in the Background;
Fig. 2 is an exploded structural diagram of a large-capacity battery in the Background;
Fig. 3 is a schematic structural diagram of a heat exchange pipe assembly according to Embodiment 1;
Fig. 4 is another schematic structural diagram of a heat exchange pipe assembly according to Embodiment 1;
Fig. 5 is a schematic structural diagram of a large-capacity battery with a heat exchange pipe assembly according to Embodiment 1;
Fig. 6 is a schematic structural diagram of a heat exchange assembly according to Embodiment 2;
Fig. 7 is a partial exploded structural diagram of a large-capacity battery according to Embodiment 3;
Fig. 8 is a schematic structural diagram of a heat exchange pipe assembly according to Embodiment 6;
Fig. 9 is a schematic structural diagram of a large-capacity battery according to Embodiment 6;
Fig. 10 is a schematic structural diagram of a large-capacity battery according to Embodiment 7;
Fig. 11 is a schematic structural diagram of a large-capacity battery according to Embodiment 8;
Fig. 12 is a cross-sectional view of Fig. 11;
Fig. 13 is a first schematic diagram of a heat exchange pipe assembly;
Fig. 14 is a second schematic diagram of a heat exchange pipe assembly;
Fig. 15 is a schematic structural diagram of a first category of large-capacity battery and a second category of large-capacity battery according to Embodiments 9 to 11;
Fig. 16 is a schematic structural diagram of a third category of large-capacity battery according to Embodiments 9 to 11;
Fig. 17 is a partial schematic structural diagram of a third category of large-capacity battery after removal of a side end plate and a heat exchange pipe assembly according to Embodiments 9 to 11;
Fig. 18 is a schematic structural diagram of a cylindrical body of a third category of large-capacity battery according to Embodiments 9 to 11;
Fig. 19 is a schematic structural diagram of a bottom support member disposed in a cylindrical body of a third category of large-capacity battery according to Embodiments 9 to 11;
Fig. 20 is a schematic structural diagram of a bottom support member according to Embodiments 9 to 11;
Fig. 21 is a first schematic structural diagram of a battery cell according to Embodiments 9 to 11;
Fig. 22 is a second schematic structural diagram of a battery cell according to Embodiments 9 to 11;
Fig. 23 is a schematic structural diagram of another electrolyte shared chamber according to Embodiments 9 to 11;
Fig. 24 is a first schematic structural diagram of a battery cell according to Embodiments 9 to 11;
Fig. 25 is a second schematic structural diagram of a battery cell according to Embodiments 9 to 11;
Fig. 26 is a partial exploded structural diagram of a large-capacity battery according to Embodiments 9 to 11;
Fig. 27 is a partial exploded view of a large-capacity battery with an insulating sealing adhesive layer laid on a top plate of a shell according to Embodiments 9 to 11;
Fig. 28 is a schematic structural diagram of a large-capacity battery with an insulating sealing adhesive layer laid on a top plate of a shell according to Embodiments 9 to 11;
Fig. 29 is a schematic structural diagram of a large-capacity battery with an insulating protective cover according to Embodiments 9 to 11;
Fig. 30 is a partial exploded view of a large-capacity battery with an insulating protective cover according to Embodiments 9 to 11;
Fig. 31 is a schematic structural diagram of a heat exchange pipe assembly (with one insulating sleeve) according to Embodiment 12;
Fig. 32 is a schematic structural diagram of a heat exchange pipe assembly (with a plurality of insulating sleeves) according to Embodiment 12;
Fig. 33 is a schematic structural diagram of a large-capacity battery according to Embodiment 13;
Fig. 34 is a first exploded view of a large-capacity battery according to Embodiment 13;
Fig. 35 is a second exploded view of a large-capacity battery according to Embodiment 13;
Fig. 36 is a schematic structural diagram of a large-capacity battery according to Embodiment 14;
Fig. 37 is a first schematic structural diagram of an insulating heat-conducting device according to Embodiment 15;
Fig. 38 is a second schematic structural diagram of an insulating heat-conducting device according to Embodiment 15;
Fig. 39 is a schematic structural diagram of a large-capacity battery according to Embodiment 17;
Fig. 40 is an exploded view of a large-capacity battery according to Embodiment 17;
Fig. 41 is a partial exploded view of a large-capacity battery according to Embodiment 17;
Fig. 42 is a schematic structural diagram of a large-capacity battery according to Embodiment 18;
Fig. 43 is a first schematic structural diagram of a pressing plate according to Embodiment 19;
Fig. 44 is a second schematic structural diagram of a pressing plate according to Embodiment 19;
Fig. 45 is a schematic structural diagram of a large-capacity battery according to Embodiment 20;
Fig. 46 is an exploded view of a large-capacity battery according to Embodiment 20;
Fig. 47 is a schematic structural diagram of a large-capacity battery according to Embodiment 21;
Fig. 48 is a first schematic structural diagram of a heat exchange pipe assembly according to Embodiment 22;
Fig. 49 is a second schematic structural diagram of a heat exchange pipe assembly according to Embodiment 22;
Fig. 50 is a schematic structural diagram of a heat exchange pipe assembly according to Embodiment 23;
Fig. 51 is a schematic structural diagram of a large-capacity battery (with polarity terminals as electrode terminals) according to Embodiment 24;
Fig. 52 is a schematic structural diagram of a large-capacity battery (with a front cover of a shell omitted) according to Embodiment 24;
Fig. 53 is a schematic structural diagram of a large-capacity battery (with polarity terminals as electrode terminals and electrode terminal adapter members) according to Embodiment 24;
Fig. 54 is an exploded view of a large-capacity battery according to Embodiment 25;
Fig. 55 is a schematic structural diagram of a pressing plate according to Embodiment 25;
Fig. 56 is a schematic structural diagram of a large-capacity battery (with an insulating sealing adhesive layer) according to Embodiment 26; and
Fig. 57 is a schematic structural diagram of a large-capacity battery (with an insulating protective cover) according to Embodiment 26.

The reference numerals in the drawings are as follows:
01. Battery cell; 02. Shared piping assembly; 03. Shell; 04. Electrolyte shared chamber; 05. Gas chamber; 07. Heat exchange pipe component; 061. Primary heat exchange pipe; 062. Secondary heat exchange pipe; 063. Insulating heat exchange pipe assembly; 06. Heat exchange pipe;
1. First pipe member; 2. Second pipe member; 3. Third pipe member; 4. First connecting pipe; 5. Second connecting pipe; 6. Third connecting pipe; 7. Large-capacity battery main body; 8. Electrode terminal adapter member; 9. Slot;
21. First metal pipe; 22. Second metal pipe; 23. Insulating sealing connector; 24. Insulating sealing joint; 26. Right-angle sealing connector; 27. Connecting pipeline; 211. Cylindrical body; 212. End plate; 213. First channel; 214. Electrode terminal clearance hole; 215. Second channel;
36. Heat exchange pipe assembly; 55. Hollow component; 312. Insulating layer; 313. Insulating sleeve; 321. Electrode terminal;
413. Top plate of shell; 414. Bottom plate of shell; 45. Polarity terminal; 452. Second end face; 453. Side wall; 47. Heat exchange pipe clamping portion; 481. First pipe; 482. Second pipe; 483. Connecting pipe; 484. Quick-connect joint; 485. Clamp; 49. Bottom support member; 491. First support rib; 4911. Notch; 492. Second support rib; 410. Sealing assembly; 415. Insulating protective cover; 4151. Insulating frame; 4152. Insulating cover plate; 4153. Narrow slit; 416. Lower cover plate of battery cell; 4161. First through hole; 417. Upper cover plate of battery cell; 4171. Second through hole; 418. Baffle; 419. Channel; 420. Insulating sealing adhesive layer; 421. First electrical connector; 422. Second electrical connector; 423. First shared piping assembly; 424. Second shared piping assembly;
51. Insulating heat-conducting device; 511. Heat-conducting rod; 512. Heat-conducting column; 5111. Second through groove; 523. First through groove; 524. Blind hole;
61. Pressing plate; 66. Insulating pad; 611. Pressing portion; 612. Fixing portion; 6111. Arc surface; 6121. Through hole; 6213. Through groove; 632. Shared chamber;
71. Large-capacity battery; 74. Electrical connector; 722. Enamel insulating layer; 733. Connection hole.

### Detailed Description of the Embodiments

To make the objects, features, and advantages described above of the present invention more apparent and understandable, a detailed description of the specific implementations of the present invention is provided below with reference to the drawings. It is apparent that the described embodiments are part of the embodiments of the present invention, rather than all of the embodiments. All other embodiments obtained by a person of ordinary skill in the art on the basis of the embodiments in the present invention without creative work shall fall within the scope of protection of the present invention.

The following description provides many specific details to facilitate a comprehensive understanding of the present invention. However, the present invention may be implemented in other ways not specifically described herein. A person skilled in the art may make similar modifications or extensions without departing from the scope of the present invention. Therefore, the present invention is not limited to the specific embodiments disclosed below.

In the description of the present invention, it is to be noted that the terms "top", "bottom", and the like refer to orientations or positional relationships on the basis of orientations or positional relationships shown in the drawings. These terms are used merely to simplify and facilitate the description of the present invention, and are not intended to indicate or imply that the referenced apparatuses or elements have a specific orientation or be constructed and operated in a specific orientation. Therefore, such terms may not be construed as limitations of the present invention. In addition, the terms "first, "second", "third", "fourth", and the like are used solely for descriptive purposes are not to be construed as indicating or implying relative importance.

Embodiments 1 to 5 provide a heat exchange pipe assembly, a heat exchange assembly, a large-capacity battery, and an energy storage device. The heat exchange pipe assembly is partially fixed to the large-capacity battery and is configured for heat exchange with the large-capacity battery. The heat exchange herein may refer to either cooling or heating the large-capacity battery. When the temperature of the large-capacity battery exceeds a set threshold, a heat transfer medium with a lower temperature is introduced into the heat exchange pipe assembly to cool the large-capacity battery. Conversely, when the temperature of the large-capacity battery falls below the set threshold, a heat transfer medium with a higher temperature is introduced into the heat exchange pipe assembly to heat the large-capacity battery. By controlling the temperature of the heat transfer medium, it ensures that the large-capacity battery always operates within the normal working temperature. The heat exchange assembly includes a plurality of heat exchange pipe assemblies, which are used for heat exchange in the energy storage device.

The large-capacity battery described above may have the following structures:
First, as shown in Figs. 1 or 2, the large-capacity battery includes a plurality of battery cells 01 and a shared piping assembly 02 fixed to the cover plates of each battery cell 01. The shared piping assembly 02 is in communication with inner cavities of the battery cells 01. This structure is similar to the large-capacity battery disclosed in Chinese patent CN218525645U.

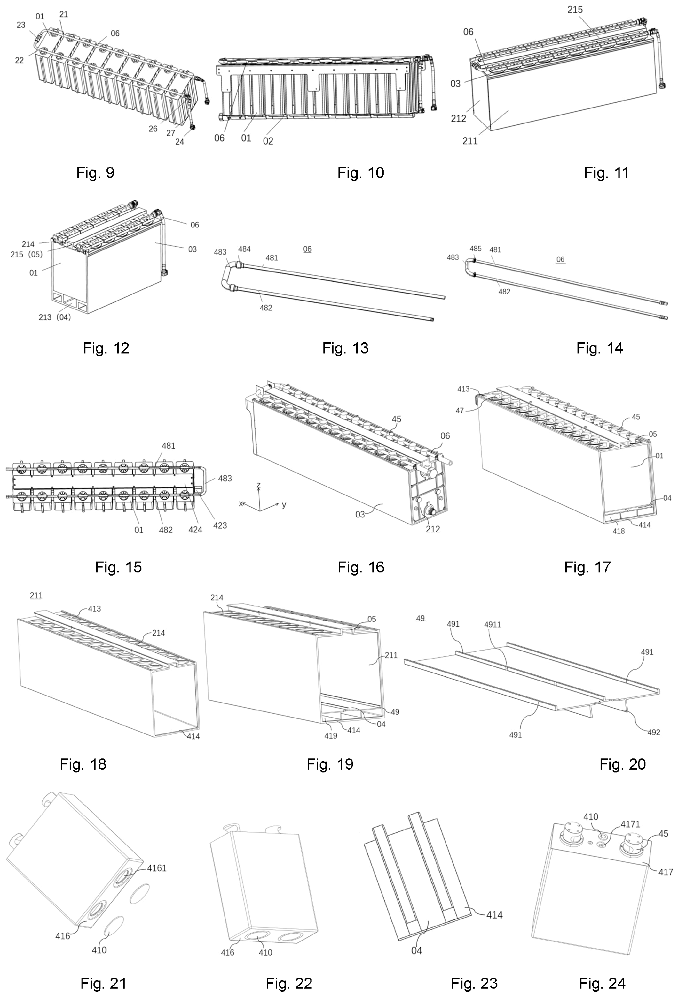

Second, as shown in Fig. 12, the large-capacity battery includes a shell 03 and a plurality of battery cells 01 arranged inside the shell 03. The battery cells 01 described here may be prismatic batteries. An electrolyte shared chamber 04 is disposed at the bottom of the shell 03, and the electrolyte shared chamber 04 is in communication with electrolyte regions of the inner cavities of the battery cells 01.

A gas chamber 05 may be disposed in a top plate of the shell 03, and the gas chamber 05 covers gas ports on the top of each battery cell 01 in the large-capacity battery. It is to be noted that the gas port here includes the following two meanings:
1) The gas port is an electrode terminal clearance hole, which is directly formed in an upper cover plate of the battery cell 01 and is in communication with the inner cavity of the battery cell 01.

In this case, the inner cavity of the gas chamber 05 is in communication with the gas regions of the inner cavities of the battery cells 01 via the gas port. The gas chamber 05 serves as a gas shared chamber for the battery cells 01, allowing communication between the gas regions of the battery cells 01 on the basis of the gas chamber 05 to achieve gas balance. This ensures gas sharing of the battery cells 01, which helps maintain consistency of the battery cells 01 and, to some extent, enhances the cycle life of the large-capacity battery. When any battery cell 01 experiences thermal runaway, the smoke from the inner cavity of this battery cell 01 enters the gas chamber 05 and is discharged via the gas chamber 05, enhancing the safety of the large-capacity battery.

2) The gas port is a vent or explosion-proof port disposed in the upper cover plate of the battery cell 01, and a venting membrane is disposed at the vent or the explosion-proof port.

In this case, the gas chamber 05 is used as a venting channel. When the venting membrane at the gas port of any battery cell 01 is ruptured by the smoke in the inner cavity, the smoke from the inner cavity of this battery cell 01 is discharged via the gas chamber 05, enhancing the safety of the large-capacity battery.

Embodiments 1 to 5 are further described below with reference to the drawings.

### Embodiment 1

This embodiment provides a heat exchange pipe assembly, which includes a heat exchange pipe 06, as shown in Fig. 3. The heat exchange pipe is a pipe segment similar to an I-beam shape, with its inner cavity serving as a heat transfer medium transport chamber. The heat transfer medium described here may be water or other electrically insulating heat transfer media, such as insulating oils, fluorinated liquids, or the like. When the heat exchange pipe assembly is fixed to the large-capacity battery, the heat transfer medium needs to be ultimately insulated from the large-capacity battery.

For the convenience of description, the three parts of the I-beam-shaped pipe segment may be defined as a first pipe member 1, a second pipe member 2, and a third pipe member 3. The third pipe member 3 is positioned between the first pipe member 1 and the second pipe member 2, with two ends connected to pipe walls of the first pipe member 1 and the second pipe member 2, respectively, and an inner cavity in communication with inner cavities of the first pipe member 1 and the second pipe member 2.

As can be seen from the drawings, in this embodiment, the first pipe member 1 and the second pipe member 2 are parallel to each other. A first connecting pipe 4 is disposed on pipe walls of each of the first pipe member 1 and the second pipe member 2, which is perpendicular to their central axes. Two ends of the third pipe member 3 are connected to the first connecting pipes 4 of the first pipe member 1 and the second pipe member 2, respectively. The connection may be made by welding, insertion (interference fit), threaded connection, hot-melt bonding, or the like, and after the connection, the sealing of the connection parts needs to be ensured. Different connection methods correspond to different materials and structures. For example, when welding or insertion methods are used, the third pipe member 3 and the first connecting pipe 4 are generally made of metal members. When a threaded connection is used, external threads are formed on the outer wall of the connection part between the third pipe member 3 and the first connecting pipe 4, while internal threads that match the external threads above are formed on the inner wall of the first connecting pipe 4. Moreover, a sealing gasket may be added at the connection part. There are no specific material requirements for the third pipe member 3 and the first connecting pipe 4 in this case. When the hot-melt connection method is used, the third pipe member 3 and the first connecting pipe 4 are generally made of plastic members. An injection molding method may also be used, wherein the third pipe member 3 is a metal member, such as an aluminum pipe, while the first pipe member 1 and the second pipe member 2 are plastic pipes. The first pipe member 1 and the second pipe member 2 are molded at two ends of the third pipe member using the injection molding method. The heat exchange pipe assembly processed using this method has good sealing performance.

The third pipe member 3 above is configured for fixing to the large-capacity battery and for heat exchange with the large-capacity battery. For example, a heat transfer medium with a lower temperature may flow through its inner cavity, transferring the heat generated by the large-capacity battery to the heat transfer medium, which then carries the heat away through the flow of the heat transfer medium. Alternatively, a heat transfer medium with a higher temperature may flow through its inner cavity, transferring heat to the large-capacity battery.

To enhance the heat transfer efficiency, a plurality of third pipe members 3 may be included, fixed to the side wall, top, or bottom of the large-capacity battery. Since the temperature of lithium-ion batteries is mainly concentrated at the electrode terminals, this embodiment preferably fixes the third pipe members to the electrode terminals. As shown in Figs. 4 and 5, this embodiment has two third pipe members 3, each connected to the electrode terminals located on the same side of the large-capacity battery. It is to be noted that when two third pipe members 3 are provided and connected to the positive electrode terminal and the negative electrode terminal, respectively, the two third pipe members 3 need to be insulated from each other. For example, the two third pipe members 3 may be made of metal members (such as silver, copper, aluminum, etc.). However, considering cost, electrical conductivity, and thermal conductivity effects, aluminum is generally chosen as the material for the third pipe members 3. The first pipe member 1 and the second pipe member 2 may be made of plastic members. It is also possible for the first pipe member 1, the second pipe member 2, and the third pipe member 3 to all be made of metal members. In this case, insulation treatment may be applied to the connection parts between the third pipe member 3 and the first pipe member 1, and between the third pipe member 3 and the second pipe member 2.

At least one port of the first pipe member 1 or the second pipe member 2 is configured for connecting to a heat transfer medium source. For example, one end of the first pipe member 1 serves as a heat transfer medium inlet, connecting to an outlet of the heat transfer medium source, with the other end sealed. One end of the second pipe member 2 serves as a heat transfer medium outlet, connecting to an inlet of the heat transfer medium source, with the other end sealed. Alternatively, two ends of the first pipe member 1 may be connected to the outlets of the heat transfer medium source, and two ends of the second pipe member 2 may be connected to the inlets of the heat transfer medium source. However, compared to the second connection method, using the first connection method allows the heat transfer medium to flow more effectively through the heat exchange pipe assembly, resulting in a better heat transfer effect.

To ensure that the heat transfer medium is non-conductive, the materials for the first pipe member 1, the second pipe member 2, and the third pipe member 3 may be selected according to the following methods:
1. The first pipe member 1, the second pipe member 2, and the third pipe member 3 are aluminum pipes, with the connection parts between the third pipe member 3 and the first pipe member 1, and between the third pipe member 3 and the second pipe member 2 insulated. For example, the first connecting pipe 4 may be made of a plastic pipe, or a plastic film may be wound around the connection part between the third pipe member 3 and the first connecting pipe 4 to achieve insulation. The corresponding heat transfer medium may be an electrically insulating heat transfer medium.
2. The first pipe member 1, the second pipe member 2, and the third pipe member 3 are aluminum pipes, with an insulating film applied to an inner wall or an outer wall of the third pipe member 3. For example, an aluminum oxide layer may be formed on the inner wall and the outer wall of the aluminum pipe by anodizing. The corresponding heat transfer medium may be water or an electrically insulating heat transfer medium. Compared to the first option, water may be used as the heat transfer medium, but it requires special aluminum pipes, which increases cost.
3. The first pipe member 1 and the second pipe member 2 are plastic pipes, and the third pipe member 3 is an aluminum pipe. The heat transfer medium is an electrically insulating heat transfer medium. This configuration provides good heat transfer performance while ensuring that the heat exchange pipe assembly is electrically insulated, making it safe and reliable.
4. The third pipe member 3 is a non-conductive non-metallic pipe, such as a plastic pipe (e.g., PP, PE, etc.), while the first pipe member 1 and the second pipe member 2 are metal pipes, such as aluminum pipes, copper pipes, or the like. The corresponding heat transfer medium may be water or an electrically insulating heat transfer medium. The heat transfer efficiency of plastic pipes is lower compared to metal pipes. However, compared to a solution where the first pipe member 1, the second pipe member 2, and the third pipe member 3 are made of plastic pipes, this solution offers higher heat transfer efficiency.

When mounting the heat exchange pipe assembly in the large-capacity battery, the heat exchange pipe assembly may be directly connected as a whole, and the third pipe member 3 may be fixed to the electrode terminals or electrode terminal connectors of the large-capacity battery. This approach is simple to operate and convenient for mounting, as shown in Fig. 7.

### Embodiment 2

This embodiment provides a heat exchange assembly, which includes at least two heat exchange pipes 06 from Embodiment 1, configured for heat exchange in an energy storage device that includes a plurality of large-capacity batteries. To ensure that all large-capacity batteries in the energy storage device may achieve heat exchange, the number of heat exchange pipe assemblies in the heat exchange assembly of this embodiment corresponds to the number of large-capacity batteries in the energy storage device, with a one-to-one correspondence. The first pipe members 1 of two adjacent heat exchange pipe assemblies are connected via a second connecting pipe 5, and the inner cavities thereof are in communication with each other. Similarly, the second pipe members 2 of two adjacent heat exchange pipe assemblies are connected via a third connecting pipe 6, and the inner cavities thereof are in communication with each other. To accommodate the distance between adjacent large-capacity batteries, the second connecting pipe 5 and third connecting pipe 6 are preferably flexible hoses, such as corrugated pipes or the like.

### Embodiment 3

This embodiment provides a large-capacity battery, the structure of which is shown in Fig. 5. The large-capacity battery includes a large-capacity battery main body 7 and a heat exchange pipe assembly from Embodiment 1.

The large-capacity battery main body 7 includes a shell 03, and a plurality of battery cells 01 are arranged sequentially in an inner cavity of the shell 03. The battery cells 01 described here are prismatic batteries. Electrode terminal clearance holes corresponding to electrode terminals of the battery cells 01 are formed in a top plate of the shell 03, and regions of the shell 03 corresponding to the electrode terminal clearance holes are fixedly sealed to a housing of the battery cell 01. Electrode terminal adapter members 8 are disposed at the electrode terminal clearance holes and the corresponding parts of the electrode terminals. The electrode terminal adapter members are electrically connected to the electrode terminals of the battery cells 01 via the electrode terminal clearance holes. The electrode terminal adapter member 8 is provided with a fixing portion for the third pipe member 3.

As shown in Fig. 7, in this embodiment, a slot 9 extending along the x-direction is formed in the electrode terminal adapter member 8 as the fixing portion for the third pipe member 3. The opening size of the slot 9 is designed to ensure that the third pipe member 3 may be securely inserted, and that the third pipe member 3 has a large contact area with the inner wall of the slot 9, thus increasing the heat transfer area and enhancing the heat transfer efficiency. In addition, using the slot 9 as the fixing portion for the third pipe member 3 makes the mounting of the heat exchange pipe assembly easier. The entire heat exchange pipe assembly may be directly mounted by simply inserting the third pipe member 3 into the slot 9. As may be seen from the drawings, after the third pipe member 3 is inserted into the slot 9, the first pipe member 1 and the second pipe member 2 are located at two ends of the shell 03.

One end of the first pipe member 1 is connected to the outlet of the heat transfer medium source, and the other end is sealed. One end of the second pipe member 2 is connected to the inlet of the heat transfer medium source, and the other end is sealed. When heat exchange is required, the heat transfer medium source is activated, and the heat transfer medium flows first from the heat transfer medium source through the first pipe member, then through the two third pipe members, and exits from the second pipe member, returning to the heat transfer medium source. This process is repeated a plurality of times to achieve either cooling or heating of the large-capacity battery.

### Embodiment 4

Unlike Embodiment 3, in this embodiment, the electrode terminals of each battery cell 01 in the large-capacity battery extend through the electrode terminal clearance holes on the top plate of the shell 03, while the rest of the structure remains the same as in Embodiment 3. If conditions permit, for example, when the end faces of the electrode terminals of each battery cell 01 are located in the same plane, slots 9 may be directly formed on the electrode terminals of the battery cells 01 to fix the third pipe members 3.

### Embodiment 5

This embodiment provides an energy storage device, which includes a plurality of large-capacity batteries as described in Embodiments 3 or 4. In the adjacent large-capacity batteries, the first pipe members 1 of two heat exchange pipe assemblies are connected via a second connecting pipe, and the inner cavities thereof are in communication with each other. The second pipe members 2 of the two heat exchange pipe assemblies are connected via a third connecting pipe, and the inner cavities thereof are in communication with each other. When mounting the heat exchange assembly in the energy storage device, a plurality of heat exchange pipe assemblies may be directly connected to form a single heat exchange assembly. The third pipe member 3 of each heat exchange pipe assembly is then fixed to the electrode terminals or electrode terminal connectors of the large-capacity batteries. This approach is simple to operate and convenient for mounting.

One end of the first pipe member 1 on the outermost large-capacity battery is connected to the outlet of the heat transfer medium source, while the other end is sealed. One end of the second pipe member 2 is connected to the inlet of the heat transfer medium source, while the other end is sealed. When heat exchange is required, the heat transfer medium source is activated, and the heat transfer medium flows first from the heat transfer medium source through the plurality of first pipe members and a plurality of third pipe members, then exits from the second pipe member of the outermost large-capacity battery and returns to the heat transfer medium source. This process is repeated a plurality of times to achieve either cooling or heating of the large-capacity battery.

Embodiments 6 to 8 provide a heat exchange pipe assembly and a large-capacity battery that uses this heat exchange pipe assembly. The heat exchange pipe assembly includes a heat exchange pipe, which cooperates with the electrode terminals of the battery cells of the large-capacity battery by clamping. It is used for heat exchange with the large-capacity battery. The heat exchange here may be understood as either cooling or heating the large-capacity battery. When the temperature of the large-capacity battery exceeds a set threshold, an external temperature control apparatus is used to cool the heat transfer medium flowing into the heat exchange pipe assembly, thus achieving cooling of the large-capacity battery. When the temperature of the large-capacity battery falls below the set threshold, the external temperature control apparatus heats the heat transfer medium flowing into the heat exchange pipe assembly, thus heating the large-capacity battery.

### Embodiment 6

This embodiment aims to balance heat exchange performance and insulation sealing performance, while simplifying the structure of the heat exchange pipe. As shown in Figs. 8 and 9, the heat exchange pipe assembly in this embodiment includes a first metal pipe 21, a second metal pipe 22, an insulating sealing connector 23, and an insulating sealing joint 24. This heat exchange pipe assembly is applied to a large-capacity battery including a plurality of battery cells 01 connected in parallel. In this embodiment, the battery cells 01 are similar to commercially available aluminum prismatic lithium-ion batteries, with the through grooves formed in both the positive electrode terminal and the negative electrode terminal.

The first metal pipe 21 is configured to be clamped in through grooves of positive electrode terminals of the battery cells 01 in the large-capacity battery, and the second metal pipe 22 is configured to be clamped in through grooves of negative electrode terminals of the battery cells 01 in the large-capacity battery. The insulating sealing connector 23 connects an inlet port of the first metal pipe 21 and an outlet port of the second metal pipe 22.

Two insulating sealing joints 24 are provided, with one being disposed at an outlet port of the first metal pipe 21 and the other at an inlet port of the second metal pipe 22, each configured to be in communication with an external heat transfer medium circulation line.

During operation, the heat transfer medium enters through the insulating sealing joint 24 located at the inlet port of the first metal pipe 21. It then flows sequentially through the first metal pipe 21, the insulating sealing connector 23, and the second metal pipe 22, finally exiting through the insulating sealing joint at the outlet port of the second metal pipe 22. This flow path allows the heat exchange with the electrode terminals of the battery cells 01.

The materials, structure, and dimensions of the first metal pipe 21 and the second metal pipe 22 are identical, and options such as steel pipes, copper pipes, and aluminum pipes may be considered. On the basis of factors such as thermal conductivity, flexibility, corrosion resistance, and cost-effectiveness, aluminum pipes are preferred for the first metal pipe 21 and the second metal pipe 22.

The insulating sealing connector 23 used in this embodiment is a commercially available insulating sealing joint part, which has a relatively low cost. The connection between the first metal pipe 21 and the second metal pipe 22 may be easily achieved via simple insertion, making mounting and replacement straightforward. However, the sealing and insulation performance of the insulating sealing connector may degrade over time, so regular checks and maintenance are recommended during use.

In other embodiments, the insulating sealing connector 23 may also be made of a plastic pipe member, and it may be molded as an integral component along with the first metal pipe and the second metal pipe. This design not only provides good insulation and sealing performance but also simplifies the subsequent assembly steps. However, if the first metal pipe 21 and the second metal pipe 22 are relatively long, this approach is limited by the capabilities of the processing equipment and techniques, resulting in higher production costs.

When using the heat exchange pipe assembly, it needs to consider not only the insulation of the heat exchange pipe assembly but also the insulation of the heat transfer medium. Generally, in most non-metallic liquids, water has the highest thermal conductivity. However, if water is used as the heat transfer medium in the heat exchange pipe assembly, an insulating layer needs to be applied to the inner pipe walls of the first metal pipe and the second metal pipe to isolate the water from the first metal pipe and the second metal pipe. This process is relatively complex and expensive. Additionally, if water leaks from the heat exchange pipe assembly, it may create serious safety hazards.

To solve the problems associated with using water as the heat transfer medium, in some embodiments, an insulating heat transfer oil is considered. However, insulating heat transfer oil has poor thermal conductivity performance and is relatively expensive.

Therefore, in this embodiment, a fluorinated liquid is selected as the heat transfer medium, as it provides better insulation performance and superior thermal conductivity performance compared to insulating heat transfer oils. The thermal conductivity of the insulating heat transfer oil ranges from 0.1 to 0.15 W/(m·K), while the thermal conductivity of the fluorinated liquid ranges from 0.15 to 0.4 W/(m·K).

When a plurality of large-capacity batteries using this heat exchange pipe assembly form an energy storage device, this embodiment adds right-angle sealing connectors 26 and connecting pipelines 27 between the first metal pipe 21 and the insulating sealing joint 24, as well as between the second metal pipe 22 and the insulating sealing joint 24. Compared to the existing heat exchange assemblies including heat pipes, liquid-cooled pipes, and insulating heat exchange members, this design saves the dimension required along the direction of arrangement of the battery cells in the large-capacity battery. As a result, it helps increase the energy density of the energy storage device.

The right-angle sealing connector 26 used in this embodiment is a commercially available right-angle sealing joint, which has a relatively low cost. The connection between the first metal pipe and the connecting pipeline may be easily achieved via simple insertion, making mounting and replacement straightforward. However, the sealing and insulation performance of the insulating sealing connector may degrade over time, so regular checks and maintenance are recommended during use.

In other embodiments, the right-angle sealing connector 26 may also be made of a plastic pipe member, and it may be molded as an integral component along with the first metal pipe and the second metal pipe. This design not only provides good insulation and sealing performance but also simplifies the subsequent assembly steps. However, this approach is limited by the capabilities of the processing equipment and techniques, resulting in higher production costs.

In this embodiment, the connecting pipeline 27 is made of a flexible pipeline, preferably nylon. In addition to providing insulation, the flexible pipeline facilitates easy connection of the heat exchange pipe assembly to the external heat transfer medium circulation line. In other embodiments, if the connecting pipeline is made from a conductive material, the right-angle sealing joint would need to have insulation capabilities.

### Embodiment 7

As shown in Fig. 10, the large-capacity battery of this embodiment includes a plurality of battery cells 01 connected in parallel, a shared piping assembly 02, and the foregoing heat exchange pipe 06. The shared piping assembly 02 includes sub-pipes disposed on the lower cover plates of the battery cells, with a connecting pipe linking adjacent sub-pipes. These sub-pipes are in communication with electrolyte regions of the inner cavities of the battery cells. The specific structure of this shared piping assembly is detailed in Chinese patent CN218525645U for large-capacity batteries.

Certainly, the shared piping assembly 8 may be implemented as a hollow component welded to the lower cover plates of the battery cells, in communication with electrolyte regions of the inner cavities of the battery cells. The specific structure of this shared piping assembly is described in Chinese patent CN116111201A for large-capacity batteries.

### Embodiment 8

The large-capacity battery of this embodiment, as shown in Figs. 11 and 12, includes a shell 03, a plurality of battery cells 01 connected in parallel, and a heat exchange pipe 06 according to Embodiment 6.

The plurality of battery cells 01 are disposed in parallel and arranged within the inner cavity of the shell 03. The inner cavity of each battery cell 01 includes an electrolyte region and a gas region. The battery cells 01 in this embodiment are similar to commercially available aluminum prismatic lithium-ion batteries, including an upper cover plate, a lower cover plate, a housing, a core assembly, and an electrolyte. The core assembly, also referred to as the electrode assembly, includes the positive electrode, separator, and negative electrode, arranged sequentially. The assembly is produced using either a stacking or winding process. A through groove is formed in the electrode terminal of the battery cell, or an electrode terminal adapter member is welded to the electrode terminal of the battery cell, with the electrode terminal adapter member having a through groove. A sealing mechanism is disposed on the lower cover plate of the battery cell, which may be opened under the influence of the electrolyte or external forces.

The shell 03 includes a cylindrical body 211 with open ends and end plates 212 disposed at the open ends of the cylindrical body.

A first channel 213 is disposed at the bottom of the cylindrical body 211, the first channel 213 being in communication with the electrolyte regions of the inner cavities of the battery cells 01 via a through hole in the lower cover plate of the battery cell 01, so that the battery cells share a common electrolyte system. As a result, the uniformity of the battery cells in the large-capacity battery is improved, which enhances the overall performance of the large-capacity battery.

Electrode terminal clearance holes 214 allowing electrode terminals of the battery cells 01 to extend therethrough are formed in a top plate of the cylindrical body 211. The electrode terminals of the battery cells extend through the electrode terminal clearance holes 214, and regions of the cylindrical body 211 corresponding to the electrode terminal clearance holes 214 are fixedly sealed to the top of the battery cells 01.

In this embodiment, if the electrode terminals of the battery cells do not extend through the top of the cylindrical body, an electrode terminal adapter member is required to be disposed on the electrode terminal of each battery cell. The electrode terminal adapter member is provided with a through groove, and the first metal pipe and the second metal pipe in the heat exchange pipe assembly are clamped into the through groove of the electrode terminal adapter member.

In other embodiments, if the electrode terminals of the battery cells extend through the top of the cylindrical body, no electrode terminal adapter member is needed. In this case, the first metal pipe and the second metal pipe in the heat exchange pipe assembly are clamped into the through grooves of the electrode terminals.

In this embodiment, a second channel 215 is disposed on the top of the cylindrical body 211, and the second channel 215 has two functions as follows:
First function: When the upper cover plate of the battery cell has a sealing mechanism (which may be opened under the influence of the electrolyte or external forces), the sealing mechanism needs to be opened before the large-capacity battery starts operation. Once opened, the second channel allows communication between the gas regions of the battery cells, achieving gas balance. This ensures consistency in the gases within the gas regions of each battery cell and enhances the cycle life of the large-capacity battery to some extent. In extreme situations, if any battery cell experiences thermal runaway, the smoke from the inner cavity of this battery cell enters the second channel and is discharged via the second channel, enhancing the safety of the large-capacity battery.

Second function: When the upper cover plate of the battery cell has a venting portion (typically a venting membrane), the second channel is positioned above the venting portion of each battery cell. During normal operation of the large-capacity battery, the second channel and the gas region of each battery cell are isolated by the venting portion. If any battery cell experiences thermal runaway, the venting portion ruptures due to the smoke from the inner cavity of the battery cell. The smoke is then discharged via the second channel, enhancing the safety of the large-capacity battery.

Embodiments 9 to 11, in the first aspect, provide a heat exchange pipe assembly for thermal exchange with the battery cells in a large-capacity battery. The heat exchange pipe assembly includes a U-shaped heat exchange pipe 06, and the heat exchange pipe 06 is a modular member. As shown in Fig. 13, the heat exchange pipe includes a first pipe 481, a second pipe 482, and a connecting pipe 483. The first pipe 481 is configured to be fixed in a heat exchange pipe clamping portion of a positive-polarity terminal of each battery cell. The second pipe 482 is configured to be fixed in a heat exchange pipe clamping portion 47 of a negative-polarity terminal of each battery cell 01. Two ends of the connecting pipe 483 are connected to ports, located on a same side, of the first pipe 481 and the second pipe 482, respectively.

When the temperature of the large-capacity battery exceeds a set threshold, a heat transfer medium with a lower temperature is introduced into the heat exchange pipe assembly to cool the large-capacity battery. Conversely, when the temperature of the large-capacity battery falls below the set threshold, a heat transfer medium with a higher temperature is introduced into the heat exchange pipe assembly to heat the large-capacity battery. By controlling the temperature of the heat transfer medium, it ensures that the large-capacity battery always operates within the normal working temperature.

In Embodiments 9 to 11, the heat exchange pipe assembly adopts a modular structure. This approach is easier to process compared to an integrally molded heat exchange pipe assembly. Additionally, since the heat exchange pipe assembly needs to be connected to the positive terminal and the negative terminal of each battery cell, the modular heat exchange pipe assembly ensures the insulation performance of the heat exchange pipe assembly compared to the integrated heat exchange pipe assembly.

In particular, the heat exchange pipe assembly may be implemented in the following ways:
First option (with reference to Fig. 13): The first pipe 481 and the second pipe 482 of the heat exchange pipe 06 are flexible insulating pipes. The connecting pipe 483 may either be a metal pipe or a flexible pipe, connected via a quick-connect joint 484. The heat transfer medium in this heat exchange pipe assembly is water or a fluorinated liquid.

Second option (with reference to Fig. 13): The first pipe 481 and the second pipe 482 of the heat exchange pipe 06 are aluminum pipes. The connecting pipe may either be a metal pipe or a flexible pipe. The first pipe 481, the second pipe 482, and the connecting pipe 483 are connected via insulated quick-connect joints 484. The heat transfer medium in this heat exchange pipe assembly is a fluorinated liquid.

Third option (with reference to Fig. 13): The first pipe 481 and the second pipe 482 of the heat exchange pipe 06 are aluminum pipes, with insulating layers applied to the pipe walls of the aluminum pipes. The connecting pipe 483 is a flexible insulating pipe, connected to the first pipe 481 and the second pipe 482 via a quick-connect joint 484. The heat transfer medium in this heat exchange pipe assembly is either water or a fluorinated liquid.

Fourth option (with reference to Fig. 14): The first pipe 481 and the second pipe 482 of the heat exchange pipe 06 are aluminum pipes, with insulating layers applied to the pipe walls of the aluminum pipes. The connecting pipe is a flexible insulating pipe, connected to the first pipe and the second pipe via a clamp 485. The heat transfer medium in this heat exchange pipe assembly is either water or a fluorinated liquid.

Fifth option (with reference to Fig. 14): The first pipe 481 and the second pipe 482 of the heat exchange pipe 06 are aluminum pipes, with oxide layers applied to the pipe walls of the aluminum pipes and insulating sleeves sleeved over the pipe walls of the aluminum pipes. The connecting pipe 483 is a flexible insulating pipe, connected to the first pipe 481 and the second pipe 482 via a clamp 485. The heat transfer medium in this heat exchange pipe assembly is either water or a fluorinated liquid.

It is to be noted that, to ensure a heat transfer effect, the thinner the wall thickness of the aluminum pipe, the better. However, if the wall thickness of the aluminum pipe is too thin, the aluminum pipe becomes relatively soft, making it susceptible to bending and damage during mounting. Therefore, in this embodiment, the wall thickness of the aluminum pipe is preferably 0.5 mm to 1 mm. The aluminum pipe with this wall thickness ensures that the heat exchange pipe has good heat transfer performance while maintaining mounting reliability and helps avoid the risk of bending or damage that may occur with thinner-walled aluminum pipes. In practical use, the diameter of the aluminum pipe is typically 10 mm to 20 mm.

In the heat exchange pipe 06 of this embodiment, the insulating layer is formed on the pipe wall of the aluminum pipe and is of an integral structure with the aluminum pipe. This may be achieved through the following methods:
First method: A ceramic coating, such as a high-temperature electrical insulating coating, is formed on the pipe wall of the aluminum pipe to create the insulating layer. The ceramic coating may be boron nitride, alumina, or copper fluoride. However, this method results in an insulating layer that is prone to detachment, and the processing cost is relatively high.

Second method: An insulation material (such as insulating paint or the like) is applied to the surface of the pipe wall of the aluminum pipe to form the insulating layer. This method is easy to process and implement, and has a lower processing cost.

Third method: The aluminum pipe is subjected to oxidation treatment to form the insulating layer. Oxidation treatment involves a chemical reaction between the metal surface and oxygen, forming an oxide film that enhances the insulation performance of the metal surface. For example, an electrochemical oxidation method may be used. In particular, the aluminum pipe is subjected to oxidation treatment to form a hard oxide layer. The insulating layer formed by this method is less likely to detach and provides relatively better insulation performance.

The thicker the hard oxide layer formed by oxidation treatment, the better the insulation, but this will reduce heat transfer performance. In this embodiment, the thickness of the hard oxide layer above is preferably 20 µm to 50 µm. The hard oxide layer with this thickness ensures both good insulation performance and optimal heat transfer performance of the pipe wall of the aluminum pipe.

The insulating sleeve above is specifically made from an insulation material with good heat transfer performance, so it provides excellent insulation performance while maintaining good heat transfer performance. In this embodiment, the insulating sleeve is made from a thermally conductive plastic sleeve or thermally conductive rubber sleeve, with both excellent insulation performance and thermal conductivity performance, for example, a thermally conductive silicone sleeve. The thickness of the insulating sleeve is preferably 0.1 mm to 1 mm, which ensures excellent insulation performance while maintaining good heat transfer performance. The cross-sectional shape of the insulating sleeve may be circular, U-shaped, or C-shaped, as long as it may fit over the aluminum pipe with the insulating layer, providing insulation at the point where the aluminum pipe contacts the polarity terminal 45 of the battery cell 01. Moreover, it is preferable for the cross-sectional shape of the insulating sleeve above to match the cross-sectional shape of the aluminum pipe. This ensures that the insulating sleeve fits snugly over the aluminum pipe, thereby enhancing the thermal conductivity performance of the aluminum pipe.

In other embodiments, an oxide layer may be directly applied to the pipe wall of the aluminum pipe, or an insulating sleeve may be directly sleeved over it, offering a simpler structure.

Embodiments 9 to 11, in the second aspect, provide a large-capacity battery, which may take three specific forms:
In the first form, with reference to Fig. 15, the large-capacity battery includes a plurality of battery cells 01 disposed in parallel, a first shared piping assembly 423, and the heat exchange pipe 06 described above. In the heat exchange pipe 06, the first pipe 481 is fixed in the heat exchange pipe clamping portion 47 of the positive-polarity terminal of each battery cell 01, and the second pipe 482 is fixed in the heat exchange pipe clamping portion 47 of the negative-polarity terminal of each battery cell 01.

The first shared piping assembly 423 is connected to the lower cover plates of the battery cells 01 and in communication with electrolyte regions of the inner cavities of the battery cells.

In the second form, with reference to Fig. 15, the large-capacity battery includes a plurality of battery cells 01 disposed in parallel, the first shared piping assembly 423, a second shared piping assembly 424, and the heat exchange pipe 06 described above. In the heat exchange pipe assembly, the first pipe 481 is fixed in the heat exchange pipe clamping portion 47 of the positive-polarity terminal of each battery cell 01, and the second pipe 482 is fixed in the heat exchange pipe clamping portion 47 of the negative-polarity terminal of each battery cell 01.

The first shared piping assembly 423 is connected to the lower cover plates of the battery cells 01 and in communication with electrolyte regions of the inner cavities of the battery cells, while the second shared piping assembly 424 is connected to upper cover plates of the battery cells 01 and in communication with gas regions of the inner cavities of the battery cells.

In the third form, with reference to Figs. 16 and 17, the large-capacity battery includes a shell 03, a plurality of battery cells 01, and a heat exchange pipe 06. The plurality of battery cells 01 are arranged in a same direction in the shell 03. A shared chamber is disposed in the shell 03, an inner cavity of the shared chamber being in communication with inner cavities of all the battery cells 01.

Electrode terminal clearance holes 214 corresponding to polarity terminals 45 of the battery cells 01 are formed in a top plate of the shell 413. The polarity terminals 45 of the battery cells 01 extend through the electrode terminal clearance holes 214, and regions of the top plate 413 of the shell corresponding to the electrode terminal clearance holes 214 are fixedly sealed to a housing of the battery cell 01.

Portions where the polarity terminals 45 of the battery cells 01 extend through the electrode terminal clearance holes 214 are provided with heat exchange pipe clamping portions 47.

Heat exchange pipes 06 are fixed to the heat exchange pipe clamping portions 47 on the polarity terminals 45 of the battery cells 01, and the heat exchange pipes 06 are insulated from the battery cells 01.

It is to be noted that:
The shared chamber above may be an electrolyte shared chamber 04 (as shown in Fig. 17), wherein the inner cavity of the electrolyte shared chamber 04 is in communication with the electrolyte regions of the inner cavities of all battery cells 01. The electrolyte shared chamber 04 ensures that the battery cells 01 are in a uniform electrolyte environment, maintaining the uniformity of the electrolyte in each battery cell 01. This enhances the performance and charge/discharge cycle life of the large-capacity battery.

The shared chamber above may also be a gas chamber 05 (as shown in Fig. 17), wherein the inner cavity of the gas chamber 05 is in communication with the gas regions of the inner cavities of all battery cells 01. The gas chamber 05 helps maintain gas balance for each battery cell 01, thereby enhancing the performance and charge/discharge cycle life of the large-capacity battery.

The shared chamber above may also be a gas-liquid shared chamber, wherein the inner cavity of the gas-liquid shared chamber is in communication with the electrolyte regions and the gas regions of all battery cells 01. A single gas-liquid shared chamber allows all battery cells 01 to be in a uniform electrolyte and gas environment, thereby enhancing the performance and charge/discharge cycle life of the large-capacity battery.

In this form, a plurality of battery cells are placed inside a shell with a shared chamber. By communicating the shared chamber with the inner cavities of the battery cells located in the shell, the electrolyte and/or gas of the battery cells are shared to ensure consistency of the battery cells. That is, the electrolyte and/or gas of each battery cell are in communication with each other, allowing all electrolytes and/or gases of the battery cells to be within the same system. This reduces the differences between the battery cells, enhancing consistency of the battery cells and thereby enhancing the cycle life of the large-capacity battery to some extent.

The shared chamber above may also be a gas chamber 05 (as shown in Fig. 17), and the gas chamber 05 covers the venting portion on the top of each battery cell. When any battery cell experiences thermal runaway, the gas chamber may release the thermal runaway gases to the outside, allowing an external thermal runaway gas treatment apparatus to process the gases.

It is to be noted that the polarity terminals 45 of the battery cell 01, as described here, may be the electrode terminals of the battery cells 01. To ensure smooth extension of the electrode terminals of the battery cells 01, as the polarity terminals 45, through the electrode terminal clearance hole 214, an additional electrode terminal adapter member may be attached to the electrode terminal of the battery cell 01. This combined structure of the electrode terminal of the battery cell 01 and the electrode terminal adapter member serves as the polarity terminal 45 of the battery cell 01.

Moreover, the heat exchange pipe assembly is fixed at the portions where the polarity terminals of the battery cells extend through the electrode terminal clearance holes. The heat exchange pipe assembly is in direct contact with the polarity terminal of each battery cell, allowing heat to be efficiently conducted away. This cooling method achieves balanced heat dissipation for each battery cell within the large-capacity battery, thereby enhancing the safety of the large-capacity battery.

The following provides a detailed description of the third form of the large-capacity battery, with reference to the drawings.

### Embodiment 9

As may be seen by referring to Figs. 16 and 17, the large-capacity battery in this embodiment includes a shell 03 and battery cells 01 arranged within the shell 03.

In this embodiment, the battery cells 01 are prismatic batteries, with a total of 13 cells. In other embodiments, the number may be adjusted according to actual needs. The inner cavity of each battery cell 01 includes an electrolyte region and a gas region.

For convenience of description, the length direction of the shell 03 is defined as the x-direction, the width direction of the shell 03 is defined as the y-direction, and the height direction of the shell 03 is defined as the z-direction. The shell 03 is divided into a cylindrical body 211 with open ends and end plates 212 covering the open ends of the cylindrical body 211.

In the bottom plate 414 of the shell (cylindrical body bottom plate), an electrolyte shared chamber 04 is provided along the x-direction. The inner cavity of the electrolyte shared chamber 04 is in communication with the electrolyte region of the inner cavity of each battery cell 01.

In the top plate 413 of the shell (cylindrical body top plate), a gas chamber 05 is provided along the x-direction. The inner cavity of the gas chamber 05 is in communication with the gas region of each battery cell 01.

In other embodiments, only the electrolyte shared chamber 04 or the gas chamber 05 may be provided. Additionally, a gas-liquid shared chamber may be provided along the x-direction in the side wall of the shell 03. The inner cavity of the gas-liquid shared chamber is in communication with the electrolyte region and the gas region of each battery cell 01.

In this embodiment, the electrolyte shared chamber 04 is a liquid channel disposed on the bottom plate 414 of the shell. The specific structure may be referenced in Figs. 18, 19, and 20:

Fig. 18 is a partial schematic structural diagram of a shell 03 of a large-capacity battery according to this embodiment, i.e., a schematic structural diagram of the cylindrical body 211. Fig. 19 is a schematic structural diagram of an electrolyte shared chamber 04 formed by adding a bottom support member 49 inside the cartridge 211 of Fig. 15. Fig. 20 is a schematic structural diagram of a bottom support member 49 according to this embodiment.

As may be seen from Fig. 18, in this embodiment, the two ends of the cylindrical body 211 are open and may be integrally formed by an aluminum extrusion process.

In Fig. 19, a bottom support member 49 is fixed inside the cylindrical body 211. The bottom support member 49 serves two main functions:
1. It raises each battery cell 01, ensuring that the polarity terminals 45 of each battery cell 01 extend through the electrode terminal clearance holes 214 in the top plate 413 of the shell.
2. It supports each battery cell 01, forming a liquid channel between the bottom of each battery cell 01, which acts as the electrolyte shared chamber 04.

As may be seen by referring to Fig. 17, the bottom support member 49 in this embodiment, along with the bottom of each battery cell 01, forms the electrolyte shared chamber 04.

As may be seen from Fig. 20, the bottom support member 49 in this embodiment is made of aluminum. Its main body portion is a flat plate, and the shape and dimension of the plate are adapted to the shape and dimension of the bottom plate 414 of the shell. A second support rib 492 extending along the x-direction is disposed on the lower surface of the flat plate, and a first support rib 491 extending along the x-direction is disposed on the upper surface of the flat plate.

In this embodiment, two second support ribs 492 are provided, and their main function is to raise each battery cell 01, ensuring that the polarity terminals 45 of each battery cell 01 extend through the electrode terminal clearance holes 214 in the top plate 413 of the shell.

As may be seen by referring to Fig. 17, the bottom support member 49 is placed inside the cylindrical body 211 and positioned between each battery cell 01 and the bottom plate 414 of the shell.

It is to be noted that during the assembly process of the large-capacity battery, the port of the channel 419 formed between the bottom support member 49 and the bottom plate 414 of the shell needs to be sealed using a baffle 418 to avoid the electrolyte from flowing into the channel, which would increase the overall electrolyte volume of the large-capacity battery (as shown in Fig. 17).

In addition, the edge of the bottom support member 49 along the x-direction is to be sealed to the side wall of the cylindrical body parallel to the xz-plane to avoid electrolyte leakage into the channel. This sealing may be achieved by adding sealing strips or sealing adhesive. Additionally, lightweight materials may be filled in the channel to fill the channel completely. The lightweight material is not to react with the electrolyte, and PP columns, which are cost-effective compared to aluminum, may be used. Even if there is a gap between the bottom support member 49 and the side wall of the cylindrical body parallel to the xz-plane, no excessive electrolyte enters the channel because it has already been completely filled.

In other embodiments, the same purpose may be achieved by thickening the dimensions of the flat plate. However, compared to this embodiment, such an approach results in higher material costs and increases the overall weight of the large-capacity battery. In this embodiment, by disposing of the second support rib 492, the thickness of the flat plate may be minimized while ensuring sufficient support strength, which reduces material costs and lightens the weight of the large-capacity battery.

In this embodiment, three first support ribs 491 are provided, each extending along the x-direction. The three support ribs are evenly spaced along the y-direction. To enhance the electrolyte sharing effect, a notch 4911 is formed in the first support rib 491 located in the middle, ensuring communication of the liquid channels on either side.

The structure of the electrolyte shared chamber 04 corresponding to this type of design for the battery cell 01 is shown in Figs. 21 and 22:
In this embodiment, two first through holes 4161 are formed on the lower cover plate 416 of the battery cell. The two first through holes 4161 are arranged along the y-direction and are symmetrically positioned relative to each other. The two first through holes 4161 are sealed using a sealing assembly 410. After the battery cell 01 is inserted into the cylindrical body 211 described above, the two first through holes 4161 are positioned directly above the two liquid channels. Through the external force or external electrolyte (the external electrolyte refers to the electrolyte located outside the battery cell 01), the sealing assembly 410 may either fall off the lower cover plate or form a hole that communicates through the first through holes 4161, ensuring communication with the liquid channel.

As may be seen from Fig. 21, the two first through holes 4161 in this embodiment are located on two sides of the lower cover plate 416 of the battery cell. When the internal core of the battery cell 01 is formed by winding, there is a large space between the side wall of the housing of the battery cell 01 and the wound core. The first through holes 4161 are located close to two sides of the lower cover plate 416 of the battery cell. First, the formation of the first through holes 4161 does not affect the internal core structure. Second, after the sealing assembly 410 in this area is opened, the electrolyte in the electrolyte shared chamber 04 may better enter the inner cavity of the battery cell 01.

The size of the first through hole 4161 needs to meet the following conditions:
1. The first through hole 4161 may not be too large, to ensure that the lower cover plate 416 of the battery cell retains sufficient strength. This avoids the lower cover plate 416 of the battery cell from failing due to insufficient strength before the sealing assembly 410 in the first through hole 4161 is opened, which could render the battery cell 01 unusable.
2. The first through hole 4161 may not be too small, to ensure that after the sealing assembly 410 in the first through hole 4161 is opened, the electrolyte region in the inner cavity of each battery cell 01 is in smooth communication with the inner cavity of the electrolyte shared chamber 04, ensuring a good electrolyte sharing effect.

In this embodiment, the sealing assembly 410 may be a sealing film disclosed in Chinese Patent CN218525645U. This patent discloses two types of sealing films: one type dissolves when exposed to electrolyte, and the other type may be opened under external force.

When using a sealing film that dissolves in electrolyte, it is generally necessary to place a protective film, which is insoluble in the electrolyte, on the side of the sealing film facing the inside of the housing of the battery cell 01. After the sealing film dissolves in the electrolyte, the protective film falls off along with it.

When using this type of sealing film, the following process may be used for opening the liquid path:
After the large-capacity battery assembly is completed, electrolyte is injected into the electrolyte shared chamber 04. This causes the sealing films at the two first through holes 4161 to automatically dissolve from the outside. Since the protective film is not fixed to the lower cover plate 416 of the battery cell, when the sealing film dissolves, the protective film may automatically fall off from the cover plate, allowing the electrolyte shared chamber 04 to be in communication with the inner cavity of the battery cell 01. This ensures that the electrolyte in all the battery cells 01 is within the same system, achieving the electrolyte sharing effect. In this embodiment, even if the sealing film at one of the first through holes 4161 is not completely dissolved during the opening process, the electrolyte sharing effect may still be achieved via the other first through hole 4161, wherein the sealing film at the first through hole 4161 has dissolved.

For sealing films that may be opened under external force, a traction ring may be provided on the sealing film. By pulling the traction ring with an external force, an opening may be formed in the sealing film.

The following process may be used for opening the liquid path:
After the large-capacity battery assembly is completed, a traction tool is used to pull the traction ring. This action causes the sealing films to either tear open or fall off from the first through hole 4161, allowing the electrolyte shared chamber 04 to be in communication with the inner cavity of the battery cell 01. This ensures that the electrolyte in all the battery cells 01 is within the same system, achieving the electrolyte sharing effect. During the opening process, even if the sealing film at one of the first through holes 4161 is not torn open or does not fall off, the electrolyte sharing effect may still be achieved through the other first through hole 4161, wherein the sealing film at the first through hole 4161 has been torn open or completely fallen off.

In other embodiments, one or more first through holes 4161 may be formed in the lower cover plate 416 of the battery cell. When there is a single first through hole 4161, the first through hole 4161 is typically located at the geometric center of the lower cover plate 416. When there are two or more first through holes 4161, the first through holes 4161 may be evenly distributed across the lower cover plate 416 of the battery cell. The size of the first through hole 4161 needs to meet the two conditions described above. Moreover, the position of the first support rib 491 needs to be adjusted according to the position of the first through hole 4161 in the battery cell 01. For example, when there is only one first through hole 4161 located at the geometric center of the lower cover plate 416 of the battery cell, two first support ribs 491 may be provided. The two support ribs 491 form a liquid channel between them, which is in communication with the first through hole 4161 in the battery cell 01.

In other embodiments, the electrolyte shared chamber 04 may also be implemented as shown in Fig. 23, wherein support ribs are directly disposed along the x-direction on the bottom plate 414 of the shell. A liquid channel is formed between the two support ribs, which acts as the electrolyte shared chamber 04. The support ribs here also serve the following two functions:
1. It raises each battery cell 01, ensuring that the polarity terminals 45 of each battery cell 01 extend through the electrode terminal clearance holes 214 in the top plate 413 of the shell.
2. It supports each battery cell 01, forming a liquid channel between the bottom of each battery cell 01, which acts as the electrolyte shared chamber 04.

However, compared to this embodiment, the electrolyte shared chamber 04 formed in this way has a larger dimension in the z-direction, which results in a higher electrolyte volume for this type of large-capacity battery, leading to higher costs.

In particular, in the electrolyte shared chamber 04 shown in Fig. 23, the dimension of the electrolyte shared chamber 04 in the z-direction is equal to the dimension of the support ribs, which results in a larger volume for the electrolyte shared chamber 04. This, in turn, leads to a higher electrolyte volume within the entire electrolyte shared chamber 04. (It is to be noted that since the lower cover plate 416 of each battery cell and the support ribs are not sealed, electrolyte may diffuse through the gap between them into the cavity formed between the two support ribs and the shell 03), which increases the cost of this type of large-capacity battery.

In Embodiments 9 to 11, two types of support ribs are disposed on the same support member. The first type of support rib primarily serves to form the electrolyte shared chamber 04, while the second type of support rib primarily serves to elevate each battery cell 01. This arrangement allows the height of the first type of support rib in the z-direction to be minimized, thereby reducing the volume of the electrolyte shared chamber 04 and consequently decreasing the amount of electrolyte used. Reducing the height of the first type of support rib in the z-direction may result in the polarity terminals 45 of each battery cell failing to extend smoothly through the corresponding electrode terminal clearance holes 214. In this case, the height of the second type of support rib in the z-direction may be increased to ensure that the polarity terminals 45 of each battery cell extend smoothly through the corresponding electrode terminal clearance holes 214. As may be clearly seen from Fig. 20, in the z-direction, the dimension of the first support rib 491 in Embodiments 9 to 11 is smaller than the dimension of the second support rib 492. Therefore, in Embodiments 9 to 11, on the basis of the bottom support member 49, it is possible to ensure a small volume for the electrolyte shared chamber while still ensuring that the polarity terminals 45 of the battery cells extend through the corresponding electrode terminal clearance holes 214 in the top plate 413 of the shell.

In this embodiment, the gas chamber 05 is a gas channel disposed on the top plate 413 of the shell. The specific structure is shown in Figs. 18 and 19. A protrusion extending along the x-direction is disposed on the top plate 413 of the shell, and a gas channel extending along the x-direction is formed at the protrusion part. When the cylindrical body 211 is processed using an aluminum extrusion process, the gas channel may be simultaneously formed during the extrusion process.

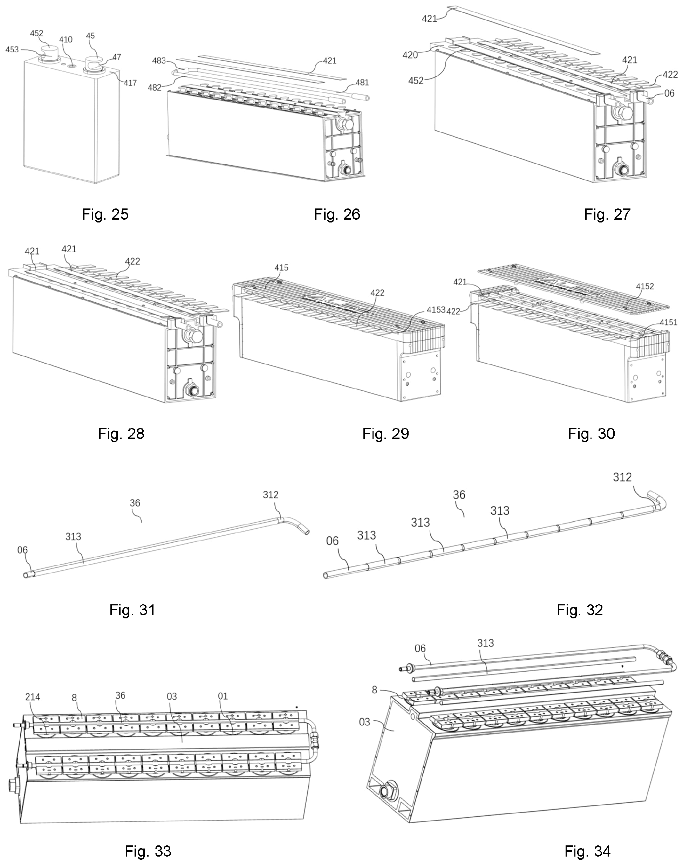

The structure of the gas chamber 05 corresponding to this type of design for the battery cell 01 is shown in Figs. 24 and 25:
In this embodiment, a second through hole 4171 is formed in the upper cover plate 417 of the battery cell, and the second through hole 4171 is positioned between the two polarity terminals 45 of the battery cell 01. The second through holes 4171 are sealed using a sealing assembly 410. After the battery cell 01 is inserted into the cylindrical body 211 described above, the second through holes 4171 are positioned directly below the gas chamber 05. Through external force or external electrolyte (the external electrolyte refers to the electrolyte located outside the battery cell 01), the sealing assembly 410 may either fall off the upper cover plate or form a hole that communicates through the second through holes 4171, ensuring communication with the gas chamber 05. The specific communication method (i.e., the opening process) is similar to the liquid path opening process, which is not elaborated upon here.

As shown in Figs. 18 and 19, in this embodiment, electrode terminal clearance holes 214, which allow the polarity terminals 45 of the battery cells 01 to extend, are formed in a top plate of the shell 413. The polarity terminals 45 of the battery cells 01 extend through the corresponding electrode terminal clearance holes 214, and regions surrounding the electrode terminal clearance holes 214 on the shell 03 are fixedly sealed to a housing of the battery cell 01. As may be seen from the drawings, in this embodiment, the polarity terminals 45 of the battery cell 01 are the electrode terminals of the battery cell 01. Such electrode terminals of the battery cell 01 are taller compared to the electrode terminals of conventional commercially available prismatic batteries.

With reference to Figs. 16 and 17, it may be seen that in this embodiment, a through groove is formed in the portion where the polarity terminal 45 of the battery cell 01 extends through the electrode terminal clearance hole 214, which serves as the heat exchange pipe clamping portion 47. As may be seen from Fig. 22, the polarity terminal 45 of the battery cell 01 is cylindrical, including a first end face, a second end face 452, and a side wall 453 (with the first end face and the second end face 452 being parallel). The through groove is formed in the side wall 453 of the polarity terminal, that is, the opening of the through groove is located in the side wall 453.

In other embodiments, a through hole may be formed in the side wall 453, that is, the opening of the through hole is located in the side wall 453.

In other embodiments, a through groove may be formed in the second end face 452, that is, the opening of the through groove is located in the second end face 452.

The second end face 452 serves as the electrical connection portion of the polarity terminal 45, configured to be connected to the first electrical connector 421 and/or the second electrical connector 422 to achieve an electrical connection between each battery cell 01 and/or two large-capacity batteries. The first end face is used to be electrically connected to the electrode assembly inside the housing of the battery cell 01.

By forming grooves and through holes in the side wall 453, compared to forming through grooves in the second end face 452, the contact area between the heat exchange pipe 06 and the inner walls of the through groove or the through hole is larger, resulting in improved heat transfer efficiency. In addition, when the through groove or the through hole is located in the side wall 453, the entire area of the second end face 452 may serve as the electrical connection region. Two through grooves or through holes may also be formed in the side wall 453 of the polarity terminal to increase the number of heat exchange pipe assemblies, further enhancing heat transfer efficiency. Compared to the through hole structure, the through groove structure facilitates easier mounting of the heat exchange pipe 06.

The cross-section of the through groove is C-shaped. A C-shaped through groove, with the opening width smaller than the widest part of the through groove, allows the first pipe or the second pipe to fit tightly within the through groove. The curvature formed at the two ends of the C-shaped through groove naturally generates tension, which is conducive to securely clamping the first pipe or the second pipe into the through groove.

In this embodiment, the assembly of the large-capacity battery may be completed by the following process:
In step 1, the cylindrical body 211 and the two end plates 212 are machined.

In step 2, cell sorting and selection are performed to screen a plurality of battery cells 01 that meet the requirements. After forming the first through hole 4161 in the lower cover plate 416 of the battery cell, it is sealed using the sealing assembly 410. After forming the second through hole 4171 in the upper cover plate 417 of the battery cell, it is sealed using the sealing assembly 410. The plurality of battery cells 01, each with a sealing assembly 410, are arranged inside the cylindrical body 211 from step 1.

The specific arrangement process is as follows:
The plurality of battery cells 01 are fixed together as a whole and insert them into the inner cavity of the cylindrical body 211 from any open end of the cylindrical body 211. In this case, the bottom of each battery cell 01 is in contact with the bottom plate 414 of the shell, and the polarity terminals 45 of the battery cells 01 align with the corresponding electrode terminal clearance holes 214 but do not extend through the electrode terminal clearance holes 214. A lifting tool is used to support the plurality of battery cells 01 from the bottom, so that the bottoms of the battery cells 01 are lifted away from the bottom plate 414 of the shell, and the polarity terminals 45 of the battery cells 01 extend through the corresponding electrode terminal clearance holes 214. The bottom support member 49 is inserted between each battery cell 01 and the bottom plate 414 of the shell along the x-direction, and the lifting tool is removed.

The cylindrical body 211 may be flipped upside down with the top plate of the cylindrical body 211 facing down. Then, the plurality of battery cells 01, fixed together as a whole, are inserted into the inner cavity of the cylindrical body 211 from any open end of the cylindrical body 211. Alternatively, the plurality of battery cells 01 may be sequentially inserted into the inner cavity of the cylindrical body 211 from any open end of the cylindrical body 211. Under the action of gravity, the polarity terminals 45 of each battery cell 01 extend through the corresponding electrode terminal clearance holes 214. The bottom support member 49 is then inserted between the bottoms of the battery cells 01 and the bottom plate 414 of the shell. The cylindrical body 211 is flipped back with the top plate of the cylindrical body 211 facing up.

It is to be noted that, in the z-direction, the dimension of the bottom support member 49 needs to meet the following requirement: After the bottom support member 49 is added between the bottom of each battery cell 01 and the bottom plate 414 of the shell, the polarity terminals 45 of each battery cell 01 extend through the corresponding electrode terminal clearance holes 214.

In step 3, the electrode terminal clearance holes 214 and the surrounding portions of the polarity terminal of the housing of the battery cell 01 are sealed. The two end plates 212 are welded to the two opposite open ends of the cylindrical body 211.

In step 4, the external force or the electrolyte is used to open the sealing assembly 410. This allows the electrolyte region in the inner cavity of the electrolyte shared chamber 04 to be in communication with the electrolyte region in the inner cavity of each battery cell 01, and the gas region in the inner cavity of the gas chamber 05 to be in communication with the gas region in the inner cavity of each battery cell 01.

After the inner cavity of each battery cell 01 is in communication with the electrolyte shared chamber 04, the electrolytes in the inner cavity of each battery cell 01 are in communication with each other via the electrolyte shared chamber 04. To prevent electrolyte interruption, electrolyte may be injected into the electrolyte shared chamber 04 after communication of the inner cavity of each battery cell 01 with the electrolyte shared chamber 04, ensuring continuity of the electrolyte.

Next, the heat exchange pipe assembly is fixed in the through groove in the polarity terminals 45. The first electrical connector 421, as shown in Fig. 23, is used to connect all the battery cells 01 in parallel. This step may also be performed before step 4.

To form a more complete SEI film and provide the large-capacity battery with more stable cycling performance, after injecting electrolyte into the inner cavities of the battery cells 01 via the electrolyte shared chamber 04, the entire large-capacity battery is subjected to formation.

### Embodiment 10

During long-term use, due to the temperature difference inside and outside the heat exchange pipe 06, condensation may form on the surface. When the condensation accumulates to a certain amount, it may seep into the gap between the polarity terminal 45 and the electrode terminal clearance hole 214, causing electrical conductivity between the polarity terminal 45 and the shell 03. This may potentially lead to a short circuit in the same battery cell 01.

In this embodiment, the problem above is addressed by optimizing the top structure of the large-capacity battery. An insulating sealing adhesive layer 420 is laid on the top plate 413 of the shell. The electrical connection parts (second end face 452) of the polarity terminal 45 of each battery cell 01 extend beyond the insulating sealing adhesive layer 420 for connection to the first electrical connector 421 or the second electrical connector 422. The inlet end and the outlet end of the heat exchange pipe 06 extend through the insulating sealing adhesive layer 420 to be connected to the liquid cooling equipment. The first electrical connector 421 is used to connect the battery cells 01 in parallel, while the second electrical connector 422 is used for connecting two large-capacity batteries in series, or it may serve as a connector for connecting the large-capacity battery to an external load.

As shown in Fig. 27, in this embodiment, an insulating sealing adhesive layer 420 is laid on the top plate 413 of the shell. As may be seen from the drawing, part of the region of the polarity terminal 45 of each battery cell 01 is covered by the insulating sealing adhesive layer 420. The electrical connection parts (i.e., second end face 452) of the polarity terminal 45 of each battery cell 01 extend out of the insulating sealing adhesive layer 420 and are connected to the first electrical connector 421 and/or the second electrical connector 422. The main body part of the heat exchange pipe 06 is covered by the insulating sealing adhesive layer 420, while the inlet end and the outlet end of the heat exchange pipe 06 extend through the insulating sealing adhesive layer 420 to be connected to the liquid cooling equipment.

In other embodiments, the dimension of the insulating sealing adhesive layer 420 in the z-direction may be smaller, below the main body part of the heat exchange pipe 06, or may cover only part of the main body part of the heat exchange pipe 06. The key point is to ensure that condensation may not enter the gap between the polarity terminal 45 and the electrode terminal clearance hole 214.

The insulating sealing adhesive used in this embodiment is typically a battery potting adhesive commonly used in batteries. For example, organic silicone thermally conductive potting adhesive may be used, which has good sealing, insulation, vibration resistance, heat dissipation, and waterproof functions.

To prevent the insulating sealing adhesive from overflowing, this embodiment also incorporates a glue injection mold around the edges of the top plate 413 of the shell during the glue injection process, ensuring that the insulating adhesive liquid may be smoothly injected. After the injection is completed, removal may be carried out.

Referring to Fig. 28, two first electrical connectors 421 are provided in this embodiment. One of the first electrical connectors 421 is connected to the second end face 452 of the positive-polarity terminal of all the battery cells 01 in the large-capacity battery, while the other first electrical connector 421 is connected to the second end face 452 of the negative-polarity terminal of all the battery cells 01. This configuration ensures that all the battery cells 01 in the large-capacity battery are connected in parallel.

As may be seen from the drawing, in this embodiment, the first electrical connector 421 is made of a metal plate, and materials such as copper, aluminum, or the like may be used. For cost considerations, aluminum is chosen in this embodiment.

The first electrical connector 421 is connected to the polarity terminal 45 of the battery cell 01 using screws or welding. Considering the reliability of the connection, this embodiment uses welding to connect the two components.

In this embodiment, 13 second electrical connectors 422 are fixed to the electrical connection portions of the polarity terminals 45 of each battery cell 01. In other embodiments, the number of second electrical connectors 422 may be determined according to actual needs, and they may be directly connected to the first electrical connector 421.

### Embodiment 11

In the embodiment above, the polarity terminal 45 is directly exposed to the external environment, which presents a signifimayt safety hazard due to the electrified state of the polarity terminal 45 during operation. On the basis of this, as shown in Figs. 29 and 30, in this embodiment, on the basis of the embodiments above, an insulating protective cover 415 is disposed on the top of the large-capacity battery, providing insulation protection for the polarity terminal 45. This avoids potential safety hazards caused by exposure of the polarity terminals 45 during operation of the large-capacity battery, and further avoids foreign objects from the exterior environment from falling into the polarity terminal 45 positions and causing short-circuiting of the large-capacity battery, thereby enhancing the safety of the large-capacity battery.

It is to be noted that if the insulating protective cover 415 completely encloses the polarity terminal 45, it would make electrical connections of such a large-capacity battery more difficult. Therefore, in this embodiment, a narrow slit 4153 is formed in the side wall of the insulating protective cover 415, which is parallel to the xz-plane. This narrow slit 4153 allows the second electrical connector 422 to be connected to the polarity terminal 45, thus achieving an electrical connection.

It is further to be noted that there is a need to form a channel on the side wall of the insulating protective cover 415 for the inlet end and the outlet end of the heat exchange pipe 06 to extend through.

To facilitate the electrical connection process, this embodiment designs the insulating protective cover 415 as a modular structure, as shown in Fig. 30. The structure includes an insulating frame 4151 and an insulating cover plate 4152 that covers the insulating frame 4151. The lower end of the insulating frame 4151 is used to fit with the top of the large-capacity battery and is fixed to the top of the large-capacity battery by screws, adhesive, or other methods. The upper end of the insulating frame 4151 is fitted with the insulating cover plate 4152. A notch is formed on the upper side wall of the insulating frame 4151, which is parallel to the xz-plane. The notch, when combined with the insulating cover plate 4152, forms the narrow slit 4153 above.

During assembly, the insulating frame 4151 may be fixed to the top of the large-capacity battery first. After that, the second electrical connector 422 is connected to the polarity terminal 45 via the narrow slit 4153. After the injection of sealing adhesive, the insulating cover plate 4152 is fixed to the upper end of the insulating frame 4151.

In addition, in Embodiment 10, during the adhesive injection process, to prevent the insulating sealing adhesive from overflowing, an injection mold is required. However, after the injection, the mold needs to be removed, making the process more complicated. Furthermore, during the removal process, there is a possibility of damaging the structure of the insulating sealing adhesive layer 420, which could reduce the sealing reliability.

However, in this embodiment, the insulating frame 4151 of the insulating protective cover 415 may be used as the injection mold. After the injection, no mold removal is required, and this approach also enhances the bonding strength between the insulating frame 4151 and the top of the large-capacity battery.

During the charging and discharging process of the battery cell, a large amount of heat is generated by the battery cell itself. If the temperature of the battery cell is not lowered in a timely manner, the performance of the battery cell may degrade. Currently, the main method used for cooling the battery cells is liquid cooling. When using liquid cooling to cool the battery cell, typically, a heat exchange pipe is used to conduct heat exchange with the battery cell. The heat exchange pipe contains a thermally conductive medium, which connects the heat exchange pipe to a temperature control apparatus. The temperature control apparatus processes the heat transferred by the heat exchange pipe. The temperature control apparatus mainly includes a temperature control machine and a circulation pump. The temperature control machine is the equipment with heating and/or cooling functions, used to heat or cool the medium inside the heat exchange pipe. For example, the temperature control machine may be a heating and cooling unit or a refrigeration unit with a compressor. The circulation pump is mainly used to circulate the thermally conductive medium, thus quickly and effectively handling the heat generated by the battery cell and maintaining the battery cell temperature within the optimal range.

For the mounting of the heat exchange pipe above, it is specifically disposed on the polarity terminal of the battery cell to directly exchange heat with the polarity terminal of the battery cell. The polarity terminal of the battery cell may be the electrode terminal of the battery cell. When used in a large-capacity battery with a shell, to ensure smooth extension of the electrode terminals of the battery cells, as the polarity terminals, through the electrode terminal clearance hole, an additional electrode terminal adapter member may be attached to the electrode terminal of the battery cell. This combined structure of the electrode terminal of the battery cell and the electrode terminal adapter member serves as the polarity terminal of the battery cell. To ensure the heat exchange efficiency between the heat exchange pipe and the battery cell, the heat exchange pipe above is generally made of a metal pipe with good heat transfer performance. The thermally conductive medium inside the heat exchange pipe is typically a liquid medium, such as water, ethylene glycol/water, propylene glycol/water, methanol/water, ethanol/water, calcium formate/water, and the like.

When the heat exchange pipe above is in contact with the polarity terminal of the battery cell for heat exchange, insulation needs to be provided between the heat exchange pipe and the polarity terminal of the battery cell. If the insulation performance between the two is poor, mounting the heat exchange pipe onto the polarity terminal of the battery cell may cause a short circuit in the battery cell, creating a safety hazard. On the basis of this, the present invention provides a heat exchange pipe assembly. This heat exchange pipe assembly features a dual-layer insulation heat exchange pipe, which, when mounted onto the polarity terminal of the battery cell, ensures reliable insulation performance during heat exchange between the polarity terminal of the battery cell and the heat exchange pipe.

### Embodiment 12

As shown in Figs. 31 and 32, this embodiment provides a heat exchange pipe assembly. The heat exchange pipe assembly 36 specially includes a heat exchange pipe 06. The heat exchange pipe 06 is a metal pipe and is provided with an insulating layer 312 and an insulating sleeve 313. The insulating layer 312 is formed on a side wall of the heat exchange pipe 06, and the insulating sleeve 313 is disposed over the heat exchange pipe 06 having the insulating layer 312. The insulating layer 312 and the insulating sleeve 313 are disposed on the side wall of the heat exchange pipe 06 above, which is in contact with the polarity terminal of the battery cell, to form a dual-insulation structure. The configuration of this dual-insulation structure ensures that even if one of the insulating layer 312 or the insulating sleeve 313 is damaged during heat exchange between the heat exchange pipe 06 and the polarity terminal of the battery cell when the two is in contact, reliable insulation performance between the heat exchange pipe 06 and the polarity terminal of the battery cell is still maintained, thereby enhancing the safety of the battery cell during use. The following provides a detailed description of the specific structure of the heat exchange pipe assembly 36 formed by the heat exchange pipe 06, the insulating layer 312, and the insulating sleeve 313.

The heat exchange pipe 06 above is a pipe with heat exchange functionality, primarily in contact with the polarity terminal of the battery cell for heat exchange with the polarity terminal of the battery cell. The shape of the heat exchange pipe 06 is not strictly specified, as long as it may make contact with the polarity terminal of the battery cell for heat exchange. For example, it may be a square pipe, an elliptical pipe, a round pipe, etc. In this embodiment, the heat exchange pipe 06 is preferably a round pipe, as round pipes are easy to mount and may be made from existing metal pipes, making them relatively low in cost.

In this embodiment, the heat exchange pipe 06 is specifically made from a metal pipe with good thermal conductivity performance, such as an aluminum pipe, a copper pipe, or the like. Preferably, the heat exchange pipe 06 above is made from an aluminum pipe, as it offers both a good heat transfer effect and a relatively low cost. To ensure a heat transfer effect, the thinner the wall thickness of the aluminum pipe, the better. However, if the wall thickness of the aluminum pipe is too thin, the aluminum pipe becomes relatively soft, making it susceptible to bending and damage during mounting. Therefore, in this embodiment, the wall thickness of the aluminum pipe is preferably 0.5 mm to 1 mm. The aluminum pipe with this wall thickness ensures that the heat exchange pipe has good heat transfer performance while maintaining mounting reliability and helps avoid the risk of bending or damage that may occur with thinner-walled heat exchange pipes. In practical use, the diameter of the heat exchange pipe 06 is typically 10 mm to 20 mm.

In the heat exchange pipe assembly of this embodiment, the insulating layer 312 is formed on the side wall of the heat exchange pipe 06 and is of an integral structure with the heat exchange pipe 06. This may be achieved through the following methods:
First method: A ceramic coating, such as a high-temperature electrical insulating coating, is formed on the side wall of the heat exchange pipe 06 to create the insulating layer 312. The ceramic coating may be boron nitride, alumina, or copper fluoride. However, this method results in an insulating layer 312 that is prone to detachment, and the processing cost is relatively high.

Second method: An insulation material (such as insulating paint or the like) is applied to the surface of the side wall of the heat exchange pipe 06 to form the insulating layer 312. This method is easy to process and implement, and has a lower processing cost.

Third method: The heat exchange pipe 06 is subjected to oxidation treatment to form the insulating layer 312. Oxidation treatment involves a chemical reaction between the metal surface and oxygen, forming an oxide film that enhances the insulation performance of the metal surface. For example, an electrochemical oxidation method may be used. In particular, the heat exchange pipe 06 is subjected to oxidation treatment to form a hard oxide layer. The insulating layer 312 formed by this method is less likely to detach and provides relatively better insulation performance.

The thicker the hard oxide layer formed by oxidation treatment, the better the insulation, but this will reduce heat transfer performance. In this embodiment, the thickness of the hard oxide layer above is preferably 20 µm to 50 µm. The hard oxide layer with this thickness ensures both good insulation performance and optimal heat transfer performance of the side wall of the heat exchange pipe 06.

In this embodiment, to ensure the reliability of insulation, an insulating sleeve 313 is disposed on the outer side of the heat exchange pipe 06 with the insulating layer 312 described above, so that a double insulation is formed on the outer wall of the heat exchange pipe 06.

The insulating sleeve 313 above is specifically made from an insulation material with good heat transfer performance, so it provides excellent insulation performance while maintaining good heat transfer performance. In this embodiment, the insulating sleeve 313 is made from a thermally conductive plastic sleeve or thermally conductive rubber sleeve, with both excellent insulation performance and thermal conductivity performance, for example, a thermally conductive silicone sleeve. The thickness of the insulating sleeve is ideally thinner for better heat transfer performance. However, while ensuring its heat transfer performance, the insulation performance also needs to be guaranteed. The insulation performance is more reliable with a thicker insulating sleeve. After balancing thermal conductivity performance and insulation performance, the thickness of the insulating sleeve 313 in this embodiment is preferably 0.5 m to 1.5 m, with the most preferred thickness being 1 m. This thickness ensures excellent insulation performance while maintaining good heat transfer performance. The cross-sectional shape of the insulating sleeve 313 may be circular, U-shaped, or C-shaped, as long as it may fit over the heat exchange pipe 06 with the insulating layer 312, providing insulation at the point where the heat exchange pipe 06 contacts the polarity terminal of the battery cell. Moreover, it is preferable for the cross-sectional shape of the insulating sleeve 313 above to match the cross-sectional shape of the heat exchange pipe 06. This ensures that the insulating sleeve 313 fits snugly over the heat exchange pipe 06, thereby enhancing the thermal conductivity performance of the heat exchange pipe 06.

When the insulating sleeve 313 above is mounted and fitted onto the heat exchange pipe 06, the dimension of the insulating sleeve 313 is configured slightly smaller than the dimension of the heat exchange pipe 06, so that the insulating sleeve 313 tightly fits onto the heat exchange pipe 06 with the insulating layer 312. Alternatively, the insulating sleeve 313 may also be sleeved over the heat exchange pipe 06 with the insulating layer 312 by heat shrinking. In this embodiment, the preferred method is to sleeve the insulating sleeve 313 onto the heat exchange pipe 06 with the insulating layer 312 by heat shrinking. For example, a PTFE sleeve or silicone sleeve may be heat-shrunk onto an aluminum pipe with a hard oxide layer to form a PTFE heat-shrink aluminum pipe or a silicone heat-shrink aluminum pipe. This mounting method ensures that there is almost no heat transfer gap between the insulating sleeve 313 and the heat exchange pipe 06, thereby enhancing the heat transfer effect of the insulating sleeve 313.

The heat exchange pipe assembly 36 formed by the various insulating layers 312 and insulating sleeves 313 described above may include: a copper pipe with a spray-coated insulating paint, covered with a heat-shrinkable PTFE pipe; a hard oxide aluminum pipe with a thermally conductive rubber pipe; a hard oxide aluminum pipe surface covered with a heat-shrinkable PTFE pipe; or an aluminum pipe with a hard oxide layer covered by a heat-shrinkable silicone sleeve. Whichever method is employed, it ensures that the heat exchange pipe 06 and the polarity terminal maintain effective insulation during mounting and subsequent use.

When configuring the insulating layer 312 and insulating sleeve 313 on the heat exchange pipe 06 above, the insulating layer 312 and insulating sleeve 313 may be disposed only on the side walls of the heat exchange pipe 06 in contact with the polarity terminals of the battery cells, or the insulating layer 312 and insulating sleeve 313 may be disposed on the entire heat exchange pipe 06. The configuration of the insulating layer 312 and the insulating sleeve 313 is illustrated below in an example where the heat exchange pipe 06 is a round pipe, and the round pipe performs heat exchange with a plurality of polarity terminals by a semi-embedded mounting method:
First, an insulating layer 312 and an insulating sleeve 313 are disposed on part of the side wall of the heat exchange pipe 06.
1) The insulating layer 312 and the insulating sleeve 313 are disposed only on the side wall of the heat exchange pipe 06 that is in contact with the polarity terminal of the battery cell, leaving the non-contact parts untreated. For example, the insulating layers 312 are spaced apart along the bottom of the side wall of the heat exchange pipe 06, with a plurality of C-shaped insulating sleeves 313 nested.
2) A semi-cylindrical insulating layer 312 is disposed along the bottom of the entire side wall of the heat exchange pipe 06, with a longer C-shaped insulating sleeve 313 nested.
3) A plurality of annular insulating layers 312 are spaced apart along the side wall of the heat exchange pipe 06 (the spacing corresponding to the distance between the polarity terminals of each battery cell), with a plurality of circular insulating sleeves 313 nested.
4) As shown in Fig. 32, the insulating layer 312 is disposed along the entire side wall of the heat exchange pipe 06, but only a plurality of circular insulating sleeves 313 are sleeved over the portions in contact with the polarity terminals of the battery cells.

In the configurations above, the process of forming the insulating layer 312 is relatively complicated. For example, when forming a hard oxide layer on the aluminum pipe, the non-insulated parts of the aluminum pipe need to be covered, and then the aluminum pipe is placed in a treatment liquid for processing, which adds complexity to the processing procedure. Moreover, this method requires the production of a plurality of insulating sleeves 313, and their mounting onto the heat exchange pipe 06 may be cumbersome.

In addition, the dual-insulated heat exchange pipe 06 formed by this method needs to be carefully positioned when mounted with the polarity terminal of the battery cell to avoid the non-insulated portion of the heat exchange pipe 06 from connecting to the polarity terminal of the battery cell, which could pose a short-circuit risk.

Second, as shown in Fig. 31, the insulating layer 312 is disposed along the entire heat exchange pipe 06, with an insulating sleeve 313 fitted.

This configuration not only simplifies the forming and mounting of the insulating layer 312 and the insulating sleeve 313 but also ensures that when the heat exchange pipe 06 is mounted with the polarity terminals of the battery cells, there is no need to consider mounting errors between the insulating layer 312 and the polarity terminals of the battery cells, and between the insulating sleeve 313 and the polarity terminals of the battery cells. As a result, the on-site mounting of the heat exchange pipe is more convenient.

### Embodiment 13

As shown in Figs. 33 to 35, this embodiment provides a large-capacity battery, which includes a plurality of battery cells 01 connected in parallel and a shell 03. Each battery cell 01 is mounted inside the shell 03. Electrode terminal clearance holes 214 are disposed on the top of the shell 03, which allow the electrode terminals of each battery cell 01 to extend through. Moreover, a shared chamber is disposed in the shell 03 to allow communication between at least one of the gas region and electrolyte region of the battery cells 01 above. In this embodiment, the structure of the large-capacity battery is illustrated in an example where the battery cell 01 is a prismatic battery. The battery cell 01 includes a battery housing and an electrode assembly disposed within the battery housing. The battery housing includes an upper cover plate, a lower cover plate, and a cylindrical body. The upper cover plate is provided with a positive electrode terminal and a negative electrode terminal for current extraction from the battery cell 01. The specific structure of the large-capacity battery is as follows:
1) Each battery cell is mounted inside the shell, which includes an outer cylindrical body, an upper cover, and a lower cover. Both the top and bottom of the outer cylindrical body are open. The upper cover is sealed and fixed (welded) to the top of the outer cylindrical body, and electrode terminal clearance holes are formed in the upper cover to allow the polarity terminals of each battery cell to extend through. The lower cover is sealed and fixed (welded) to the bottom of the outer cylindrical body, and a shared chamber is disposed on the lower cover.
2) As shown in Figs. 33 to 35, each battery cell 01 is mounted inside the shell 03. The shell 03 includes an outer cylindrical body, a front cover, and a rear cover. Both the front portion and the rear portion of the outer cylindrical body are open. The front cover is sealed and fixed (welded) to the front portion of the outer cylindrical body, and the rear cover is sealed and fixed (welded) to the rear portion of the outer cylindrical body. Electrode terminal clearance holes 214 are formed in the top of the outer cylindrical body to allow the electrode terminals of each battery cell 01 to extend through. A shared chamber is disposed at the bottom of the outer cylindrical body.
3) Each battery cell is mounted inside the shell, which includes a U-shaped housing, a first cover plate, a third cover plate, and a second cover plate. The first cover plate and the third cover plate cover the two opposite open ends of the U-shaped housing, respectively. The second cover plate covers the top open end of the U-shaped housing and is sealed to the open end. Electrode terminal clearance holes are formed in the second cover plate to allow the polarity terminals of each battery cell to extend through. A shared chamber is disposed at the bottom of the U-shaped housing.

In the large-capacity battery above, after the battery cells 01 are mounted into the shell 03, and the electrode terminals of each battery cell 01 extend through the electrode terminal clearance holes 214, due to the height limitation of the electrode terminals of the existing battery cell 01, they may not be reliably connected to the heat exchange pipe assembly 36. Therefore, an electrode terminal adapter member 8 is connected to the electrode terminal 321 of each battery cell 01. The electrode terminal adapter member 8 serves as the polarity terminal of each battery cell 01. In this case, the heat exchange pipe assembly 36 is disposed on the polarity terminal of each battery cell 01 to transfer the heat generated by each battery cell 01. During the connection process, through grooves or through holes are disposed in the electrode terminal adapter member 8 of each battery cell 01. The through grooves in the electrode terminal adapter member 8 of each battery cell 01 form a heat transfer groove disposed along the direction of arrangement of the battery cells 01. The heat exchange pipe assembly 36 is then inserted into the two heat transfer grooves. Alternatively, the through holes in the electrode terminal adapter member 8 of each battery cell 01 are coaxially disposed, allowing the heat exchange pipe assembly 36 to pass through the through holes sequentially.

When a plurality of large-capacity batteries above are assembled into an energy storage system, the temperature of all the large-capacity batteries in the energy storage system is controlled by a temperature control system. The energy storage system includes a plurality of battery packs, and each battery pack includes a plurality of large-capacity batteries connected in series. The temperature control system includes the heat exchange pipe assembly 36, a secondary manifold, a primary manifold, and a temperature control apparatus. The heat exchange pipe assembly 36 is mounted on the polarity terminal of each battery cell 01, and the heat exchange pipe 06 includes a thermally conductive medium that handles the heat generated by the battery cells in the large-capacity battery. The large-capacity batteries in each battery pack are connected in parallel to the secondary manifold via two quick-connect joints. The secondary manifolds of a plurality of battery packs are connected in parallel to the primary manifold, which is then connected to the temperature control apparatus.

### Embodiment 14

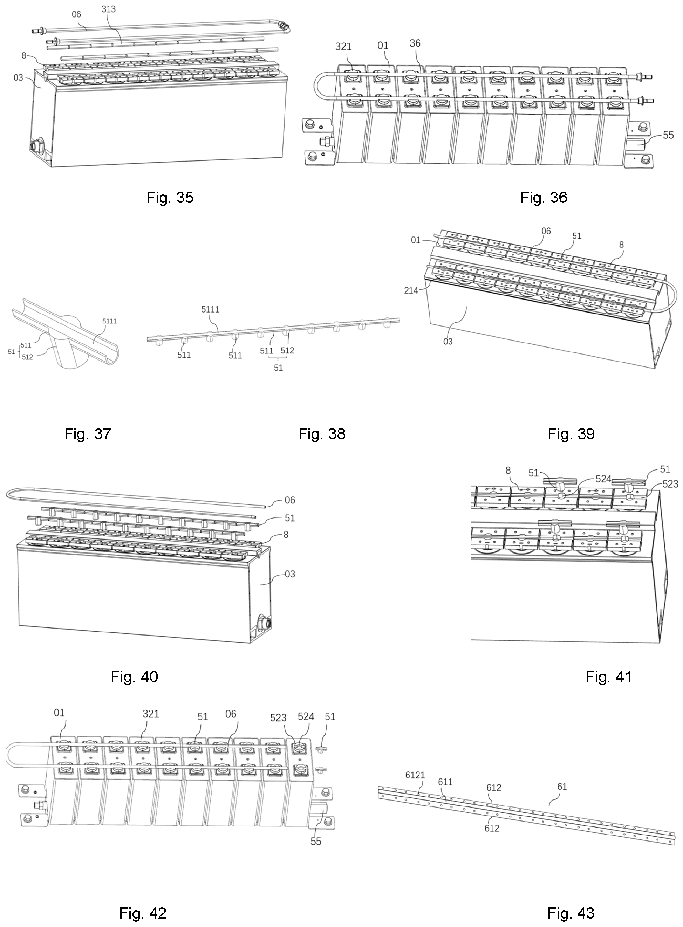

As shown in Fig. 36, this embodiment provides a large-capacity battery, which includes a plurality of battery cells 01 connected in parallel and a hollow component 55. Communication between at least one of the gas region and electrolyte region of the battery cells 01 is achieved via the hollow component 55. In this embodiment, the battery cell 01 is a prismatic battery, and includes a battery housing and an electrode assembly disposed within the battery housing. The battery housing includes an upper cover plate, a lower cover plate, and a cylindrical body. The upper cover plate is provided with a positive electrode terminal and a negative electrode terminal for current extraction from the battery cell 01. The specific structure of the large-capacity battery is as follows:
1) As shown in Fig. 36, the battery cells 01 are connected by a sub-piping system disposed on the lower cover plate of each battery cell 01, forming the hollow component 55. The inner cavity of the hollow component 55 forms a shared chamber, allowing the battery cells 01 to be within the same electrolyte system. For details, refer to patent CN219144456U.
2) Openings are disposed in the battery housing of each battery cell, and the hollow component is the main conduit. The main conduit is connected to the openings in the battery housing of each battery cell via branch lines. The inner cavity of the hollow component forms a shared chamber, allowing the battery cells to be within the same electrolyte system. For details, refer to patent CN218957802U.
3) Openings are disposed in the battery housing of each battery cell, and the hollow component is a modular structure, mainly including a hollow box with an open end and a cover plate to cover the open end. The inner cavity of the hollow component 55 forms a shared chamber, allowing the battery cells to be within the same electrolyte system. For details, refer to patent CN116111201A.

In the large-capacity battery above, the heat exchange pipe assembly 36 is disposed on the polarity terminal of each battery cell 01 to transfer the heat generated by each battery cell 01. In this embodiment, the polarity terminal is the electrode terminal 321 of each battery cell 01. When the heat exchange pipe assembly 36 is connected to the electrode terminal 321 of each battery cell 01, through grooves or through holes are disposed in the positive electrode terminal and the negative electrode terminal of each battery cell 01. The through grooves in the polarity terminal of each battery cell 01 form a heat transfer groove disposed along the direction of arrangement of the battery cells 01. The two heat exchange pipe assemblies 36 are then inserted into the two heat transfer grooves formed by the positive electrode terminal and the negative electrode terminal. Alternatively, the through holes in the electrode terminal 321 of each battery cell 01 are coaxially disposed, allowing the heat exchange pipe assembly 36 to pass through the through holes sequentially.

When a plurality of large-capacity batteries above are assembled into an energy storage system, the temperature of all the large-capacity batteries in the energy storage system is controlled by a temperature control system. The energy storage system includes a plurality of battery packs, and each battery pack includes a plurality of large-capacity batteries connected in series. The temperature control system includes the heat exchange pipe assembly 36, a secondary manifold, a primary manifold, and a temperature control apparatus. The heat exchange pipe assembly 36 is directly mounted on the polarity terminal of each battery cell 01, and the heat exchange pipe 06 includes a thermally conductive medium that handles the heat generated by the battery cells in the large-capacity battery. The large-capacity batteries in each battery pack are connected in parallel to the secondary manifold via two quick-connect joints. The secondary manifolds of a plurality of battery packs are connected in parallel to the primary manifold, which is then connected to the temperature control apparatus.

During the charging and discharging process of the battery, a large amount of heat is generated by the battery itself. If the temperature of the battery is not lowered in a timely manner, the performance of the battery may degrade. Currently, the main method used for cooling the batteries is liquid cooling. When using liquid cooling to cool the battery, typically, a heat exchange pipe is used to conduct heat exchange with the battery. The heat exchange pipe contains a thermally conductive medium, which connects the heat exchange pipe to the temperature control apparatus. The temperature control apparatus processes the heat transferred by the heat exchange pipe. The temperature control apparatus mainly includes a temperature control machine and a circulation pump. The temperature control machine is the equipment with heating and/or cooling functions, used to heat or cool the thermally conductive medium inside the heat exchange pipe. For example, the temperature control machine may be a heating and cooling unit or a refrigeration unit with a compressor. The circulation pump is mainly used to circulate the thermally conductive medium in the heat exchange pipe, thus quickly and effectively handling the heat generated by the battery and maintaining the battery temperature within the optimal range.

The heat exchange pipe above performs heat exchange with the battery. The heat exchange pipe is primarily disposed on the polarity terminal of the battery for direct heat exchange with the polarity terminal. The polarity terminal above may be the electrode terminal of the battery cell. When used in a large-capacity battery with a shell, to ensure smooth extension of the electrode terminals of the battery cells through the electrode terminal clearance hole, an additional electrode terminal adapter member may be attached to the electrode terminal of the battery cell. In this case, the polarity terminal of each battery cell is the electrode terminal adapter member. To ensure the heat exchange efficiency between the heat exchange pipe and the polarity terminal, the heat exchange pipe above is generally made of a metal pipe with good heat transfer performance. The thermally conductive medium inside the metal pipe is typically a liquid medium, such as water, ethylene glycol/water, propylene glycol/water, methanol/water, ethanol/water, calcium formate/water, and the like. When the heat exchange pipe above is in contact with the polarity terminal, it is not only necessary to ensure good insulation performance between the heat exchange pipe and the polarity terminal, but also to achieve excellent thermal conductivity between the heat exchange pipe and the polarity terminal. On the basis of this, the present invention provides an insulating heat-conducting device. This insulating heat-conducting device ensures excellent insulation performance between the heat exchange pipe and the polarity terminal, while also enabling superior heat exchange performance between the heat exchange pipe and the polarity terminal via a plurality of heat exchange zones.

### Embodiment 15

As shown in Figs. 37 and 38, this embodiment provides a heat exchange pipe assembly, which includes a heat exchange pipe and an insulating heat-conducting device. The insulating heat-conducting device 51 includes a heat-conducting rod 511 and N heat-conducting columns 512, wherein N is an integer greater than or equal to 1. The heat-conducting rod 511 is an insulating member configured to be embedded in the first through groove 523 of the polarity terminal, allowing for heat exchange with the polarity terminal. Moreover, the heat-conducting columns 512 are inserted into the blind holes 524 of the polarity terminal, facilitating further heat exchange with the polarity terminal. In addition, the heat-conducting rod 511 above is provided with a mounting portion along its axial direction for the mounting of the heat exchange pipe 06. This mounting portion may be a second through groove 5111 or a through hole. The second through groove 5111 or the through hole extends axially through the heat-conducting rod 511. If the mounting portion is a second through groove 5111, it facilitates the mounting of the heat exchange pipe. If the mounting portion is a through hole, it increases the area of the heat exchange zone between the heat-conducting rod 511 and the heat exchange pipe 06, improving the heat exchange effect.

Since the insulating heat-conducting device 51 above includes a heat-conducting rod 511 and N heat-conducting columns 512 disposed perpendicular to the heat-conducting rod 511, when the insulating heat-conducting device 51 cooperates with the polarity terminal, the heat generated by the polarity terminal is exchanged with the insulating heat-conducting device 51 via a plurality of heat exchange zones. The first heat exchange zone is the region where the heat-conducting rod 511 is in contact with the first through groove 523 of the polarity terminal. This zone primarily facilitates heat exchange between the top of the polarity terminal and the heat-conducting rod 511. The second heat exchange zone is the region where the heat-conducting columns 512 are in contact with the blind holes 524 of the polarity terminal. This zone mainly allows heat exchange between the center of the polarity terminal and the heat-conducting columns 512. The two heat exchange zones increase the heat exchange area between the insulating heat-conducting device 51 and the polarity terminal, thereby enhancing the heat exchange efficiency between the heat exchange pipe and the polarity terminal. This, in turn, enhances the temperature control effect of the battery cell 01.

The number of heat-conducting columns 512 above on the heat-conducting rod 511 may be adjusted according to actual requirements, ranging from 1, 2, ... to N columns, with the specific number corresponding to the number of battery cells 01 that the insulating heat-conducting device 51 is designed to cooperate with. In practical use, as shown in Fig. 37, if there is only one heat-conducting column 512, the insulating heat-conducting device 51 may achieve thermal insulation and conduction between a single battery cell 01 and the heat exchange pipe 06. As shown in Fig. 38, when there are a plurality of heat-conducting columns 512, the insulating heat-conducting device 51 may achieve thermal insulation and conduction between a plurality of battery cells 01 and the heat exchange pipe 06.

It can be seen from the structure above that the insulating heat-conducting device 51 may not only enable thermal insulation and conduction between a single battery cell 01 and the heat exchange pipe 06, but also between a plurality of battery cells 01 and the heat exchange pipe 06. It is to be noted that the insulating heat-conducting device 51 includes a plurality of heat-conducting columns 512. When cooperating with the polarity terminals of a plurality of battery cells 01 to achieve thermal insulation and conduction, it is crucial to strictly control the arrangement dimensions of the heat-conducting columns 512 on the heat-conducting rod 511. If not properly controlled, there could be problems during the assembly of a plurality of battery cells 01, such as part of the heat-conducting columns 512 not being able to fit into the blind hole 524. Moreover, when a plurality of heat-conducting columns 512 are fabricated on the heat-conducting rod 511, the manufacturing cost and processing difficulty are relatively high.

Therefore, in this embodiment, the preferred solution is to dispose only one heat-conducting column 512 on each heat-conducting rod 511, which is used in conjunction with a single polarity terminal. In this case, to achieve thermal insulation and conduction between a plurality of polarity terminals and the heat exchange pipe 06, one insulating heat-conducting device 51 may be disposed on each polarity terminal.

When mounting the insulating heat-conducting device 51 in this embodiment, the heat-conducting rod 511 is specifically matched with the first through groove 523 of the polarity terminal. To ensure thermal conduction efficiency, the cross-sectional shape of the heat-conducting rod 511 is preferably consistent with the cross-sectional shape of the first through groove 523 in the polarity terminal. Moreover, the length of the heat-conducting rod 511 needs to be no shorter than the length of the first through groove 523 in the polarity terminal to ensure that the heat exchange pipe 06 does not come into contact with the polarity terminals of other batteries.

When the heat-conducting rod 511 above is provided with a second through groove 5111 for placing the heat exchange pipe 06, the second through groove 5111 is designed to extend along the length direction of the heat-conducting rod 511. The cross-sectional shape of the second through groove 5111 may be designed as either U-shaped or C-shaped. The C-shaped second through groove has natural tension at the opening, which facilitates the mounting of the heat exchange pipe 06. Moreover, this is conducive to securely clamping the heat exchange pipe 06 within the second through groove, thereby enhancing the thermal conductivity effect of the heat exchange pipe 06. In addition, to ensure optimal heat exchange effect between the heat-conducting rod 511 and the polarity terminal, after machining the second through groove 5111 or through hole in the heat-conducting rod 511, the remaining body of the groove or wall thickness is to be kept relatively thin. A thickness range of 0.5 mm to 1 mm is ideal.

In this embodiment, the insulating heat-conducting device 51 is mounted with the heat-conducting column 512 inserted into the blind hole 524 of the polarity terminal, enabling heat exchange at the center of the polarity terminal. The heat-conducting column 512 is specifically disposed perpendicular to the heat-conducting rod 511. The heat-conducting column 512 may be in the form of a cylinder, a rectangular column, or the like. To ensure thermal conduction efficiency, the shape of the heat-conducting column 512 is preferably consistent with the shape of the blind hole 524 in the polarity terminal. Moreover, the heat-conducting column 512 and the blind hole 524 are in a transition or interference fit, ensuring the heat-conducting column 512 is tightly inserted into the blind hole 524 for optimal heat exchange between the heat-conducting column 512 and the center of the polarity terminal. To balance thermal conductivity and ease of mounting, a transition fit between the heat-conducting column 512 and the blind hole 524 is preferred.

The heat-conducting rod 511 and the heat-conducting column 512 described above may be processed as a single integrated component or separately manufactured and then assembled. For an integral structure, methods such as 3D printing may be used. In a modular structure, a slot resembling the cross-section of the heat-conducting rod 511 may be machined on the top of the heat-conducting column 512, allowing the bottom of the heat-conducting rod 511 to securely fit into the slot. In this embodiment, the preferred solution is to integrate the heat-conducting rod 511 and heat-conducting column 512 into a single component, that is, the heat-conducting rod 511 and heat-conducting column 512 are of an integral structure. This integral member is easier to manufacture and mount, and there is no heat transfer gap between the heat-conducting rod and the heat-conducting column. As a result, the heat transfer effect is superior compared to a modular member.

Since the insulating heat-conducting device 51 according to this embodiment needs to facilitate both heat exchange between the heat exchange pipe 06 and the polarity terminal and ensure reliable insulation between the two, the heat-conducting rod 511 and heat-conducting column 512 described above need to be insulated.

If the heat-conducting rod 511 and the heat-conducting column 512 described above are of an integral structure, insulation may be achieved in the following ways:
First, the entire structure may be made from a thermally conductive insulation material, such as a thermally conductive ceramic material.

Second, the entire structure may be made from a thermally conductive metal with good thermal conductivity performance, and an insulating layer may be formed on the surface of the entire insulating heat-conducting device 51, for example, by spraying insulating paint or performing oxidation treatment to form the insulating layer.

If the heat-conducting rod 511 and the heat-conducting column 512 described above are of a modular structure, insulation may be achieved in the following ways:
First, the heat-conducting rod 511 may be made from a thermally conductive insulation material, and the heat-conducting column 512 may be made from a material with better thermal conductivity performance. For example, the heat-conducting rod 511 may be made from a thermally conductive ceramic material, and the heat-conducting column 512 may be made from a metal with superior thermal conductivity.

Second, both the heat-conducting rod 511 and the heat-conducting column 512 may be made from a thermally conductive insulation material, such as a thermally conductive ceramic material.

### Embodiment 16

This embodiment provides a battery cell 01, which includes a battery housing and an electrode assembly disposed within the battery housing. The battery housing includes an upper cover plate, a lower cover plate, and a cylindrical body. The upper cover plate is provided with electrode terminals for current extraction from the battery cell, including a positive electrode terminal and a negative electrode terminal. In this case, the electrode terminals of the battery cell are the polarity terminals, and these polarity terminals (i.e., electrode terminals) are provided with a first through groove and blind holes. The first through groove extends along the width direction of each battery cell, while the blind holes extend along the height direction of the battery cell and are in communication with the first through groove.

### Embodiment 17

As shown in Figs. 39 to 41, this embodiment provides a large-capacity battery, which includes a shell 03, a plurality of battery cells 01, and an electrode terminal adapter member 8. The plurality of battery cells 01 are connected in parallel, and each battery cell 01 is mounted inside the shell 03. Electrode terminal clearance holes 214 are disposed on the top of the shell 03, which allow the electrode terminals of each battery cell 01 to extend through. The electrode terminals of each battery cell 01 are connected to the electrode terminal adapter member 8 via the electrode terminal clearance holes 214. Moreover, a shared chamber is disposed in the shell 03 to allow communication between at least one of the gas region and electrolyte region of the battery cells 01 above. In this embodiment, the structure of the large-capacity battery is illustrated in an example where the battery cell 01 is a prismatic battery. The battery cell 01 includes a battery housing and an electrode assembly disposed within the battery housing. The battery housing includes an upper cover plate, a lower cover plate, and a cylindrical body. The upper cover plate is provided with a positive electrode terminal and a negative electrode terminal for current extraction from the battery cell 01. The specific structure of the large-capacity battery is as follows:
1) Each battery cell is mounted inside the shell, which includes an outer cylindrical body, an upper cover, and a lower cover. Both the top and bottom of the outer cylindrical body are open. The upper cover is sealed and fixed (welded) to the top of the outer cylindrical body, and electrode terminal clearance holes are formed in the upper cover to allow the polarity terminals of each battery cell to extend through. The lower cover is sealed and fixed (welded) to the bottom of the outer cylindrical body, and a shared chamber is disposed on the lower cover.
2) As shown in Figs. 39 and 40, each battery cell 01 is mounted inside the shell 03. The shell 03 includes an outer cylindrical body, a front cover, and a rear cover. Both the front portion and the rear portion of the outer cylindrical body are open. The front cover is sealed and fixed (welded) to the front portion of the outer cylindrical body, and the rear cover is sealed and fixed (welded) to the rear portion of the outer cylindrical body. Electrode terminal clearance holes 214 are formed in the top of the outer cylindrical body to allow the electrode terminals of each battery cell 01 to extend through. A shared chamber is disposed at the bottom of the outer cylindrical body.
3) Each battery cell is mounted inside the shell, which includes a U-shaped housing, a first cover plate, a third cover plate, and a second cover plate. The first cover plate and the third cover plate cover the two opposite open ends of the U-shaped housing, respectively. The second cover plate covers the top open end of the U-shaped housing and is sealed to the open end. Electrode terminal clearance holes are formed in the second cover plate to allow the polarity terminals of each battery cell to extend through. A shared chamber is disposed at the bottom of the U-shaped housing.

As shown in Fig. 40 and Fig. 41, in the large-capacity battery described above, after the battery cells 01 are mounted within the shell 03, the electrode terminals 321 of each battery cell 01 extend through the electrode terminal clearance holes 214. Due to the limitations in the height of the electrode terminals of the existing battery cells 01, a reliable parallel connection of a plurality of battery cells may not be achieved, nor may the heat exchange pipe 06 be mounted. Therefore, an electrode terminal adapter member 8 is connected to the electrode terminals of the battery cells 01. In this case, the electrode terminal adapter member 8 is the polarity terminal for each battery cell. A first through groove 523 and blind holes 524 are disposed in the polarity terminal (i.e., the electrode terminal adapter member 8) of each battery cell 01. The first through groove 523 extends in the direction of the arrangement of the battery cells 01, while the blind holes 524 extend in the height direction of the battery cell 01 and are in communication with the first through groove 523. When the electrode terminal adapter member 8 is connected to the electrode terminal of the battery cell 01, the bottom of the blind hole may be welded to the electrode terminal 321 of the battery cell 01 by fusion welding to ensure a connection.

When performing temperature control for the battery cells in the large-capacity battery above, the insulating heat-conducting device 51 from Embodiment 15 is disposed on the electrode terminal adapter member 8 of each battery cell 01. The heat-conducting rod 511 and the heat-conducting columns 512 are inserted into the first through groove 523 and the blind hole 524, respectively. Moreover, the heat exchange pipe 06 is inserted into the first through groove 523 of the insulating heat-conducting device 51 to manage the heat generated at the electrode terminals 321 of each battery cell 01. In addition, thermally conductive adhesive may be applied between the heat-conducting rod 511 and the first through groove 523, as well as between the heat-conducting column 512 and the blind hole 524, to enhance heat transfer efficiency.

When a plurality of large-capacity batteries above are assembled into an energy storage system, the temperature of all the large-capacity batteries in the energy storage system is controlled by a temperature control system. The energy storage system includes a plurality of battery packs, and each battery pack includes a plurality of large-capacity batteries connected in series. The temperature control system includes the heat exchange pipe 06, a secondary manifold, a primary manifold, and a temperature control apparatus. The heat exchange pipe 06 is mounted on the insulating heat-conducting device 51. The insulating heat-conducting device 51 is mounted on the electrode terminal adapter member 8 of each battery cell 01, and the heat exchange pipe 06 includes a heat transfer medium that handles the heat generated by the battery cells in the large-capacity battery. The heat exchange pipes 06 on the large-capacity batteries in each battery pack are connected in parallel to the secondary manifold via two quick-connect joints. The secondary manifolds of a plurality of battery packs are connected in parallel to the primary manifold, which is then connected to the temperature control apparatus.

### Embodiment 18

As shown in Fig. 42, this embodiment provides a large-capacity battery, which includes a plurality of battery cells 01 connected in parallel and a hollow component 55. Communication between at least one of the gas region and electrolyte region of the battery cells 01 is achieved via the hollow component 55. The specific structure of the large-capacity battery is as follows:
1) As shown in Fig. 42, the battery cells 01 are connected by a sub-piping system disposed on the lower cover plate of each battery cell 01, forming the hollow component 55. The inner cavity of the hollow component 55 forms a shared chamber, allowing the battery cells 01 to be within the same electrolyte system. For details, refer to patent CN219144456U.
2) Openings are disposed in the battery housing of each battery cell, and the hollow component is the main conduit. The main conduit is connected to the openings in the battery housing of each battery cell via branch lines. The inner cavity of the hollow component forms a shared chamber, allowing the battery cells to be within the same electrolyte system. For details, refer to patent CN218957802U.
3) Openings are disposed in the battery housing of each battery cell, and the hollow component is a modular structure, mainly including a hollow box with an open end and a cover plate to cover the open end. The inner cavity of the hollow component forms a shared chamber, allowing the battery cells to be within the same electrolyte system. For details, refer to patent CN116111201A.

The battery cell in this embodiment adopts the battery cell provided in Embodiment 16. A first through groove 523 and blind holes 524 are disposed in the electrode terminal 321 of each battery cell 01. The first through groove 523 extends in the direction of the arrangement of the battery cells 01, while the blind holes 524 extend in the height direction of the battery cell 01 and are in communication with the first through groove 523. The insulating heat-conducting device 51 from Embodiment 15 is disposed on the electrode terminal 321 of each battery cell 01. The heat-conducting rod 511 and the heat-conducting columns 512 are inserted into the first through groove 523 and the blind hole 524, respectively. Moreover, the heat exchange pipe 06 is inserted into the second through groove 5111 of the insulating heat-conducting device 51 to manage the heat generated at the electrode terminals 321 of each battery cell 01. In addition, thermally conductive adhesive may be applied between the heat-conducting rod 511 and the first through groove 523, as well as between the heat-conducting column 512 and the blind hole 524, to enhance heat transfer efficiency.

When a plurality of large-capacity batteries above are assembled into an energy storage system, the temperature of all the large-capacity batteries in the energy storage system is controlled by a temperature control system. The energy storage system includes a plurality of battery packs, and each battery pack includes a plurality of large-capacity batteries connected in series. The temperature control system includes the heat exchange pipe 06, a secondary manifold, a primary manifold, and a temperature control apparatus. The heat exchange pipe 06 is mounted on the insulating heat-conducting device 51. The insulating heat-conducting device 51 is mounted on the electrode terminal of each battery cell 01, and the heat exchange pipe 06 includes a heat transfer medium that handles the heat generated by the battery cells in the large-capacity battery. The heat exchange pipes 06 on the large-capacity batteries in each battery pack are connected in parallel to the secondary manifold via two quick-connect joints. The secondary manifolds of a plurality of battery packs are connected in parallel to the primary manifold, which is then connected to the temperature control apparatus.

During the charging and discharging process of the battery, a large amount of heat is generated by the battery itself. If the temperature of the battery is not lowered in a timely manner, the performance of the battery may degrade. Currently, the main method used for cooling the batteries is liquid cooling. When using liquid cooling to cool the battery, typically, a heat exchange pipe is used to conduct heat exchange with the polarity terminal of the battery. The heat exchange pipe contains a thermally conductive medium, which connects the heat exchange pipe to the temperature control apparatus. The temperature control apparatus processes the heat transferred by the heat exchange pipe to control the temperature of the battery cell within an optimal range. The polarity terminal described above may be either the electrode terminal of the battery cell or an electrode terminal adapter member connected to the electrode terminal of the battery cell. To ensure heat exchange efficiency between the heat exchange pipe and the polarity terminal, the heat exchange pipe described above is generally made of a metal pipe with good heat transfer performance. Therefore, when the heat exchange pipe above is in contact with the polarity terminal, a through groove is typically formed on the polarity terminal, and the heat exchange pipe is mounted within the through groove. In this thermal treatment method, it is necessary to achieve good thermal conductivity between the heat exchange pipe and the polarity terminal.

Embodiments 19 to 21 provide a heat exchange pipe assembly, which includes a heat exchange pipe and a pressing plate. The pressing plate is connected to the polarity terminal of each battery cell, ensuring a reliable parallel connection of a plurality of battery cells. Moreover, the pressing plate, cooperating with the polarity terminal, securely mounts the heat exchange pipe into the through groove of the polarity terminal, enhancing the heat exchange effect between the heat exchange pipe and the polarity terminal. Moreover, the pressing plate is positioned above the heat exchange pipe, providing protection for the heat exchange pipe and the polarity terminal, especially for the insulating pad and insulating sleeve between the heat exchange pipe and the polarity terminal. This enhances the safety of the battery cell during use.

### Embodiment 19

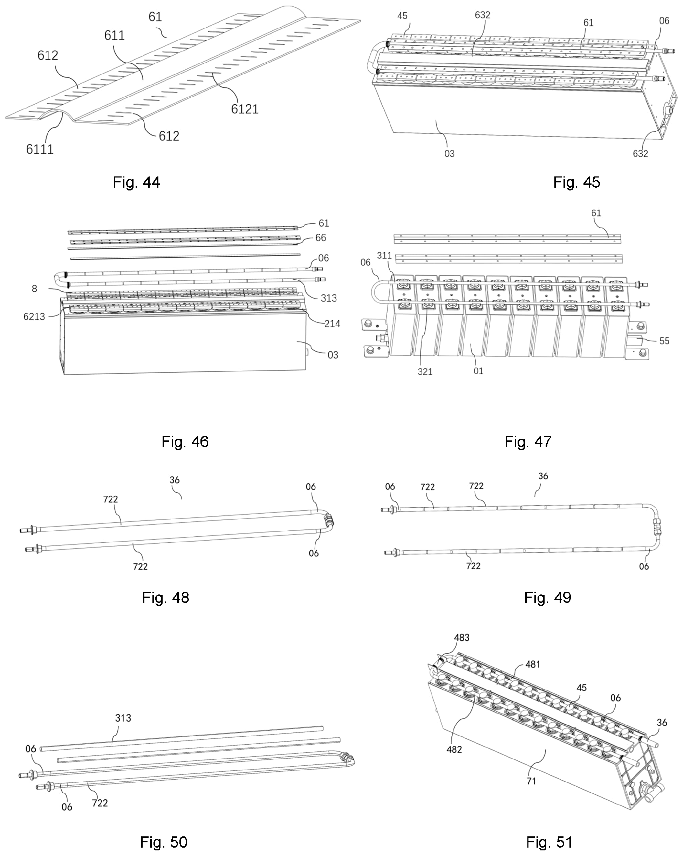

As shown in Fig. 43 to Fig. 44, this embodiment provides a pressing plate 61 which cooperates with the polarity terminal 45, not only achieving a parallel connection between battery cells 01 but also securely pressing the heat exchange pipe 06 into the through groove 6213 of the polarity terminal 45. As shown in Figs. 43 and 44, the pressing plate 61 includes a pressing portion 611 and a fixing portion 612. The bottom of the pressing portion 611 has an arc surface 6111, which is designed to cooperate with the through groove 6213 in the polarity terminal 45, pressing the heat exchange pipe 06 tightly into the through groove 6213. The fixing portion 612 is disposed on two sides of the pressing portion 611, fixing the pressing plate 61 to the top of the polarity terminal 45.

The length of the pressing plate 61 above may be determined according to the number of battery cells 01, and its length is equivalent to the total length of the polarity terminals 45 of all the battery cells 01 in the arrangement direction of the large-capacity battery. After the pressing plate 61 is connected to the polarity terminal 45 of each battery cell 01, it serves two main functions: First, it is connected to the polarity terminals 45 of a plurality of battery cells 01, ensuring a reliable parallel connection between the battery cells 01. Since the pressing plate 61 only needs to be connected to the polarity terminals 45 of the battery cells 01 in the same large-capacity battery, the parallel connection between battery cells 01 is easily achieved. During on-site mounting, adjacent large-capacity batteries or battery modules are connected by separately disposed conductive connection plates. Therefore, the pressing plate does not need to account for mounting errors between adjacent large-capacity batteries or battery modules, making mounting requirements relatively low. Second, the pressing plate 61 tightly presses the heat exchange pipe 06 into the through groove of the polarity terminal 45, ensuring that the heat exchange pipe 06 makes close contact with the through groove 6213 of the polarity terminal 45, with virtually no thermal conduction gap between the two, thereby enhancing the heat exchange effect between the heat exchange pipe 06 and the polarity terminal 45.

As shown in Fig. 44, in this embodiment, the bottom of the pressing portion 611 above has an arc surface 6111, which, after cooperating with the through groove 6213, forms a cross-sectional shape similar to the cross-sectional shape of the heat exchange pipe 06, pressing the heat exchange pipe 06 closely against the through groove 6213 of the polarity terminal 45. The heat exchange pipe 06 above is typically a metal pipe, so the cavity formed between the pressing portion 611 and the through groove 6213 is generally circular in shape. Moreover, since the heat exchange pipe 06 cooperates with the polarity terminal 45 for heat exchange, the side wall of the heat exchange pipe 06 needs to be mostly embedded within the through groove 6213. In this case, the central angle corresponding to the arc surface 6111 of the pressing portion 611 described above is preferably between 90° and 180°. If the central angle corresponding to the arc surface 6111 of the pressing portion 611 is greater than 180°, the contact area between the heat exchange pipe 06 and the through groove 6213 of the polarity terminal 45 is reduced, leading to a poor heat transfer effect. Conversely, if the central angle corresponding to the arc surface 6111 of the pressing portion 611 is less than 90°, the contact area between the pressing plate 61 and the heat exchange pipe 06 becomes smaller, preventing the pressing plate 61 from reliably applying force to the heat exchange pipe 06, resulting in insufficient compression force.

In addition, a distance between a vertex of the arc surface of the pressing portion 611 and the polarity terminal 45 is less than or equal to a maximum dimension by which the heat exchange pipe 06 protrudes from the polarity terminal 45. Since the heat exchange pipe 06 above is typically a round pipe, and the arc surface 6111 of the pressing portion 611 is a circular arc surface, the radius of the arc surface of the pressing portion 611 is preferably smaller than or equal to the radius of the heat exchange pipe 06. This ensures that there is virtually no thermal conduction gap between the heat exchange pipe 06 and the polarity terminal 45, resulting in a tight fit of the heat exchange pipe 06 within the through groove 6213. The heat transfer effect between the heat exchange pipe 06 and the polarity terminal 45 is enhanced, thereby enhancing the heat transfer efficiency.

The pressing plate 61 in this embodiment is generally made of a conductive metal material, such as silver, copper, aluminum, or the like. In this embodiment, the pressing plate 61 is made of copper foil. Copper foil not only has excellent electrical conductivity but also possesses good flexibility, allowing it to tightly press the heat exchange pipe 06 into the through groove of the polarity terminal.

As shown in Fig. 44, in this embodiment, the pressing portion 611 is an arc plate with a uniform wall thickness, and the fixing portion 612 is a flat plate. The arc plate and the flat plates on two sides are of an integral structure, making the structure easy to manufacture and process and convenient for mounting. In production, the pressing plate 61 may be formed by stamping a thin plate or by extrusion forming in one step. In addition, the thickness of the pressing plate 61 is typically between 0.5 mm and 1 mm, which ensures sufficient mounting strength while also providing reliable mounting of the heat exchange pipe 06.

As shown in Figs. 43 and 44, in this embodiment, the fixing portions 612 are provided with through holes 6121 for connection to the polarity terminals 45, allowing the pressing plate 61 to be connected to the polarity terminal 45 via screws. The screw connection method is easier compared to other methods, such as welding, riveting, or adhesive bonding, and provides a simpler structure. Preferably, the screw hole in this embodiment may be configured to be elongated. The elongated hole may compensate for dimensional errors during the parallel connection of a plurality of battery cells 01, ensuring the reliability of the connection.

### Embodiment 20

As shown in Figs. 45 and 46, this embodiment provides a large-capacity battery, which includes a plurality of battery cells 01, a shell 03, a heat exchange pipe 06, and the pressing plate from Embodiment 19. The plurality of battery cells 01 are disposed in parallel within the shell 03, and a shared chamber 632 is disposed in the shell 03 to enable at least one of a gas region and an electrolyte region of each battery cell 01 to be in communication with the other. Electrode terminal clearance holes 214 corresponding to electrode terminals 321 of the battery cells 01 are disposed in the top of the shell 03. The electrode terminals of each battery cell 01 are connected to the electrode terminal adapter member 8 via the electrode terminal clearance holes 214 (the electrode terminal clearance holes 214 serve as the channel for connecting the electrode terminals of the battery cell to the electrode terminal adapter member, where one scenario involves the electrode terminal extending from the shell to be connected to the electrode terminal adapter member, and the other involves the electrode terminal adapter member extending into the shell to be connected to the electrode terminal). In this case, the specific structure of the large-capacity battery is as follows:
1) Each battery cell is mounted inside the shell, which includes an outer cylindrical body, an upper cover, and a lower cover. Both the top and bottom of the outer cylindrical body are open. The upper cover is sealed and fixed (welded) to the top of the outer cylindrical body, and electrode terminal clearance holes are formed in the upper cover to allow the polarity terminals of each battery cell to extend through. The lower cover is sealed and fixed (welded) to the bottom of the outer cylindrical body, and a shared chamber is disposed on the lower cover.
2) Each battery cell is mounted inside the shell, which includes a U-shaped housing, a first cover plate, a third cover plate, and a second cover plate. The first cover plate and the third cover plate cover the two opposite open ends of the U-shaped housing, respectively. The second cover plate covers the top open end of the U-shaped housing and is sealed to the open end. Electrode terminal clearance holes are formed in the second cover plate to allow the polarity terminals of each battery cell to extend through. A shared chamber is disposed at the bottom of the U-shaped housing.
3) As shown in Figs. 45 to 46, each battery cell 01 is mounted inside the shell 03. The shell 03 includes an outer cylindrical body, a front cover, and a rear cover. Both the front portion and the rear portion of the outer cylindrical body are open. The front cover is sealed and fixed (welded) to the front portion of the outer cylindrical body, and the rear cover is sealed and fixed (welded) to the rear portion of the outer cylindrical body. Electrode terminal clearance holes 214 are formed in the top of the outer cylindrical body to allow the electrode terminals 321 of each battery cell 01 to extend through. A shared chamber 632 is disposed at the bottom of the outer cylindrical body.

As shown in Figs. 45 and 46, in the large-capacity battery described above, after the battery cells 01 are mounted within the shell 03, the electrode terminals 321 of each battery cell 01 extend through the electrode terminal clearance holes 214 and are connected to the electrode terminal adapter member 8. The electrode terminal adapter member 8 is provided with a welding hole, which is a blind hole. During the connection process, the bottom of the blind hole is welded to the electrode terminal 321 by fusion welding to establish the connection. Subsequently, the heat exchange pipe 06 is mounted on the electrode terminal adapter member 8 of each battery cell 01, with the heat exchange pipe 06 being inserted into the through groove 6213 of the electrode terminal adapter member 8 of each battery cell 01. Finally, the pressing plate 61 from Embodiment 19 is connected to the electrode terminal adapter member 8 of each battery cell 01. The pressing plate 61 is fixed to the electrode terminal adapter member 8 via screws, ensuring the parallel connection between the battery cells. When a plurality of large-capacity batteries described above are connected in series, a conductive connection plate is connected to the electrode terminal adapter member 8 of part of the battery cells 01, and a series connection between adjacent large-capacity batteries is achieved via the conductive connection plate.

After the pressing plate 61 above is mounted, it also presses the heat exchange pipe 06 tightly into the through groove 6213 of the electrode terminal adapter member 8. The heat exchange pipe 06 is configured to transfer the heat generated by each battery cell 01, thereby controlling the temperature of the large-capacity battery. In addition, if the heat exchange pipe 06 is a metal pipe, an insulating sleeve 313 may be fitted onto the outer wall of the metal pipe, or an insulating layer may be disposed on the outer wall of the metal pipe to provide insulation between the metal pipe, the electrode terminal adapter member 8, and the pressing plate 61. In addition, an insulating pad 66 may be disposed between the pressing plate 61 and the heat exchange pipe 06 described above to further ensure insulation between the metal pipe and the pressing plate 61.

### Embodiment 21

As shown in Fig. 47, this embodiment provides a large-capacity battery, which includes a plurality of battery cells 01, a hollow component 55, a heat exchange pipe 06, and the pressing plate from Embodiment 19. Communication between at least one of the gas region and electrolyte region of the battery cells 01 is achieved via the hollow component 55. In this case, the specific structure of the large-capacity battery is as follows:
1) The battery cells are connected by a sub-piping system disposed on the lower cover plate of each battery cell, forming the hollow component. The inner cavity of the hollow component forms a shared chamber, allowing the battery cells to be within the same electrolyte system. For details, refer to patent CN219144456U.
2) Openings are disposed in the battery housing of each battery cell, and the hollow component is the main conduit. The main conduit is connected to the openings in the battery housing of each battery cell via branch lines. The inner cavity of the hollow component forms a shared chamber, allowing the battery cells to be within the same electrolyte system. For details, refer to patent CN218957802U.
3) As shown in Fig. 47, openings are disposed in the battery housing of each battery cell 01, and the hollow component 55 is a modular structure, mainly including a hollow box with an open end and a cover plate to cover the open end. The inner cavity of the hollow component 55 forms a shared chamber, allowing the battery cells 01 to be within the same electrolyte system. For details, refer to patent CN116111201A.

In the large-capacity battery described above, the heat exchange pipe 06 is mounted on the electrode terminal 321 (i.e., the polarity terminal) of each battery cell 01. The heat exchange pipe 06 is disposed in the through groove 6213 of the electrode terminal 321 of each battery cell 01. Finally, the pressing plate 61 from Embodiment 19 is connected to the electrode terminal 321 of each battery cell 01, and the pressing plate 61 is fixed to the electrode terminal 321 via screws, achieving a parallel connection between the battery cells 01. When a plurality of large-capacity batteries described above are connected in series, a conductive connection plate is connected to the electrode terminal 321 of part of the battery cells 01, and a series connection between adjacent large-capacity batteries is achieved via the conductive connection plate. Alternatively, the conductive connection plate may be connected to the pressing plate 61 to achieve a series connection between adjacent large-capacity batteries via the conductive connection plate.

After the pressing plate 61 above is mounted, it also presses the heat exchange pipe 06 tightly into the through groove 6213 of the electrode terminal 321. The heat exchange pipe 06 is configured to transfer the heat generated by each battery cell 01, thereby controlling the temperature of the large-capacity battery. **In** addition, if the heat exchange pipe 06 is a metal pipe, an insulating sleeve 313 may be fitted onto the outer wall of the metal pipe, or an insulating layer may be disposed on the outer wall of the metal pipe to provide insulation between the metal pipe, the electrode terminal adapter member 8, and the pressing plate 61. In addition, an insulating pad may be disposed between the pressing plate 61 and the heat exchange pipe 06 described above to further ensure insulation between the metal pipe and the pressing plate 61.

During the charging and discharging process of the large-capacity battery, a large amount of heat is generated. If the temperature of the large-capacity battery is not lowered in a timely manner, the performance of the large-capacity battery may degrade. Currently, the main method used for cooling the large-capacity batteries is liquid cooling. When liquid cooling is used to cool the large-capacity battery, heat exchange pipes are generally employed for heat exchange with the battery. The heat exchange pipes contain a thermally conductive medium, which connects the heat exchange pipes to a heat treatment device. The heat treatment device processes the heat in the thermally conductive medium within the heat exchange pipe. The heat treatment device is the equipment with heating and/or cooling functions, configured to increase or decrease the temperature of the thermally conductive medium inside the heat exchange pipe. For example, the heat treatment devices include heaters, air conditioners, refrigerating machines with compressors, cooling units, and the like.

The heat exchange pipe above is mounted on the polarity terminal of the large-capacity battery to directly perform heat exchange with the polarity terminal of the large-capacity battery. To ensure the heat exchange efficiency between the heat exchange pipe and the large-capacity battery cell, the heat exchange pipe above is generally made of a metal pipe with good heat transfer performance. The thermally conductive medium inside the heat exchange pipe is typically a liquid medium, such as water, ethylene glycol/water, propylene glycol/water, methanol/water, ethanol/water, calcium formate/water, and the like. When the heat exchange pipe above is in contact with the polarity terminal for heat exchange, insulation needs to be provided between the heat exchange pipe and the polarity terminal of the large-capacity battery. If the insulation performance between the two is poor, mounting the heat exchange pipe onto the polarity terminal of the large-capacity battery may cause a short circuit in the battery, creating a safety hazard.

On the basis of this, Embodiments 22 to 26 provide a heat exchange pipe assembly. This heat exchange pipe assembly features a heat exchange pipe with an enamel insulating layer, which, when mounted onto the polarity terminal of the large-capacity battery, ensures reliable insulation performance during heat exchange between the polarity terminal of the large-capacity battery and the heat exchange pipe.

### Embodiment 22

As shown in Figs. 48 and 49, this embodiment provides a heat exchange pipe assembly. The heat exchange pipe assembly 36 includes a heat exchange pipe 06. The heat exchange pipe 06 is a metal pipe, and the heat exchange pipe 06 is provided with an enamel insulating layer 722 thereon. The enamel insulating layer 722 is formed on an outer side wall of the heat exchange pipe 06. During the operation of the large-capacity battery 71, the enamel insulating layer 722 ensures reliable insulation between the heat exchange pipe 06 and the polarity terminal 45 of the large-capacity battery 71. Moreover, the enamel insulating layer 722 does not impact the heat exchange performance between the heat exchange pipe 06 and the polarity terminal 45 after the contact. In addition, the enamel insulating layer 722 has excellent wear resistance performance, making it resistant to peeling during handling, mounting, and use, as well as being less prone to damage. This enhances the safety of the large-capacity battery during its operation.

The heat exchange pipe 06 above is a pipe with heat exchange functionality, primarily in contact with the polarity terminal 45 of the large-capacity battery 71 for heat exchange with the polarity terminal 45 of the large-capacity battery 71. The cross-sectional shape of the heat exchange pipe 06 is not strictly specified, as long as it may make contact with the polarity terminal 45 of the battery cell 01 for heat exchange. For example, it may be a square pipe, an elliptical pipe, a round pipe, etc. In this embodiment, the heat exchange pipe 06 is preferably a round pipe, as round pipes are easy to mount and may be made from existing metal pipes, making them relatively low in cost.

In this embodiment, the heat exchange pipe 06 is specifically made from a metal pipe with good thermal conductivity performance, such as an aluminum pipe, a copper pipe, or the like. Preferably, the heat exchange pipe 06 above is made from an aluminum pipe, as it offers both a good heat transfer effect and a relatively low cost. To ensure a heat transfer effect, the thinner the wall thickness of the aluminum pipe, the better. However, if the wall thickness of the aluminum pipe is too thin, the aluminum pipe becomes relatively soft, making it susceptible to bending and damage during mounting. Therefore, in this embodiment, the wall thickness of the aluminum pipe is preferably 0.5 mm to 1.5mm. The aluminum pipe with this wall thickness ensures that the heat exchange pipe has good heat transfer performance while maintaining mounting reliability and helps avoid the risk of bending or damage that may occur with thinner-walled aluminum pipes. In practical use, the diameter of the aluminum pipe is typically 10 mm to 20 mm.

The heat exchange pipe 06 above may be manufactured using the following structures:
First, the heat exchange pipe 06 may be made from a single piece of pipe, typically an aluminum pipe, which is bent into a U-shape. The two straight sections of the U-shaped pipe are then fixed to the first polarity terminal and the second polarity terminal of each battery cell 01 in the large-capacity battery 71.

Second, as shown in Figs. 48 and 49, the heat exchange pipe 06 is a spliced pipe including an L-shaped first pipe segment and a second pipe segment. The first pipe segment is fixed to the first polarity terminal of each battery cell 01 in the large-capacity battery 71, while the second pipe segment is fixed to the second polarity terminal of each battery cell 01 in the large-capacity battery 71. The shorter sections of the first pipe 481 and the second pipe 482 are connected via a joint.

Third, as shown in Fig. 51, to facilitate mounting, the heat exchange pipe 06 is a spliced pipe including a first pipe 481, a second pipe 482, and a connecting pipe 483. The first pipe 481 is fixed to the first polarity terminal of each battery cell 01 in the large-capacity battery 71, and the second pipe 482 is fixed to the second polarity terminal of each battery cell 01 in the large-capacity battery 71. Two ends of the connecting pipe 483 are connected to ports, located on a same side, of the first pipe 481 and the second pipe 482, respectively. Moreover, the connecting pipe 483 in this spliced pipe structure may be made of an insulating pipe, further enhancing the insulation performance of the heat exchange pipe.

An enamel insulating layer 722 is disposed on the side wall of the heat exchange pipe 06 above that comes into contact with the polarity terminal 45 of the large-capacity battery 71. When the aluminum pipe is provided with the enamel insulating layer 722, the enamel insulating layer 722 is fused to the outer pipe wall of the aluminum pipe, as an integral structure with the aluminum pipe. To form the enamel insulating layer 722 on the heat exchange pipe 06, inorganic glass-like materials are fused to the outer wall of the metal pipe by high-temperature melting techniques, ensuring a strong bond to the outer wall of the metal pipe. Once the enamel insulating layer 722 is formed on the outer wall of the metal pipe, the heat exchange pipe 06 exhibits excellent performance, such as high hardness, high temperature resistance, wear resistance, insulation performance, and the like.

The thicker the enamel insulating layer 722 above, the better the insulation, but this will reduce heat transfer performance. In this embodiment, the thickness of the enamel insulating layer 722 above is preferably 100 µm to 300 µm. The enamel insulating layer 722 with this thickness ensures both good insulation performance and optimal heat transfer performance of the side wall of the aluminum pipe. Moreover, the enamel insulating layer 722 is highly resistant to peeling and offers enhanced wear resistance performance.

When disposing the enamel insulating layer 722 on the heat exchange pipe 06 above, the enamel insulating layer 722 may be disposed only on part of the side walls of the heat exchange pipe 06 in contact with the polarity terminals 45 of the battery cells 01, as shown in Fig. 49. The enamel insulating layer 722 may be disposed on the entire heat exchange pipe 06, as shown in Fig. 48. When the enamel insulating layer 722 is disposed on part of the side walls of the heat exchange pipe 06, the manufacturing process for forming the enamel insulating layer 722 becomes relatively more complex. In addition, the heat exchange pipe 06 formed by this method needs to be carefully positioned when mounted with the polarity terminal 45 of the battery cell 01 to avoid the heat exchange pipe 06 without the enamel insulating layer 722 from connecting to the polarity terminal 45 of the battery cell 01, which could pose a short-circuit risk. Therefore, disposing the enamel insulating layer 722 to the entire outer side wall of the heat exchange pipe 06 is generally a more preferable approach. This configuration not only simplifies the forming of the enamel insulating layer 722 but also ensures that when the heat exchange pipe 06 is mounted with the polarity terminals 45 of the battery cells 01, there is no need to consider mounting errors between the enamel insulating layer 722 and the polarity terminals 45 of the battery cells 01. As a result, the on-site mounting of the heat exchange pipe 06 is more convenient.

### Embodiment 23

As shown in Fig. 50, in this embodiment, to ensure the reliability of insulation, an insulating sleeve 313 is disposed on the outer side of the heat exchange pipe 06 with the enamel insulating layer 722 in Embodiment 22, so that a double insulation is formed on the outer wall of the heat exchange pipe 06. The configuration of this dual-insulation structure ensures that even if the enamel insulating layer 722 is damaged during heat exchange between the heat exchange pipe 06 and the large-capacity battery 71, reliable insulation performance between the heat exchange pipe 06 and the large-capacity battery 71 is still maintained, thereby enhancing the safety of the large-capacity battery 71 during use.

The insulating sleeve 313 above is specifically made from an insulation material with good heat transfer performance, so it provides excellent insulation performance while maintaining good heat transfer performance. In this embodiment, the insulating sleeve 313 is made from a thermally conductive plastic sleeve or thermally conductive rubber sleeve, with both excellent insulation performance and thermal conductivity performance, for example, a thermally conductive silicone sleeve. The thickness of the insulating sleeve 313 is ideally thinner for better heat transfer performance. However, while ensuring its heat transfer performance, the insulation performance also needs to be guaranteed. The insulation performance is more reliable with a thicker insulating sleeve 313. After balancing thermal conductivity performance and insulation performance, the thickness of the insulating sleeve 313 in this embodiment is preferably 0.5 m to 1.5 m, with the most preferred thickness being 1 m. This thickness ensures excellent insulation performance while maintaining good heat transfer performance. The cross-sectional shape of the insulating sleeve 313 may be circular, U-shaped, or C-shaped, as long as it may fit over the heat exchange pipe 06 with the enamel insulating layer 722, providing insulation at the point where the heat exchange pipe 06 contacts the polarity terminal 45 of the battery cell 01. Moreover, it is preferable for the cross-sectional shape of the insulating sleeve 313 above to match the cross-sectional shape of the heat exchange pipe 06. This ensures that the insulating sleeve 313 fits snugly over the heat exchange pipe 06, thereby enhancing the thermal conductivity performance of the heat exchange pipe 06.

When the insulating sleeve 313 above is mounted and fitted onto the heat exchange pipe 06, the dimension of the insulating sleeve 313 is configured slightly smaller than the dimension of the heat exchange pipe 06, so that the insulating sleeve 313 tightly fits onto the heat exchange pipe 06 with the enamel insulating layer. Alternatively, the insulating sleeve 313 may also be sleeved over the heat exchange pipe 06 with the enamel insulating layer by heat shrinking. In this embodiment, the preferred method is to sleeve the insulating sleeve 313 onto the heat exchange pipe 06 with the enamel insulating layer by heat shrinking. For example, a PTFE sleeve or silicone sleeve may be heat-shrunk onto an aluminum pipe with the enamel insulating layer 722 to form a PTFE heat-shrink aluminum pipe or a silicone heat-shrink aluminum pipe. This mounting method ensures that there is almost no heat transfer gap between the insulating sleeve 313 and the heat exchange pipe 06, thereby enhancing the heat transfer effect of the insulating sleeve 313.

### Embodiment 24

As shown in Figs. 51 to 53, this embodiment provides a large-capacity battery 71, which includes a shell 03 and a plurality of battery cells 01 arranged in the same direction within the shell 03. In this embodiment, the battery cells 01 are prismatic batteries, and the number of batteries may be adjusted according to actual needs. The inner cavity of each battery cell 01 includes an electrolyte region and a gas region. After the plurality of battery cells 01 are arranged in the same direction within the shell 03, electrode terminal clearance holes 214 corresponding to the polarity terminals 45 of each battery cell 01 are disposed in the top plate of the shell 03. The polarity terminals 45 of each battery cell 01 extend through the corresponding electrode terminal clearance holes 214 and serve as the polarity terminals 45 of the large-capacity battery 71 (The polarity terminals 45 of all battery cells 01 on one side serve as the first polarity terminals of the large-capacity battery 71, while the polarity terminals 45 of all battery cells 01 on the other side serve as the second polarity terminals of the large-capacity battery 71). Regions of the top plate of the shell 03 corresponding to the electrode terminal clearance holes 214 are fixedly sealed to a housing of the battery cell 01. The shell 03 above is provided with a shared chamber, and the inner cavity of the shared chamber is in communication with the inner cavities of all the battery cells 01.

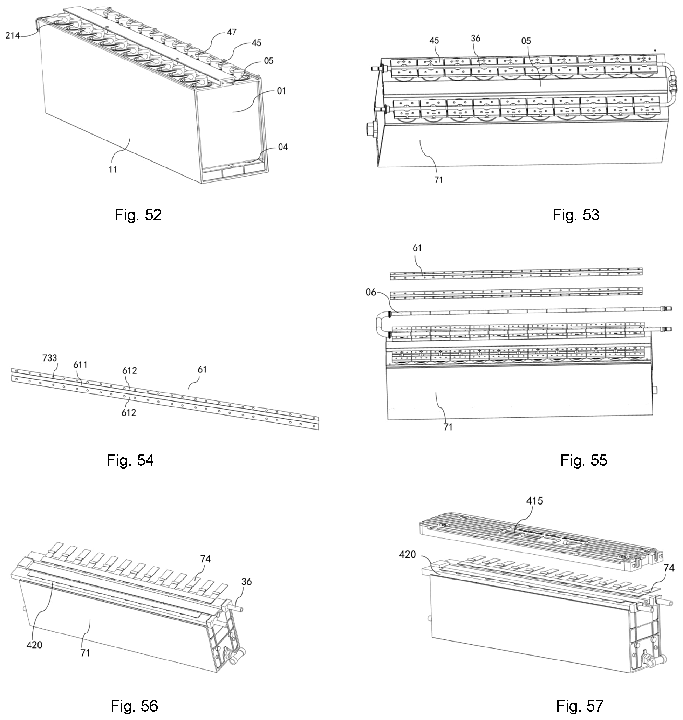

It is to be noted that, as shown in Figs. 51 and 52, the polarity terminals 45 of the battery cell 01 described here may be the electrode terminals of the battery cells 01. To ensure smooth extension of the electrode terminals of the battery cells 01, as the polarity terminals 45, through the electrode terminal clearance hole 214, an additional electrode terminal adapter member may be attached to the electrode terminal of the battery cell 01. This combined structure of the electrode terminal of the battery cell 01 and the electrode terminal adapter member serves as the polarity terminal 45 of the battery cell 01, as shown in Fig. 53.

The shared chamber above may be an electrolyte shared chamber 04, wherein the inner cavity of the electrolyte shared chamber 04 is in communication with the electrolyte regions of the inner cavities of all battery cells 01. The electrolyte shared chamber 04 ensures that the battery cells 01 are in a uniform electrolyte environment, maintaining the uniformity of the electrolyte in each battery cell 01. This enhances the performance and charge/discharge cycle life of the large-capacity battery 71. In this embodiment, the electrolyte shared chamber 04 is a liquid channel disposed between the bottom plate of the shell 03 and the bottom of each battery cell 01.

The shared chamber above may also be a gas chamber 05, wherein the inner cavity of the gas chamber 05 is in communication with the gas regions of the inner cavities of all battery cells 01. The gas chamber 05 helps maintain gas balance for each battery cell 01, thereby enhancing the performance and charge/discharge cycle life of the large-capacity battery 71. In this embodiment, the gas chamber 05 is a gas channel disposed on the top plate of the shell 03. **In** this case, a protrusion extending along the arrangement direction of the battery cells 01 is disposed on the top plate of the shell 03, with a gas channel formed at the protrusion part.

The shared chamber above may also be a gas-liquid shared chamber, wherein the inner cavity of the gas-liquid shared chamber is in communication with the electrolyte regions and the gas regions of all battery cells 01. A single gas-liquid shared chamber allows all battery cells 01 to be in a uniform electrolyte and gas environment, thereby enhancing the performance and charge/discharge cycle life of the large-capacity battery 71.

A heat exchange pipe clamping portion 47 is disposed on each polarity terminal 45, and the heat exchange pipe 06 from Embodiments 22 or 23 is fixed inside the heat exchange pipe clamping portion 47. This ensures that the heat exchange pipe 06 is directly connected to the polarity terminal 45 of the large-capacity battery 71, allowing the concentrated heat from the polarity terminal 45 to be efficiently dissipated, thus enhancing the heat dissipation performance of the top of the large-capacity battery 71. In addition, when the temperature of the large-capacity battery 71 falls below the set threshold, a heat transfer medium with a higher temperature is introduced into the heat exchange pipe 06 to heat the large-capacity battery 71. By controlling the temperature of the thermally conductive medium, it ensures that the large-capacity battery 71 always operates within the normal working temperature.

As shown in Fig. 52, during the mounting of the heat exchange pipe 06 above, through grooves or through holes are formed at the portions where the polarity terminal 45 of the battery cell 01 extends through the electrode terminal clearance hole 214, serving as the heat exchange pipe clamping portion 47. Compared to the through hole, the through groove is more convenient for on-site mounting and has relatively lower mounting requirements. The through groove above is provided, and the cross-section of the through groove is C-shaped. A C-shaped through groove, with the opening width smaller than the widest part of the through groove, allows the heat exchange pipe 06 to fit tightly within the through groove. The curvature formed at the two ends of the C-shaped through groove naturally generates tension, which is conducive to securely clamping the heat exchange pipe 06 into the through groove.

In this embodiment, the polarity terminal 45 of the battery cell 01 is cylindrical. In this case, the through groove may be disposed in the side wall or end face of the cylinder. When the through groove or through hole is formed on the side wall, compared to forming through grooves in the end face, the contact area between the heat exchange pipe 06 and the inner walls of the through groove or the through hole is larger, resulting in improved heat transfer efficiency. In addition, when the through groove or the through hole is located in the side wall, the entire area of the end face may serve as the electrical connection region. In addition, two through grooves or through holes may also be formed in the side wall of the electrode terminal to increase the number of heat exchange pipes 06, further enhancing heat transfer efficiency. By fixing the heat exchange pipe 06 above in the through groove or through hole of the polarity terminal 45 of the large-capacity battery 71, the heat on the top of the large-capacity battery 71 is effectively managed. This ensures that the large-capacity battery 71 operates safely and reliably, avoiding performance and safety problems caused by excessively high or low temperatures of the large-capacity battery 71.

### Embodiment 25

As shown in Fig. 54, on the basis of the structure of the large-capacity battery 71 in Embodiments 23 or 24, this embodiment adds a pressing plate 61 to the polarity terminal 45 of the large-capacity battery 71. The pressing plate 61 is connected to the polarity terminals 45 of each battery cell 01, ensuring a reliable parallel connection of a plurality of battery cells 01. Moreover, the pressing plate 61, cooperating with the polarity terminal 45, securely mounts the heat exchange pipe 06 into the through groove of the polarity terminal 45, enhancing the heat exchange effect between the heat exchange pipe 06 and the polarity terminal 45. Moreover, the pressing plate 61 is positioned above the heat exchange pipe 06, providing protection for the heat exchange pipe 06 and the polarity terminal 45, thereby enhancing the safety of the battery cell 01 during use.

As shown in Fig. 55, the pressing plate 61 includes a pressing portion 611 and a fixing portion 612. The bottom of the pressing portion 611 has an arc surface, which is designed to cooperate with the through groove in the polarity terminal 45, pressing the heat exchange pipe 06 tightly into the through groove. The fixing portion 612 is disposed on two sides of the pressing portion 611, fixing the pressing plate 61 to the top of the polarity terminal 45.

The length of the pressing plate 61 above may be determined according to the number of battery cells 01, and its length is equivalent to the total length of the polarity terminals 45 of all the battery cells 01 in the arrangement direction of the large-capacity battery 71. After the pressing plate 61 is connected to the polarity terminal 45 of each battery cell 01, it serves two main functions: First, it is connected to the polarity terminals 45 of a plurality of battery cells 01, ensuring a reliable parallel connection between the battery cells 01. Since the pressing plate 61 only needs to be connected to the polarity terminals 45 of the battery cells 01 in the same large-capacity battery 71, the parallel connection between battery cells 01 is easily achieved. During on-site mounting, adjacent large-capacity batteries 71 or battery modules are connected by separately disposed electrical connectors. Therefore, the pressing plate 61 does not need to account for mounting errors between adjacent large-capacity batteries 71, making mounting requirements relatively low. Second, the pressing plate 61 tightly presses the heat exchange pipe 06 into the through groove of the polarity terminal 45, ensuring that the heat exchange pipe 06 makes close contact with the through groove of the polarity terminal 45, with virtually no thermal conduction gap between the two, thereby enhancing the heat exchange effect between the heat exchange pipe 06 and the polarity terminal 45.

In this embodiment, the bottom of the pressing portion 611 above has an arc surface, which, after cooperating with the through groove, forms a cross-sectional shape similar to the cross-sectional shape of the heat exchange pipe 06, pressing the heat exchange pipe 06 closely against the through groove of the polarity terminal 45. The heat exchange pipe 06 above is typically a metal pipe, so the cavity formed between the pressing portion 611 and the through groove is generally circular in shape. Moreover, since the heat exchange pipe 06 cooperates with the polarity terminal 45 for heat exchange, the side wall of the heat exchange pipe 06 needs to be mostly embedded within the through groove. In this case, the central angle corresponding to the arc surface of the pressing portion 611 described above is preferably 90° to 180°. This configuration ensures that the majority of the side wall of the heat exchange pipe 06 is embedded into the through groove of the polarity terminal 45, increasing the contact area between the heat exchange pipe 06 and the polarity terminal 45, thereby further enhancing the heat exchange effect between the heat exchange pipe 06 and the polarity terminal 45. If the central angle corresponding to the arc surface of the pressing portion 611 is greater than 180°, the contact area between the heat exchange pipe 06 and the through groove of the polarity terminal 45 is reduced, leading to a poor heat transfer effect. Conversely, if the central angle corresponding to the arc surface of the pressing portion 611 is less than 90°, the contact area between the pressing plate 61 and the heat exchange pipe 06 becomes smaller, preventing the pressing plate 61 from reliably applying force to the heat exchange pipe 06, resulting in insufficient compression force.

In addition, a distance between a vertex of the arc surface of the pressing portion 611 and the polarity terminal 45 is less than or equal to a maximum dimension by which the heat exchange pipe 06 protrudes from the polarity terminal 45. Since the heat exchange pipe 06 above is typically a round pipe, and the arc surface of the pressing portion 611 is a circular arc surface, the radius of the arc surface of the pressing portion 611 is preferably smaller than or equal to the radius of the heat exchange pipe 06. Once the pressing plate 61 is connected to the polarity terminal 45, the pressing portion 611 may exert a downward force on the heat exchange pipe 06, ensuring that there is virtually no thermal conduction gap between the heat exchange pipe 06 and the polarity terminal 45, resulting in a tight fit of the heat exchange pipe 06 within the through groove. The heat transfer effect between the heat exchange pipe 06 and the polarity terminal 45 is enhanced, thereby enhancing the heat transfer efficiency.

The pressing plate 61 in this embodiment is generally made of a conductive metal material, such as silver, copper, aluminum, or the like. In this embodiment, the pressing plate 61 is made of a copper plate. The copper plate not only has excellent electrical conductivity but also possesses good flexibility, allowing it to tightly press the heat exchange pipe 06 into the through groove of the polarity terminal.

In this embodiment, the pressing portion 611 is an arc plate with a uniform wall thickness, and the fixing portion 612 is a flat plate. The arc plate and the flat plates on two sides are of an integral structure, making the structure easy to manufacture and process and convenient for mounting. In production, the pressing plate 61 may be formed by stamping a thin plate or by extrusion forming in one step. In addition, the thickness of the pressing plate 61 is typically between 0.5 mm and 1 mm, which ensures sufficient mounting strength while also providing reliable mounting of the heat exchange pipe 06.

In this embodiment, the fixing portions 612 are provided with connection holes 733 for connection to the polarity terminals 45, allowing the pressing plate 61 to be connected to the polarity terminal 45 via screws. The screw connection method is easier compared to other methods, such as welding, riveting, or adhesive bonding, and provides a simpler structure. Preferably, the screw hole in this embodiment may be configured to be elongated. The elongated hole may compensate for dimensional errors during the parallel connection of a plurality of battery cells 01, ensuring the reliability of the connection.

In the large-capacity battery 71 above, after the battery cells 01 are mounted into the shell 03, the polarity terminals 45 of each battery cell 01 extend through the electrode terminal clearance holes 214. Then, the heat exchange pipes 06 are mounted on the polarity terminals 45 of each battery cell 01, with the heat exchange pipes 06 being embedded into the through grooves of the polarity terminals 45 of each battery cell 01. Finally, the pressing plate 61 is connected to the polarity terminals 45 of each battery cell 01, with the pressing plate 61 being fixed to the polarity terminals 45 via screws, thus achieving the parallel connection between the battery cells 01. After the pressing plate 61 above is mounted, it also presses the heat exchange pipe 06 tightly into the through groove of the polarity terminal 45. The heat exchange pipe 06 is configured to transfer the heat generated by each battery cell 01, thereby controlling the temperature of the large-capacity battery 71. In addition, an insulating pad may be disposed between the pressing plate 61 and the heat exchange pipe 06 described above to further ensure insulation between the metal pipe and the pressing plate 61.

### Embodiment 26

During long-term use of the large-capacity battery 71, due to the temperature difference inside and outside the heat exchange pipe 06, condensation may form on the surface. When the condensation accumulates to a certain amount, it may seep into the gap between the polarity terminal 45 of the battery cell 01 and the electrode terminal clearance hole 214, causing electrical conductivity between the polarity terminal 45 of the battery cell 01 and the shell 03. This may potentially lead to a short circuit in the same battery cell 01.

As shown in Figs. 56 and 57, in this embodiment, the problem above is addressed by optimizing the top structure of the large-capacity battery 71. An insulating sealing adhesive layer 420 is laid on the top plate of the shell 03. The end face of the polarity terminal 45 of each battery cell 01 extends beyond the insulating sealing adhesive layer 420 for connection to the pressing plate 61 or the electrical connector 74. The inlet end and the outlet end of the heat exchange pipe 06 extend through the insulating sealing adhesive layer 420 to be connected to an inlet manifold and a return manifold. The pressing plate 61 is used to connect the battery cells 01 in parallel, while the electrical connector 74 is used for connecting two large-capacity batteries 71 in series, or it may serve as a connector for connecting the large-capacity battery 71 to an external load.

As shown in Figs. 56 and 57, in this embodiment, an insulating sealing adhesive layer 420 is laid on the top plate of the shell 03. Part of the region of the polarity terminal 45 of each battery cell 01 is covered by the insulating sealing adhesive layer 420. The end face of the polarity terminal 45 of each battery cell 01 extends out of the insulating sealing adhesive layer 420 and is connected to the pressing plate 61 and/or the electrical connector 74. The main body part of the heat exchange pipe 06 is covered by the insulating sealing adhesive layer 420, while the inlet end and the outlet end of the heat exchange pipe 06 extend through the insulating sealing adhesive layer 420 to be connected to an inlet manifold and a return manifold.

In other embodiments, the thickness of the insulating sealing adhesive layer 420 may be smaller, below the main body part of the heat exchange pipe 06, or may cover only part of the main body part of the heat exchange pipe 06. The key point is to ensure that condensation may not enter the gap between the polarity terminal 45 of the battery cell 01 and the electrode terminal clearance hole 214.

The insulating sealing adhesive used in this embodiment is typically a battery potting adhesive commonly used in batteries. For example, organic silicone thermally conductive potting adhesive may be used, which has good sealing, insulation, vibration resistance, heat dissipation, and waterproof functions. To prevent the insulating sealing adhesive from overflowing, this embodiment also incorporates a glue injection mold around the edges of the top plate of the shell 03 during the glue injection process, ensuring that the insulating adhesive liquid may be smoothly injected. After the injection is completed, removal may be carried out.

As shown in Fig. 57, on the basis of the structure above, in this embodiment, an insulating protective cover 415 is disposed on the top of the large-capacity battery 71, providing insulation protection for the polarity terminal 45. This avoids potential safety hazards caused by exposure of the polarity terminals 45 during operation of the large-capacity battery 71, and further avoids foreign objects from the exterior environment from falling into the polarity terminal 45 positions and causing short-circuiting of the large-capacity battery 71, thereby enhancing the safety of the large-capacity battery 71.

It is to be noted that if the insulating protective cover 415 completely encloses the polarity terminal 45, it would make electrical connections of such a large-capacity battery 71 more difficult. Therefore, in this embodiment, a narrow slit is formed in the side wall of the insulating protective cover 415. This narrow slit allows the electrical connector 74 to be connected to the polarity terminal 45 of the battery cell 01, thus achieving an electrical connection. It is further to be noted that there is a need to form a channel on the side wall of the insulating protective cover 415 for the inlet end and the outlet end of the heat exchange pipe 06 to extend through.

## Claims

1. A heat exchange pipe assembly, comprising a heat exchange pipe, wherein the heat exchange pipe performs heat exchange with a plurality of battery cells in a large-capacity battery in a single-stage heat exchange manner.

2. The heat exchange pipe assembly as claimed in claim 1, wherein the heat exchange pipe comprises a first pipe member, a second pipe member, and at least one third pipe member; the at least one third pipe member is positioned between the first pipe member and the second pipe member, with two ends connected to pipe walls of the first pipe member and the second pipe member, respectively, and an inner cavity in communication with inner cavities of the first pipe member and the second pipe member; inner cavities of the first pipe member, the second pipe member, and the at least one third pipe member are configured to transmit a heat transfer medium, the heat transfer medium being insulated from the large-capacity battery; each of the at least one third pipe member is configured for fixed connection to the large-capacity battery; and at least one port of the first pipe member serves as a heat transfer medium inlet, and at least one port of the second pipe member serves as a heat transfer medium outlet.

3. The heat exchange pipe assembly as claimed in claim 2, wherein each of the at least one third pipe member is configured for fixed connection to all electrode terminals located on a same side of the large-capacity battery.

4. The heat exchange pipe assembly as claimed in claim 3, wherein the first pipe member, the second pipe member, and the at least one third pipe member are all aluminum pipes, connection parts between the at least one third pipe member and the first pipe member, and between the at least one third pipe member and the second pipe member, are insulated, and the heat transfer medium is an electrically insulating heat transfer medium.

5. The heat exchange pipe assembly as claimed in claim 3, wherein the first pipe member, the second pipe member, and the at least one third pipe member are all aluminum pipes, an insulating film is applied to an inner wall of the at least one third pipe member or an outer wall of the at least one third pipe member, and the heat transfer medium is an electrically insulating heat transfer medium or water.

6. The heat exchange pipe assembly as claimed in claim 3, wherein the first pipe member and the second pipe member are plastic pipes, each of the at least one third pipe member is an aluminum pipe, and the heat transfer medium is an electrically insulating heat transfer medium.

7. The heat exchange pipe assembly as claimed in claim 1, wherein the heat exchange pipe comprises a first metal pipe, a second metal pipe, an insulating sealing connector, and insulating sealing joints; the first metal pipe is configured to be clamped in a through groove of a positive electrode terminal of each of the plurality of battery cells in the large-capacity battery, and the second metal pipe is configured to be clamped in a through groove of a negative electrode terminal of each of the plurality of battery cells in the large-capacity battery; the insulating sealing connector connects an inlet port of the first metal pipe and an outlet port of the second metal pipe; and two insulating sealing joints are provided, with one being disposed at an outlet port of the first metal pipe and the other at an inlet port of the second metal pipe, each configured to be in communication with an external heat transfer medium circulation line.

8. The heat exchange pipe assembly as claimed in claim 7, wherein the heat exchange pipe further comprises two connecting pipelines, wherein one end of one of the two connecting pipeline is connected to the outlet port of the first metal pipe via a right-angle sealing connector, and the other end of the one of the two connecting pipelines is provided with one of the two insulating sealing joints; and one end of the other one of the two connecting pipelines is connected to the inlet port of the second metal pipe member via a right-angle sealing connector, and the other end of the other one of the two connecting pipelines is provided with the other one of the two insulating sealing joints.

9. The heat exchange pipe assembly as claimed in claim 8, wherein the insulating sealing connector is an insulating sealing joint part, and the right-angle sealing connector is a right-angle sealing joint.

10. The heat exchange pipe assembly as claimed in claim 9, wherein the first metal pipe and the second metal pipe are aluminum pipes, and the two connecting pipelines are flexible pipelines.

11. The heat exchange pipe assembly as claimed in claim 1, wherein the heat exchange pipe comprises a first pipe, a second pipe, and a connecting pipe; the first pipe is configured to be fixed in a heat exchange pipe clamping portion of a positive-polarity terminal of each of the plurality of battery cells; the second pipe is configured to be fixed in a heat exchange pipe clamping portion of a negative-polarity terminal of each of the plurality of battery cells; and two ends of the connecting pipe are connected to ports, located on a same side, of the first pipe and the second pipe, respectively.

12. The heat exchange pipe assembly as claimed in claim 11, wherein the first pipe and the second pipe are aluminum pipes, and a pipe wall of each of the aluminum pipes is provided with an oxide layer.

13. The heat exchange pipe assembly as claimed in claim 11, wherein the first pipe and the second pipe are aluminum pipes, a pipe wall of each of the aluminum pipes is provided with an oxide layer, and an insulating sleeve pipe is sleeved over each of the aluminum pipes having the oxide layer.

14. The heat exchange pipe assembly as claimed in any one of claims 11 to 13, wherein the connecting pipe is a flexible insulating pipe, and the flexible insulating pipe is connected to the first pipe and the second pipe via clamps.

15. The heat exchange pipe assembly as claimed in claim 1, wherein the heat exchange pipe is a metal pipe and is provided with an insulating layer and an insulating sleeve; and the insulating layer is formed on a side wall of the heat exchange pipe, and the insulating sleeve is disposed over the heat exchange pipe having the insulating layer.

16. The heat exchange pipe assembly as claimed in claim 15, wherein an insulating layer and an insulating sleeve are disposed entirely on the side wall of the heat exchange pipe.

17. The heat exchange pipe assembly as claimed in claim 15, wherein the insulating sleeve is a thermally conductive plastic sleeve or a thermally conductive rubber sleeve, with a thickness of 0.5 mm to 1.5 mm.

18. The heat exchange pipe assembly as claimed in claim 17, wherein the insulating sleeve is a thermally conductive silicone sleeve with a thickness of 1 mm.

19. The heat exchange pipe assembly as claimed in claim 17, wherein the insulating sleeve is disposed over the heat exchange pipe having the insulating layer by heat shrinking.

20. The heat exchange pipe assembly as claimed in any one of claims 15 to 19, wherein the heat exchange pipe is an aluminum pipe with a wall thickness of 0.5 mm to 1 mm.

21. The heat exchange pipe assembly as claimed in claim 20, wherein the insulating layer is a hard oxide layer with a thickness of 20 µm to 50 µm.

22. The heat exchange pipe assembly as claimed in claim 1, wherein the heat exchange pipe assembly further comprises an insulating heat-conducting device, wherein the insulating heat-conducting device comprises a heat-conducting rod and N heat-conducting columns disposed perpendicular to the heat-conducting rod, wherein N≥1; the heat-conducting rod is an insulating member configured to be mounted in a first through groove of a polarity terminal, and a mounting portion for mounting the heat exchange pipe is disposed on the heat-conducting rod along an axial direction thereof; and the N heat-conducting columns are configured to be inserted into blind holes of the polarity terminal.

23. The heat exchange pipe assembly as claimed in claim 22, wherein the mounting portion is a second through groove or a through hole.

24. The heat exchange pipe assembly as claimed in claim 23, wherein cross sections of the second through groove and the first through groove are C-shaped.

25. The heat exchange pipe assembly as claimed in claim 22, wherein N = 1, and a length of the heat-conducting rod is greater than or equal to a length of the first through groove in the polarity terminal.

26. The heat exchange pipe assembly as claimed in any one of claims 22 to 25, wherein the heat-conducting rod and the N heat-conducting columns are of an integral structure.

27. The heat exchange pipe assembly as claimed in claim 26, wherein the heat-conducting rod and the N heat-conducting columns are made of a thermally conductive ceramic material.

28. The heat exchange pipe assembly as claimed in claim 26, wherein the heat-conducting rod and the N heat-conducting columns are made of a thermally conductive metal, and a surface of each of the heat-conducting rod and the N heat-conducting columns is subjected to oxidation treatment to form an insulating layer.

29. The heat exchange pipe assembly as claimed in claim 1, wherein the heat exchange pipe assembly further comprises a pressing plate, wherein the pressing plate comprises a pressing portion and fixing portions; the pressing portion has an arc surface configured to cooperate with a through groove of a polarity terminal, to press the heat exchange pipe into the through groove; and the fixing portions are disposed on two sides of the pressing portion, and each of the fixing portions is connected to the polarity terminal of each of the plurality of battery cells, for implementing a parallel connection of the plurality of battery cells and for fixing the pressing portion to the polarity terminals.

30. The heat exchange pipe assembly as claimed in claim 29, wherein a central angle corresponding to the arc surface of the pressing portion is between 90° and 180°.

31. The heat exchange pipe assembly as claimed in claim 30, wherein a distance between a vertex of the arc surface of the pressing portion and the polarity terminal is less than or equal to a maximum dimension by which the heat exchange pipe protrudes from the polarity terminal.

32. The heat exchange pipe assembly as claimed in any one of claims 29 to 31, wherein the pressing portion is an arc plate with a uniform wall thickness, the fixing portions are flat plates, and the arc plate and the flat plates on two sides thereof are of an integral structure.

33. The heat exchange pipe assembly as claimed in claim 32, wherein each of the fixing portions is provided with a through hole for screw connection to the polarity terminal.

34. The heat exchange pipe assembly as claimed in claim 33, wherein the pressing plate is copper foil with a thickness of 0.5 mm to 1 mm.

35. The heat exchange pipe assembly as claimed in claim 1, wherein the heat exchange pipe is a metal pipe, and an outer wall of the heat exchange pipe is provided with an enamel insulating layer.

36. The heat exchange pipe assembly as claimed in claim 35, wherein a thickness of the enamel insulating layer is 100 µm to 300 µm.

37. The heat exchange pipe assembly as claimed in claim 35, wherein the heat exchange pipe comprises a first pipe, a second pipe, and a connecting pipe; the first pipe is configured to perform heat exchange with a first polarity terminal of the large-capacity battery; the second pipe is configured to perform heat exchange with a second polarity terminal of the large-capacity battery; two ends of the connecting pipe are connected to ports, located on a same side, of the first pipe and the second pipe, respectively; and outer side walls of the first pipe and the second pipe are provided with enamel insulating layers.

38. The heat exchange pipe assembly as claimed in claim 35, wherein the heat exchange pipe is an aluminum pipe with a wall thickness of 0.5 mm to 1.5 mm.

39. The heat exchange pipe assembly as claimed in any one of claims 35 to 38, wherein the heat exchange pipe further comprises an insulating sleeve, wherein the insulating sleeve is disposed over the heat exchange pipe having the enamel insulating layer.

40. A large-capacity battery, comprising a plurality of battery cells sequentially arranged in a same direction, and further comprising the heat exchange pipe assembly as claimed in claim 1.

41. The large-capacity battery as claimed in claim 40, wherein the heat exchange pipe assembly is the heat exchange pipe assembly as claimed in any one of claims 2 to 6, and the at least one third pipe member of a heat exchange pipe is fixedly connected to all electrode terminals of the plurality of battery cells located on a same side.

42. The large-capacity battery as claimed in claim 40, wherein the large-capacity battery further comprises a shell and a plurality of electrode terminal adapter members, wherein the plurality of battery cells are sequentially arranged in a same direction in an inner cavity of the shell; electrode terminal clearance holes corresponding to electrode terminals of the plurality of battery cells are formed in a top plate of the shell, and regions of the shell corresponding to the electrode terminal clearance holes are fixedly sealed to housings of the plurality of battery cells; each of the plurality of electrode terminal adapter members is electrically connected to each of the electrode terminals of the plurality of battery cells via each of the electrode terminal clearance holes, and each of the plurality of electrode terminal adapter members is provided with a slot; and the heat exchange pipe assembly is the heat exchange pipe assembly as claimed in any one of claims 2 to 6, and the at least one third pipe member of a heat exchange pipe is fixed in the slot.

43. The large-capacity battery as claimed in claim 40, wherein the large-capacity battery further comprises a shell, wherein the plurality of battery cells are sequentially arranged in a same direction in an inner cavity of the shell; electrode terminal clearance holes allowing electrode terminals of the plurality of battery cells to extend therethrough are formed in a top plate of the shell; each of the electrode terminals of the plurality of battery cells extend through each of the electrode terminal clearance holes, and regions of the shell corresponding to the electrode terminal clearance holes are fixedly sealed to housings of the plurality of battery cells; each of the electrode terminal is provided with a slot; and the heat exchange pipe assembly is the heat exchange pipe assembly as claimed in any one of claims 2 to 6, and the at least one third pipe member of a heat exchange pipe is fixed in the slot.

44. The large-capacity battery as claimed in claim 40, wherein the plurality of battery cells are connected in parallel; the heat exchange pipe assembly is the heat exchange pipe assembly as claimed in any one of claims 7 to 10; and a heat transfer medium flowing in a heat exchange pipe is a fluorinated liquid.

45. The large-capacity battery as claimed in claim 40, wherein the plurality of battery cells are connected in parallel, and the large-capacity battery further comprises a shared piping assembly; the shared piping assembly is connected to lower cover plates of the plurality of battery cells and in communication with electrolyte regions of inner cavities of the plurality of battery cells; the heat exchange pipe assembly is the heat exchange pipe assembly as claimed in any one of claims 7 to 10; and a heat transfer medium flowing in a heat exchange pipe is a fluorinated liquid.

46. The large-capacity battery as claimed in claim 40, wherein the large-capacity battery further comprises a shell, wherein the plurality of battery cells are arranged in parallel within an inner cavity of the shell, inner cavities of the plurality of battery cells comprising electrolyte regions and gas regions; the shell comprises a cylindrical body with open ends and end plates disposed at the open ends of the cylindrical body; a first channel is disposed at a bottom of the cylindrical body, the first channel being in communication with the electrolyte regions of the inner cavities of the plurality of battery cells, so that all of the plurality of battery cells share a common electrolyte system; electrode terminal clearance holes allowing electrode terminals of the plurality of battery cells to extend therethrough are formed in a top of the cylindrical body; each of the electrode terminals of the plurality of battery cells extends through each of the electrode terminal clearance holes, and cylindrical body regions corresponding to the electrode terminal clearance holes are fixedly sealed to tops of the plurality of battery cells; the heat exchange pipe assembly is the heat exchange pipe assembly as claimed in any one of claims 7 to 10; and a heat transfer medium flowing in a heat exchange pipe is a fluorinated liquid.

47. The large-capacity battery as claimed in claim 46, wherein the large-capacity battery further comprises a second channel disposed on the top of the cylindrical body, the second channel being in communication with the gas regions of the inner cavities of the plurality of battery cells.

48. The large-capacity battery as claimed in claim 46, wherein the large-capacity battery further comprises a second channel disposed on the top of the cylindrical body, the second channel covering venting portions on the top of the plurality of battery cells.

49. The large-capacity battery as claimed in claim 40, wherein the plurality of battery cells are connected in parallel, and the large-capacity battery further comprises a first shared piping assembly; the first shared piping assembly is connected to lower cover plates of the plurality of battery cells and in communication with electrolyte regions of inner cavities of the plurality of battery cells; the heat exchange pipe assembly is the heat exchange pipe assembly as claimed in any one of claims 11 to 14; and a heat transfer medium flowing in a heat exchange pipe is water or a fluorinated liquid.

50. The large-capacity battery as claimed in claim 49, wherein the large-capacity battery further comprises a second shared piping assembly, the second shared piping assembly being connected to upper cover plates of the plurality of battery cells and in communication with gas regions of the inner cavities of the plurality of battery cells.

51. The large-capacity battery as claimed in claim 40, wherein the large-capacity battery further comprises a shell, wherein the plurality of battery cells are connected in parallel and arranged in a same direction in the shell; a shared chamber is disposed in the shell, an inner cavity of the shared chamber being in communication with inner cavities of all the plurality of battery cells; electrode terminal clearance holes corresponding to polarity terminals of the plurality of battery cells are formed in a top plate of the shell; each of the polarity terminals of the plurality of battery cells extends through each of the electrode terminal clearance holes, and top plate regions of the shell corresponding to the electrode terminal clearance holes are fixedly sealed to housings of the plurality of battery cell; and a portion where each of the polarity terminals of the plurality of battery cells extends through each of the electrode terminal clearance holes are provided with a heat exchange pipe clamping portion; and
the heat exchange pipe assembly is the heat exchange pipe assembly as claimed in any one of claims 11 to 14; and heat exchange pipes are fixed to the heat exchange pipe clamping portions on the polarity terminals of the plurality of battery cells and are insulated from the plurality of battery cells.

52. The large-capacity battery as claimed in claim 51, wherein the shared chamber is an electrolyte shared chamber, positioned between a bottom plate of the shell and the plurality of battery cells as a liquid channel, the liquid channel being in communication with electrolyte regions of the inner cavities of the plurality of battery cells.

53. The large-capacity battery as claimed in claim 51 or 52, wherein the shared chamber is a gas chamber, positioned between the top plate of the shell and the plurality of battery cells as a gas channel, the gas channel being in communication with gas regions of the inner cavities of the plurality of battery cells.

54. The large-capacity battery as claimed in claim 51 or 52, wherein the shared chamber is a gas chamber covering venting portions on tops of the plurality of battery cells.

55. The large-capacity battery as claimed in claim 40, wherein the heat exchange pipe assembly is the heat exchange pipe assembly as claimed in any one of claims 15 to 21; and the plurality of battery cells are connected in parallel, and heat exchange pipes are disposed on polarity terminals of the plurality of battery cells.

56. The large-capacity battery as claimed in claim 55, wherein the polarity terminals are provided with through grooves, and the through grooves in the polarity terminals of the plurality of battery cells form a heat transfer groove arranged along a direction of arrangement of the plurality of battery cells, with the heat exchange pipe assembly embedded into the heat transfer groove.

57. The large-capacity battery as claimed in claim 56, wherein at least one of gas regions and electrolyte regions of the plurality of battery cells is in communication with each other.

58. The large-capacity battery as claimed in claim 40, wherein the plurality of battery cells are connected in parallel, and at least one of gas regions and electrolyte regions of the plurality of battery cells is in communication with each other via a hollow component; the heat exchange pipe assembly is the heat exchange pipe assembly as claimed in any one of claims 22 to 28; and a heat-conducting rod of an insulating heat-conducting device is disposed in a first through groove of an electrode terminal, and N heat-conducting columns of an insulating heat-conducting device are disposed in blind holes of the electrode terminal, and heat exchange pipes are disposed in mounting portions of each insulating heat-conducting device.

59. The large-capacity battery as claimed in claim 40, wherein the large-capacity battery further comprises a shell and a plurality of electrode terminal adapter members, wherein the plurality of battery cells are disposed in parallel within the shell, a shared chamber is disposed in the shell to enable at least one of gas regions and electrolyte regions of the plurality of battery cells to be in communication with each other; electrode terminal clearance holes corresponding to electrode terminals of the plurality of battery cells are formed in a top of the shell; each of the electrode terminals of the plurality of battery cells are connected to each of the electrode terminal adapter members via each of the electrode terminal clearance holes; the electrode terminal adapter members are polarity terminals of the plurality of battery cells, each of the polarity terminals is provided with a first through groove and blind holes, the first through groove extends along a width direction of each of the plurality of battery cells, the blind holes extend along a height direction of each of the plurality of battery cells and are in communication with the first through groove, and the heat exchange pipe assembly is the heat exchange pipe assembly as claimed in any one of claims 22 to 28; and a heat-conducting rod of an insulating heat-conducting device is disposed in a first through groove of an electrode terminal, and N heat-conducting columns of an insulating heat-conducting device are disposed in blind holes of the electrode terminal, and heat exchange pipes are disposed in mounting portions of each insulating heat-conducting device.

60. The large-capacity battery as claimed in claim 40, wherein the large-capacity battery further comprises a shell, wherein the plurality of battery cells are disposed in parallel within the shell, a shared chamber is disposed in the shell to enable at least one of gas regions and electrolyte regions of the plurality of battery cells to be in communication with each other, and electrode terminal clearance holes corresponding to polarity terminals of the plurality of battery cells are formed in a top of the shell; the heat exchange pipe assembly is the heat exchange pipe assembly as claimed in any one of claims 29 to 34; and each of the polarity terminals of the plurality of battery cells passes through each of the electrode terminal clearance holes and the polarity terminals are connected in parallel via a pressing plate, while heat exchange pipes are disposed in through grooves of the polarity terminals of the plurality of battery cells, and are pressed into the through grooves of the polarity terminals via the pressing plate.

61. The large-capacity battery as claimed in claim 60, wherein the heat exchange pipe is a metal pipe, an insulating sleeve is sleeved over an outer wall of the metal pipe, or an insulating layer is disposed on the outer wall of the metal pipe, and an insulating pad is provided between the pressing plate and the heat exchange pipe.

62. The large-capacity battery as claimed in claim 40, wherein the large-capacity battery further comprises a hollow component, wherein at least one of gas regions and electrolyte regions of the plurality of battery cells is in communication with each other via the hollow component; the heat exchange pipe assembly is the heat exchange pipe assembly as claimed in any one of claims 29 to 34; and a pressing plate is connected to polarity terminals of the plurality of battery cells, enabling a parallel connection of the plurality of battery cells, and heat exchange pipes are disposed in through grooves of the polarity terminals of the plurality of battery cells, and are pressed into the through grooves of the polarity terminals via the pressing plate.

63. The large-capacity battery as claimed in claim 57, wherein the heat exchange pipe is a metal pipe, an insulating sleeve is sleeved over an outer wall of the metal pipe, or an insulating layer is disposed on the outer wall of the metal pipe, and an insulating pad is provided between the pressing plate and the heat exchange pipe.

64. The large-capacity battery as claimed in claim 40, wherein the large-capacity battery further comprises a shell, wherein the plurality of battery cells are arranged in a same direction in the shell; a shared chamber is disposed in the shell, an inner cavity of the shared chamber being in communication with inner cavities of all of the plurality of battery cells; electrode terminal clearance holes corresponding to polarity terminals of the plurality of battery cells are formed in a top plate of the shell; each of the polarity terminals of the plurality of battery cells extends through each of the electrode terminal clearance holes, and top plate regions of the shell corresponding to the electrode terminal clearance holes are fixedly sealed to housings of the plurality of battery cells; and a portion where each of the polarity terminals of the plurality of battery cells extends through each of the electrode terminal clearance holes is provided with a heat exchange pipe clamping portion, a heat exchange pipe assembly is fixed to the heat exchange pipe clamping portion of each of the polarity terminals of the plurality of battery cells, the heat exchange pipe assembly is the heat exchange pipe assembly as claimed in any one of claims 35 to 39, and the heat exchange pipe clamping portion is a through groove or a through hole formed in each of the polarity terminals of the plurality of battery cells.

65. The large-capacity battery as claimed in claim 64, wherein the large-capacity battery further comprises a pressing plate, wherein the pressing plate comprises a pressing portion and fixing portions; the pressing portion has an arc surface configured to cooperate with a through groove of each of the polarity terminals, to press a heat exchange pipe into the through groove; and the fixing portions are disposed on two sides of the pressing portion and are connected to polarity terminals of the plurality of battery cells, for implementing a parallel connection of the plurality of battery cells and for fixing the pressing portion to the polarity terminals.

66. The large-capacity battery as claimed in claim 65, wherein the fixing portions are provided with connection holes for screw connection to the polarity terminals, and the pressing plate is a copper plate with a thickness of 0.5 mm to 1 mm.

67. The large-capacity battery as claimed in claim 66, wherein an insulating sealing adhesive layer is laid on the top plate of the shell, and an inlet end and an outlet end of the heat exchange pipe extend through the insulating sealing adhesive layer.

68. The large-capacity battery as claimed in claim 67, wherein an insulating protective cover is disposed on the top of the shell, and the polarity terminals of the plurality of battery cells are located within the insulating protective cover.
